# EUROPEAN PATENT APPLICATION

(11) **EP 4 559 841 A1**
(43) Date of publication of application: **28.05.2025**
(21) Application number: 23843093.8
(22) Date of filing: 21.07.2023
(51) Int. Cl.: B65G 1/127, G06Q 10/08

(54) **SHELF ROBOT**

(30) Priority: 22.07.2022 JP 2022117028
(71) Applicant: Nanosion Co., Ltd., Kashiwa-shi, Chiba 277-0061 (JP)
(72) Inventor: IGARASHI Eiki, Kashiwa-shi, Chiba 277-0061 (JP)
(74) Representative: Plasseraud IP
(86) International application number: PCT/JP2023/026873
(87) International publication number: WO 2024/019170

(57) **Abstract**

We provide a shelf robot that has excellent storage capacity and carrying-in/out operability for luggage and is also suitable for inventory management of luggage. The shelf robot (1) comprises a rotary shelf (20) that can rotate around a rotation axis (10), a shelf rotation drive unit (23) that rotates the rotary shelf (20) around the rotation axis (10), and a control unit (50). The rotary shelf (20) has a plurality of storage spaces (21, 22) set along a virtual circle centered on the rotation axis (10). The control unit (50) is equipped with a target storage space identifying means (63) that identifies the target storage space where the storage object that the user is trying to take out is stored, a carry-in/out position determining means (64) that determines the carry-out position of the storage object according to the user's attributes, and a storage space moving means (71) that controls the shelf rotation drive unit (23) to rotate the rotary shelf (20) around the rotation axis (10), thereby moving the target storage space to the carry-out position.

## Description

### [Technical field]

This invention relates to shelf equipment, and more particularly to a shelf robot that uses artificial intelligence technology to assist in the carrying-in/out of luggage (storage object),or is suitable for inventory management.

### [Background]

Conventionally, rotating type shelf equipment has been known as a type of shelf equipment that has a large storage capacity and is easy to carry-in/out (see Patent Document 1 for example). The rotating type of shelf equipment described in Patent Document 1 comprises a box-shaped enclosure (1), an endless chain (5) wound vertically within the enclosure (1), and a bucket (13) supported by the endless chain (5) via a link plate (14) so that it can swing freely. By rotating the endless chain (5), the desired bucket (13) is moved to an entrance/exit (18) formed at the lower front part of the enclosure (1).

### [Prior art document]

### [Patent document]

[Patent document 1] JP2000-053217A

### [Summary of invention]

### [Problems to be solved by invention]

By the way, the types of luggage stored on the shelves and the users who use the shelves are various, and convenience should be improved if the loading and unloading operations could be supported according to, for example, the weight of the luggage being loaded and unloaded on the shelves or the user's physique. However, the shelf equipment described in the above Patent Document 1 does not take such problems into consideration, for example, the position of the loading and unloading opening for luggage is fixed.

In addition, the people in charge of loading and unloading the goods are not identified without paper documentation. Identifying workers without paper means relying on cumbersome handwritten records to comply with the standards (GXP) established by public institutions such as governments to ensure the reliability of who did what and when.

The present invention was made based on the discovery of a new problem in such shelf equipment and aims to provide a shelf robot that has excellent storage capacity and carrying-in/out operability for luggage and is also suitable for carrying-in/out support of luggage using artificial intelligence technology, or inventory management.

### [Means to solve problems]

In order to solve the above-mentioned problem, the invention is a shelf robot comprising a rotation axis, a rotary shelf rotatable around the said rotation axis, a shelf rotation drive unit for rotating the said rotary shelf around the said rotation axis, and a control unit, in which a plurality of storage spaces are set on the said rotary shelf along a virtual circle centered on the said rotation axis, and the said control unit comprises a target storage space identifying means for identifying a storage space (called a target storage space) among the said a plurality of storage spaces in which a storage object that a user wishes to take out is currently stored, a carry-in/out position determining means for determining a carry-out position of the said storage object according to the attributes of the said user, and a storage space moving means for moving the said target storage space to the said carry-out position by controlling the said shelf rotation drive unit to rotate the said rotary shelf around the said rotation axis.

As for the shelf robot, in the said rotary shelf, it is preferable that said a plurality of storage spaces are arranged in a circular pattern along a single virtual circle to form a single layer, and that the said layers are multiplexed concentrically around the said rotation axis.

In addition, it is preferable that the shelf robot further includes a front plate on the carrying-in/out side of the said rotary shelf, the front plate having a carry-in/out port formed therein corresponding to the said carry-out position.

It is also preferable that the shelf robot further comprises a storage object identifying means for the said control unit to identify a storage object stored in the said storage space, and that the said target storage space identifying means selects a target storage object that the user wishes to take out from the storage objects identified by the said storage object identifying means, and identifies the storage space in which the selected target storage object is stored as the said target storage space.

In addition, it is preferable that the shelf robot further includes a user judging means in which the said control unit judges at least one of the user's physical characteristics, posture, or personal identification information as attributes of the said user, and the said carry-in/out position determining means determines the said carry-out position based on the said attributes judged by the said user judging means.

Also, In the shelf robot, it is preferable that said storage object identifying means uses a code reading technology to identify the storage object stored in the said storage space.

Also, in the shelf robot, it is preferable that said user judging means judges the user's said attribute using image recognition technology.

It is preferable that the shelf robot further comprises an image photographing device that photographs the user who handles the storage object, and a user judging means that judges the user from the image photographed by the image photographing device, and that the said control unit executes the operation record required by GXP, which is a public standard aimed at ensuring the reliability of operations related to information such as who, when, and what was done, by generating a position information algorithm (algorithm) based on the results of the judgment by the said user judging means.

Furthermore, it is preferable that the shelf robot is a shelf robot equipped with a rotation axis, a rotary shelf rotatable around the said rotation axis, a shelf rotation drive unit that rotates the said rotary shelf around the said rotation axis, and a control unit, wherein the said rotary shelf has a plurality of storage spaces set along a virtual circle centered on the said rotation axis, each of the said storage spaces has a storage container installed therein, and the lower part of the said storage container is equipped with a front/rear moving plate and a bottom plate (pallet), and the said control unit transmits information calculated from an image including the said front/rear moving plate and/or said bottom plate (pallet) photographed by the said image photographing device to a transport vehicle transporting a storage object stored in the said storage container, thereby enabling cooperative operation with the transport vehicle.

More preferably, the control unit of the shelf robot works using artificial intelligence technology.

### [Effects of invention]

According to the invention, a shelf robot can be provided that has excellent storage capacity and carrying-in/out operability for luggage, and is also suitable for carrying-in/out support or inventory management using artificial intelligence technology, for example.

### [Brief description of drawings]

FIG. 1 is a conceptual diagram showing the front view of the basic shelf structure of the shelf robot.
FIG. 2 is a conceptual diagram showing the front view of the rotary shelf that constitutes the shelf robot.
FIG. 3 is a schematic diagram showing the side view of the basic shelf structure of the shelf robot.
FIG. 4 is a block diagram showing the controlling-processing means incorporated in the shelf robot.
FIG. 5 is a flow chart showing an example of the motion of carrying (loading) the luggage into the shelf robot.
FIG. 6 is a flow chart showing an example of the motion of carrying (unloading) the storage object from the shelf robot.
FIG. 7 is a functional block diagram for further explaining the structure of the shelf robot.

### [Description of embodiments]

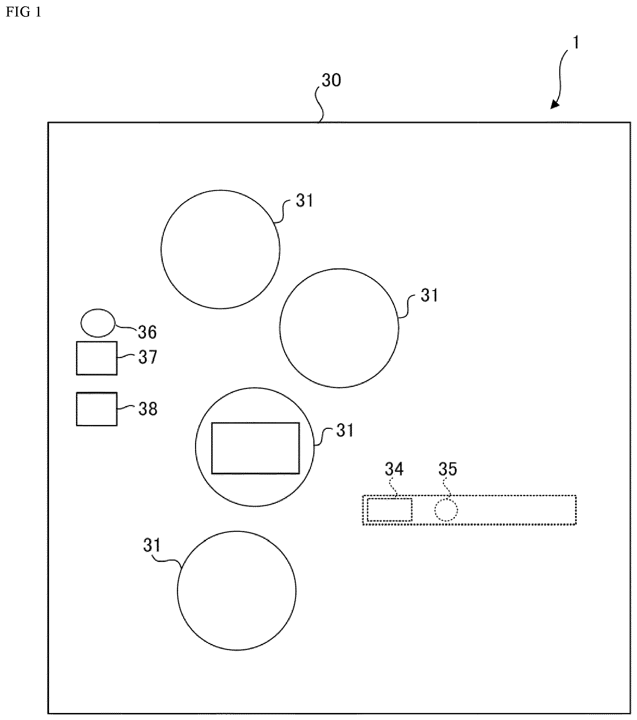

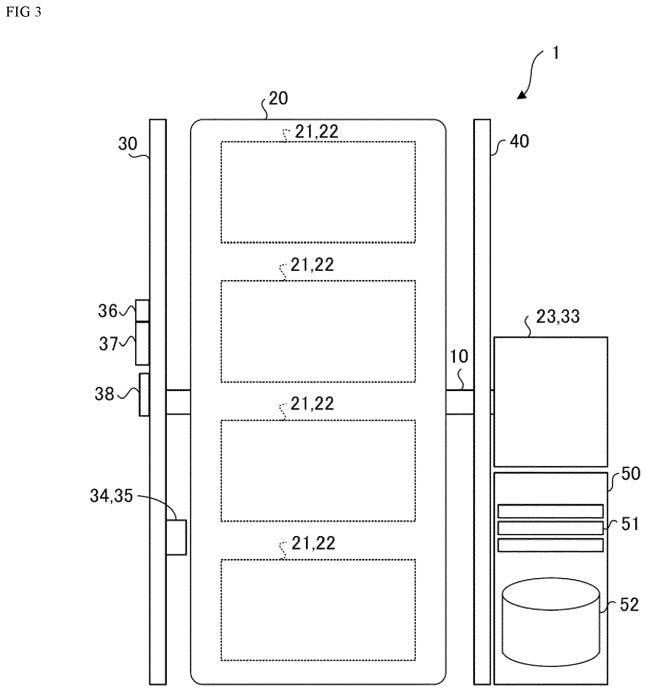

The following is a description of the preferred embodiments of the shelf robots of the present invention. FIG. 1-3 are conceptual diagrams for explaining the basic shelf structure of the shelf robot 1 of one embodiment of the present invention. As shown in these figures, shelf robot 1 has a rotation axis 10 and a rotary shelf 20 that can rotate around the rotation axis 10 as the basic shelf structure. The rotary shelf 20 for storing luggage is rotatably driven around a rotation axis 10 by a shelf rotation drive unit 23 equipped with, for example, an electric motor. Here, an embodiment in which the rotary shelf 20 rotates vertically around a horizontal rotation axis 10 is described, but the rotary shelf 20 may also rotate horizontally around a vertical rotation axis.

In addition, in the explanation of this Specification, the "luggage" stored in the shelf robot refers not only to the items handled by the user (including animals and plants, such as livestock and biological samples), but also to humans depending on the purpose and use of the shelf robot's embodiment.

In this embodiment, a front plate 30 is provided on the carrying-in/out side, which is the front side of the rotary shelf 20. The front plate 30 has one, or more located carry-in/out ports 31, which are openings for carrying luggage in and out, formed in correspondence with the carry-in/out positions of the rotary shelf 20. The front plate 30 may be fixed. But may also be rotatably driven around the rotation axis 10 by a front plate rotation drive unit 33 equipped with an electric motor, for example.

Furthermore, the basic shelf structure may have a rear plate 40 provided on the side of the rotary shelf 20 opposite the carry-in/out plate 30. In this embodiment, the front side of the rotary shelf 20 is the carrying-in/out side for loading and unloading luggage, but the rotary shelf 20 may also have a configuration in which luggage can be loaded and unloaded from both the front and rear sides. In that case, the rear plate 40 may have the same configuration as the carry-in/out plate 30, i.e., it may have a carry-in/out port at an appropriate position.

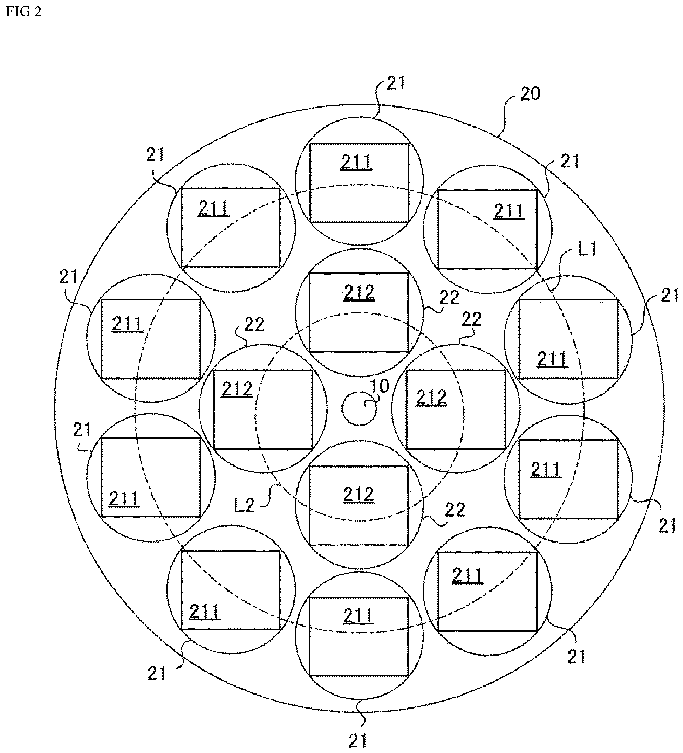

As shown conceptually in FIG. 2, the rotary shelf 20 has a plurality of storage spaces 21, 21, ..., 22, 22, ... set along virtual circles L1, L2 centered on the rotation axis 10. For example, the first layer of storage space is formed by arranging a plurality of storage spaces 21, 21, ... in a circular fashion along the outermost virtual circle L1, and the second layer of storage space is formed by arranging a plurality of storage spaces 22, 22, ... in a circular fashion along the next innermost virtual circle L2. In this way, the rotary shelf 20 has multiple storage layers L1, L2, ... formed in a concentric fashion centered on the rotation axis 10. However, in carrying out the invention, the number of layers of the storage space may be a single layer, or maybe three or more layers. In addition, all layers may rotate together, or each layer may rotate independently.

The number of storage spaces 21, 22 for each layer described above is preferably set to a multiple of 4, 5, 6, or 10. The storage spaces 21, 22 are also preferably cylindrical or spherical. The size of the storage space is set, for example, as follows. First, in the outermost first layer L1, the radius of the storage space is calculated based on the radius of the rotary shelf 20. Next, the radius of the storage space 22 in the second layer L2 inside the first layer L1 is set to the same size as the storage space 21 in the first layer L1. In other words, the radius of the storage space 22 in the second layer L2 is not calculated based on the excess rotation radius obtained by subtracting the radius of the storage space in the first layer L1 from the radius of the rotary shelf 20.

Each storage space 21, 22 is provided with a storage container 211, 221 for storing luggage. The storage containers 211, 221 are preferably suspended within the storage spaces 21, 22. Alternatively, the storage containers 211, 221 may be supported or placed on a rocking platform or the like that is always kept horizontal within the storage spaces 21, 22. The storage container may be provided with an attachment/detachment device for replacing each storage container with another storage container.

The storage spaces 21, 22 are designed to be maximized relative to the size of the rotary shelf 20 and the number of storage containers 211, 221. The storage spaces 21, 22 and the storage containers 211, 221 are also designed so that collisions do not occur between the storage containers 211, 221 when the rotary shelf 20 rotates. For this purpose, the radii of the storage spaces 21, 22 as well as the diagonal lengths and side lengths of the storage containers 211, 221 are designed so that the adjacent storage spaces 21, 22 have an interval of 1% or more of the radius (storage space radius).

A label reading device 34 that constitutes the storage object identifying means 62 (described later) is provided on the rear surface of the front plate 30 (the surface facing the rotary shelf 20). The label reading device 34 is a device that identifies the storage objects stored in the storage spaces 21, 22, for example, by using code reading technology. Labels such as two-dimensional bar codes, QR codes (registered trademark), and RFID tags are attached to the storage objects, and the label reading device 34 can obtain the identification code information for each storage object from these labels in a non-contact manner.

In addition, an image photographing device (camera) 35 for photographing the storage object on the rotary shelf 20 may be provided on the back of the front plate 30. The image photographing device 35 can be used as an auxiliary in the storage object identifying means 62, for example, to identify the storage object by image recognition using artificial intelligence technology when the label reading device 34 cannot identify the storage object due to the orientation or placement of the storage object.

It is preferable that the label reading device 34 and/or image photographing device 35 be installed on the back of the front plate 30 so that its position can be moved linearly from the left end to the right end. With this configuration, the storage objects on the rotary shelf 20 can be identified without any blind spots.

In addition, the front part of the front plate 30 is provided with an image photographing device (camera) 36 that constitutes the user judging means 61 described later and judges the attributes of the user. The user judging means 61 may also be equipped with a short distance wireless communication device (NFC reader) 37 such as a card reader to identify the user.

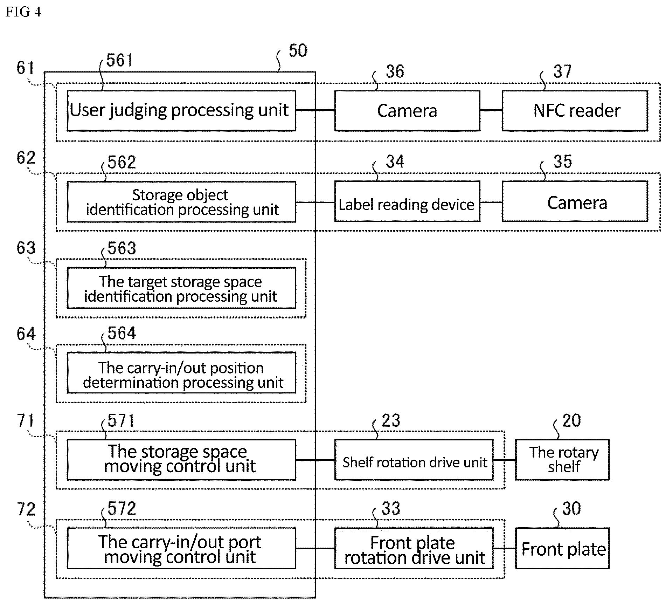

The shelf robot 1 according to this embodiment is equipped with an arithmetic processing device 51 and a computer system (control unit) 50 including a memory device (database) 52 connected to the arithmetic processing device 51. The computer system 50 including the arithmetic processing device 51 and the memory device 52 operates in conjunction with the component devices incorporated in the shelf robot 1 to realize, for example, the controlling-processing means shown by the dashed block in FIG. 4.

Specifically, the shelf robot 1 of this embodiment is equipped with a user judging means 61, a storage object identifying means 62, a target storage space identifying means 63, and a carry-in/out position determining means 64 as analytical system means. Furthermore, the shelf robot 1 is equipped with a storage space moving means 71 and a carry-in/out port moving means 72 as drive control system means. The configuration and processing motion of these functional means will be explained in more detail below. In addition, among the function blocks shown in FIG. 4, a part of the analytical system processing that requires high-speed calculation of a large amount of data, such as image recognition processing and deep learning (machine learning) processing, may be processed by an external (central) large computer connected to the computer system 50 of the shelf robot 1 via a network.

### (user judging means)

The user judging means 61 is composed of, for example, an image photographing device (camera) 36 and/or short distance wireless communication device (NFC reader) 37 provided on the front part of the front plate 30, and a user judging processing unit 561 implemented in the computer system 50. The user judging means 61 judges at least one of the following attributes of the user from the image photographed by the image photographing device (camera) 35, for example, the type of the user (human, transport vehicle, transport robot, etc.), physical and structural characteristics (for example, height, body type, gender, presence or absence of a handling arm, etc.), posture (standing, crouching, riding in a wheelchair, etc.), or personal identification information (face recognition, personal ID, vehicle equipment registration number, etc.) by image recognition using artificial intelligence technology by for example the user judging processing unit 561. In addition, the user judging means The NFC reader 61 may determine or identify the user based on information read by the short distance wireless communication device (NFC reader) 37 in addition to or instead of the image photographing device 36 described above.

### (storage object identifying means)

The storage object identifying means 62 is configured to include, for example, a label reading device 34 and/or image photographing device (camera) 35 provided on the back of the frame plate 30, and a storage object identifying processing unit 562 mounted on the computer system 50. The storage object identifying means 62 photographs the luggage (storage object) stored in the storage space 21, 22, or storage container 211, 221 of the rotary shelf 20 using the image photographing device 35. The label reading device 34 may read the two-dimensional code attached to the luggage (storage object) to obtain identification code information of the luggage (storage object). In addition, the luggage (storage object) may be identified by image recognition processing using artificial intelligence technology based on the image of the photographed luggage (storage object).

The identification code information for each storage object identified by the storage object identifying means 62 is managed in an inventory management table associated with the individual information of the storage spaces 21, 22 in which the storage object is stored in the memory device (database) 52 of the computer system 50. In addition, the inventory management table also records the ID information of the user (in this specification, the concept of the user includes not only the person who carries the luggage in/out, but also the transportation vehicles such as four-wheeled vehicles and forklifts) and the date and time of use (carrying the luggage in/out) as historical information for each storage space 21, 22.

### (Target storage space identifying means)

The target storage space identifying processing unit 563 (target storage space identifying means 63) is a means for identifying the storage space in which the storage object that the user is trying to take out is currently stored, or the storage space in which the user is trying to store luggage (collectively referred to as the "target storage space"), among a plurality of storage spaces 21, ..., 22, ... provided on the rotary shelf 20.

For example, the memory device 52 manages a position reference table that associates the individual information of all storage spaces 21, 22 with polar coordinate information (layer number, rotation angle from the reference point) that indicates the relative position of the storage spaces 21, 22 on the rotary shelf 20. The target storage space specific processing unit 563, when given identification code information for a certain storage object, can search for the storage spaces 21, 22 in which the storage object is stored by referencing the inventory management table. Also, by referring to the above-mentioned position reference table based on the current rotation angle of the rotary shelf 20, it can immediately identify the current position of the storage space that stores the storage object.

When a user carries in luggage, the target storage space determination processing unit 563 can identify, for example, the vacant storage space 21, 22 closest to the determined carry-in position (carry-in/out port 31) as the target storage space. Alternatively, the storage space 21, 22 reserved by the user or dedicated to the user may be determined as the target storage space based on the personal identification information of the user determined by the user judging means 61.

### (carry-in/out position determining means)

The carry-in/out position determination processing unit 564 is a processing means for determining the carry-in/out position of a storage object according to the attributes of the user judged by the user judging means 61, for example. Depending on the user's physical characteristics, posture, and so on, the carry-in/out position can be determined at the optimal height for easy carrying-in/out of luggage.

### (storage space moving means)

The storage space moving control unit 571 (storage space moving means 71) is a drive control means that controls the above-mentioned shelf rotation drive unit 23 to rotate the rotary shelf 20 around the rotation axis 10, thereby moving the specified target storage space to the determined carry-in/out position (carry-in/out port 31).

### (Carry-in/out port moving means)

The carry-in/out port moving control unit 572 (carry-in/out port moving means 72) is a drive control means that controls the above-mentioned carry-in/out plate rotation drive unit 33 to rotate the carry-in plate 30 around the rotation axis 10, thereby moving the specified carry-in/out port 31 to the determined carry-in/out position.

Next, an example of the motion of shelf robot 1 that comprises the above-mentioned basic shelf structure.

### (explanation of the carrying-in motion of luggage)

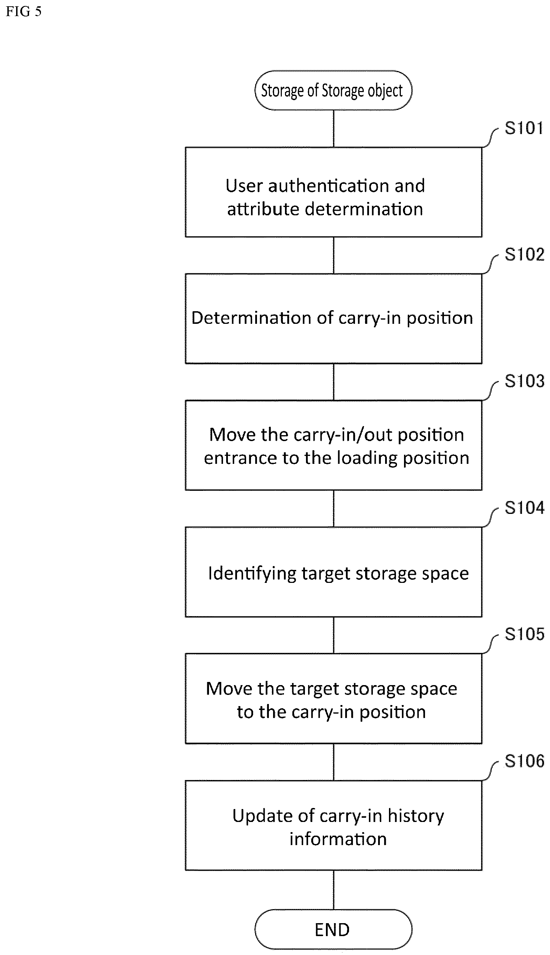

FIG.5 is a flow chart showing an example of the motion when the user stores the luggage in the shelf robot 1.

In this example, first, when a user approaches the shelf robot 1, the user judging means 61 is activated. The user judging means 61 takes a picture of the user with the image photographing device 36, and judges the user's facial recognition and attributes (such as the user's face, physical features, posture, etc.) based on the image (step S101). In order to identify the user more accurately, the user judging means 61 may obtain the user's personal ID or key information from an ID card held over a short distance wireless communication device (NFC reader) 37, or may ask the user to enter an authentication code such as a pre-registered password.

Next, the carry-in/out position determining means 64 determines the optimal carry-in position according to the attributes of the user judged by the user judging means 61 (step S102). Then, the carry-in/out port moving means 72 moves the carry-in/out port 31 to the determined carry-in position by rotating the front plate 30 around the rotation axis 10 (step S103).

Then, the target storage space identifying means 63 identifies one vacant storage space 21 (22) among a plurality of storage spaces 21, 22 on the rotary shelf 20 as the target storage space (step S104). Next, the storage space moving means 71 moves the identified target storage space 21 (22) to the determined carry-in position (carry-in/out port 31) by rotating the rotary shelf 20 around the rotation axis 10 (step S105). This allows the user to easily store his/her luggage in the target storage space 21 (22) through the carry-in/out port 31 of the carry plate 30.

The identification code information of the luggage (storage object) stored in the storage space 21 (22) is automatically obtained by the storage object identifying means 62 (label reading device 34 and/or image photographing device 35). Then, the inventory history information in the inventory management table managed by the memory device (database) 52 of the computer system 50 is updated (step S106).

### (Explanation of the movement of carry-out a storage object)

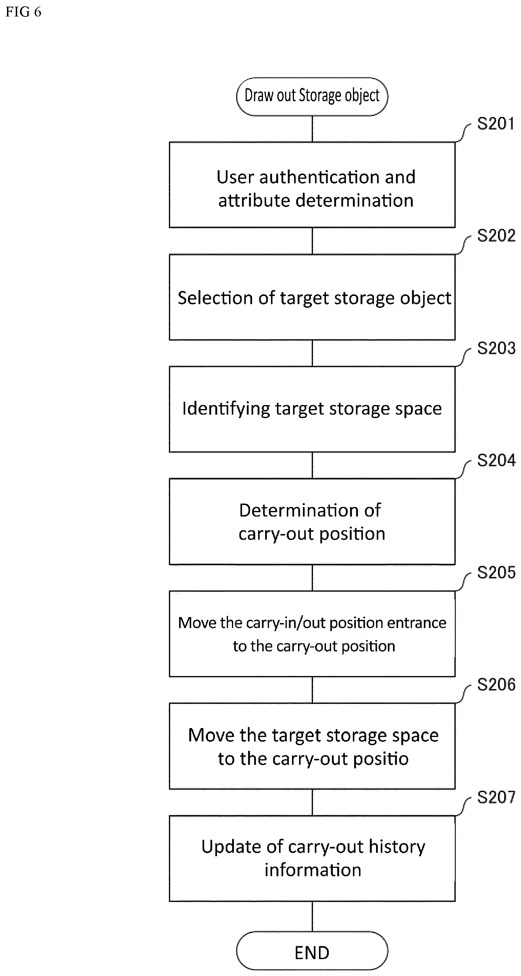

Next, referring to the flow chart in FIG. 6, we will explain an example of the motion when a user carries out a storage object stored in shelf robot1.

First, when a user approaches the shelf robot 1, the user judging means 61 photographs the user with the image photographing device 36 and judges the user's facial recognition and attributes (e.g., the user's face, physical features, posture, etc.) based on the image (step S201). The user judging means 61 may obtain the user's personal ID or key information from an ID card held up to the short distance wireless communication device 37, or may authenticate the user using a dedicated authentication app on a smartphone or the like.

In the next step S202, the target storage space identifying means 63 refers to the above-mentioned inventory management table based on the authentication information (e.g., personal ID, or key information, etc.) of the user judged by the user judging means 61, and searches for the storage object stored by the user on the rotary shelf 20, i.e., the luggage owned by the user. If the user has stored one storage object, the target storage space identifying means 63 selects that storage object as the target storage object that the user is to take out. If the user has stored multiple storage objects and they are stored across a plurality of storage spaces 21, 22, the user can be asked to perform additional designated input operations to select the target storage object. When the storage object to be carry out is designated by the user's input operation, the target storage space identifying means 63 selects the designated storage object as the target storage object.

After selecting the target storage object, the target storage space identifying means 63 identifies the storage space 21(22) (called the "target storage space") in which the target storage object is stored by referring to the inventory management table based on the identification code information (step S203).

Next, the carry-in/out position determining means 64 determines the optimal carry-out position according to the attributes of the user judged by the user judging means 61 (step S204). Then, the carry-in/out port moving means 72 moves the carry-in/out port 31 to the determined carry-out position by rotating the front plate 30 around the rotation axis 10 (step S205).

In addition, the storage space moving means 71 rotates the rotary shelf 20 around the rotation axis 10 to move the identified target storage space 21 (22) to the determined carry-out position (carry-in/out port 31) (step S206). This allows the user to easily take out the desired luggage (storage object) from the target storage space 21 (22) through the carry-in/out port 31 of the carry plate 30.

When the target storage object is successfully retrieved, the computer system 50 updates the inventory history information in the inventory management table managed by the memory device (database) 52 (step S207).

With this basic shelf structure, the shelf robot 1 can maintain the maximum storage capacity of luggage while achieving good carrying-in/out operability. The shelf robot 1 is also suitable for carrying-in/out support of luggage using artificial intelligence technology, or inventory management.

In addition to the above, conventional multi-stage shelves have some technical problems or needs, specifically as follows:
[1] Lack of high-low control ability to control the height of the storage object according to the user's physique.
[2] Storage space is occupied in a place that is difficult to use, and the total area of easily accessible storage containers per floor area is small.
[3] There is no function that identifies the information of a storage object (quantitative information, qualitative information such as type and time, and position information in the storage space due to rearrangement).
[4] The state of the storage object (qualitative information including shape or character, and untidiness, which is also positional information of the storage space) is analyzed by image analysis, resolving the high burden on the user.
[5] It does not have a function to analyze images of storage objects positioned outside the shelf.
[6] All faces on the front are fixed as carry-in/out ports, shortening the time and distance to reach the storage object.
[7] The weight of each storage container is measured by placing said storage container on a weight scale without any manual operation, and the weight fluctuations are monitored.
[8] Give the storage container a tilt to either the left or right or front or back.
[9] Move the storage object forward/backward to move the storage object position to the user's side and have the said user visually recognize it.
[10] When using a transport vehicle, two steps are required: inserting the fork in order to move the position to the carrier's side and then inserting the fork deep inside. This should be reduced to one step.
[11] In order to monitor from a 360-degree viewpoint, for example, the storage object, or storage container, should be rotated horizontally 180 degrees to the side carrying in/out, or rotated horizontally every 90 degrees to capture a 3D image of the storage object, or storage object.
[12] By arranging an additive port, lighting device, and temperature sensor in one place for the storage object, the substance addition, lighting irradiation and temperature control are completed for all storage containers on the shelf, and the environment (temperature) of the storage object is set uniformly according to the constant change of the indoor height position.
[13] The user stably work on the bottom of the storage container or storage object while standing or sitting.
[14] The carrying-in/out of the storage object between positions with different heights (such as the entrance/exit of a warehouse and the entrance/exit of a truck, the movement of cargo between land and ship on a cargo ship, or the scaffolding and the work area at a construction site).
[15] The safety of the user due to lack of calmness is monitored by image analysis of the weather environment around the shelf (weather such as rain and wind) and emotion analysis of the voices of said people around the shelf.
[16] To provide a system for integrating and supporting medical care in the same time and space.
[17] Identify workers without paper.
[18] Said Identifying workers without paper means relying on cumbersome handwritten records to comply with standards (GXP) established by government and other public institutions to ensure reliability of who did what and when.

The official standard GXP includes GAP (Good Agricultural Production Process), GCP (Good Clinical Practices for Drugs and Medical Devices), GCLP (Good Clinical Practices for Clinical Laboratories Handling Clinical Samples), GDP (Good Distribution Practices for Drugs), GLP (Good Clinical Practices for Drugs and Medical Devices), GMP (Good Manufacturing Practices and Quality Control for Drugs and Quasi-Drugs), GQP (Good Quality Practices for Drugs, Quasi-Drugs, Cosmetics, and Medical Devices), GVP (Good Clinical Practices for Drugs, Quasi-Drugs, Cosmetics, and Medical Devices), GPSP (Good Clinical Practices for Post-Marketing Surveillance and Testing), or GPMSP (Good Clinical Practices for Drugs).

To solve these specific problems, the shelf robot can add the following five functions depending on the product's purpose.

The first function is a rotation/stop function. The rotation of the rotary shelf 20 that stores said storage objects, or said storage containers 211 and 221, is stopped differently depending on whether or not the rotation is affected by gravity. As a component for this, a rotation/stop device that stops the rotation is provided. When the rotation and stopping of said rotary shelf 20 is influenced by gravity and is selected by the operation of said operating electronic device, or a user signal, a stop control algorithm 651 is generated, the rotation is stopped, horizontality is maintained. Next, when the rotation of the rotary shelf 20 is stopped in a manner that is not affected by gravity, the horizontality caused by the rotation stop device becomes horizontality that is not affected by gravity, and the work at the bottom of the storage object in the storage container 211, 221 position is performed in a stable standing or sitting position.

An example of the second function is weight measurement. As a component for weight measurement of said storage object, or said storage container 211, 221, a weight scale 673 is provided at the bottom of said storage container 211, 221, which is positioned at the bottom of said shelf, The weight measurement using the weight scale 673 at the bottom of the storage container is performed by operating the electronic device or by a signal from the user, and the weight measurement algorithm 671 is generated. The storage containers 211, 221 rotate by rotating the rotary shelf 20, and the containers rotate and stop at the location where the weight scale 673 is installed. By pulling the rope connected to the said storage container 211, 221 that is suspended at the stopping point, the said weight scale 673 is installed at the bottom of the said storage container 211, 221 when the said storage container 211, 221 floats, When the rope is released, the weights of each storage container 211, 221 are recorded in the central computer based on the images of the weight scale and the weight plate of scale fluctuation.

The third function is the adjustment of the amount of liquid. The said storage container 211, 221 is equipped with a slope device point as a component for adjusting the amount of liquid contained in the said storage object, or said storage container 211, 221, which contains liquid. A liquid measure adjustment algorithm 681 is initiated by the operation of the operating electronic device or a signal from the user, and when the storage container 211, 221, or the storage object contains liquid, the amount of liquid is adjusted by pulling a rope on one side connected to a container suspended from the slope device point, and liquid measure adjustment is performed from an image of a lighting mismatch that is changed by tilting the storage container 211, 221, or the storage object either forward or backward relative to the front surface.

The fourth function is the horizontal rotation function. As a component that causes the viewpoint to change due to the horizontal rotation of said storage object or said storage container 211, 221, a horizontal rotation plate 693 is provided at the bottom of said storage container 211, 221 on said shelf. A horizontal rotation algorithm 691 is generated by an image of the operation electronic device, or a signal from the user, and the orientation of the storage container 211, 221 relative to the front side is adjusted by rotating the horizontal rotation board 693 by the image, and the front and rear of the storage container 211, 221 are reversed by reversing the front side to the rear side, In order to obtain a 360-degree perspective for capturing images of all four sides of cube, or compartments, of the storage containers 211 and 221, horizontal rotation and horizontal rotation stop of the storage containers 211 and 221 are performed.

The fifth function is addition and environmental equalization. An addition port is set at one location on the said shelf, and by uniformity of the environment and, the components for reflecting the environment to all storage containers 211, 221 on the shelf are an addition port, a lighting device, and a temperature sensor at any position on the shelf. When addition is selected by the operation of said electronic device or a signal from said user, an addition algorithm is generated, and said storage containers 211, 221 are rotated by the rotation of said rotary shelf 20, so that substances are added to all said storage containers 211, 221 on said the shelf in conjunction with placement at said addition ports and stopping at said addition port positions, When it is selected to make the environment (temperature) uniform in all said storage containers 211, 221 in the shelf by operation of said operating electronic device or a signal from said user, an environment uniformization algorithm 701 is generated, the number of rotations of said rotary shelf 20 required per hour is determined, and the environment (temperature) uniformization is performed in all said storage containers 211, 221 in the shelf by arranging said lighting device and said temperature sensor at an arbitrary position and stopping said rotary shelf 20 at the top of said rotary shelf.

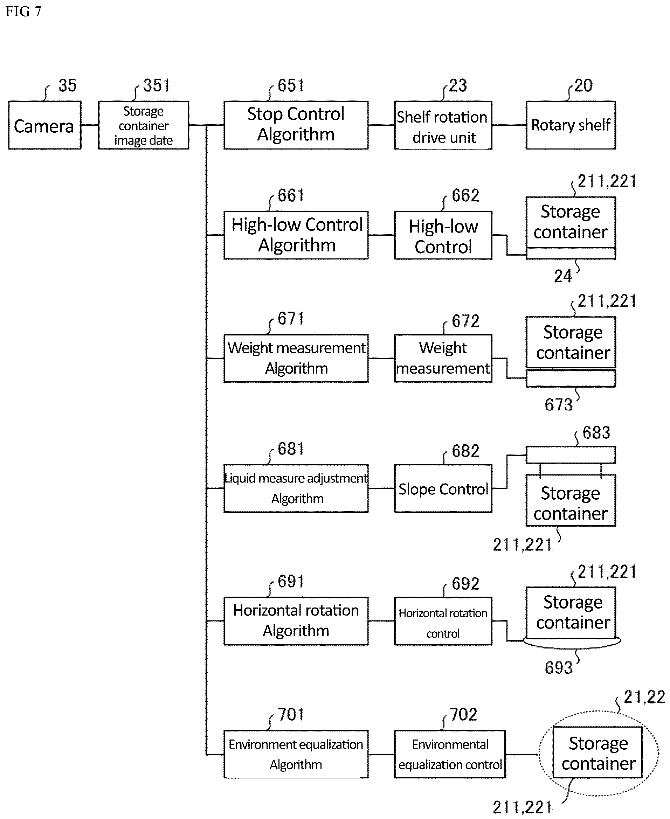

To achieve this function, the shelf robot can optionally include the following configuration, for example, as shown in FIG. 7.

A rotation/stop device for rotating/stopping the rotary shelf 20 is provided as a component for stopping the rotation of the rotary shelf 20 storing the storage object or the storage container 211, 221 depending on the presence or absence of the effect of gravity. When the rotation/stop of the rotary shelf 20 is selected to be affected by gravity by the operation of the electronic device or a signal from the user, a stop control algorithm 651 is generated, and the storage containers 211 and 221 of the shelf are affected by gravity and maintained horizontal. Next, when a stop that is not affected by gravity is selected by the said user's signal or the said operation of the electronic device, the stop control algorithm 651 is generated, and the horizontality is not affected by gravity, and the work is performed stably at the bottom of the storage object in the storage container position in a standing or sitting position.

In addition, a forward/backward moving plate 24 is provided at the bottom of the storage container 211, 221 as a component for forward/backward movement of the storage object or storage container 211, 221. The carrying-in/out of the storage object, or the storage container 211, 221, is performed by a high-low control algorithm 661 including a function of detecting the storage object and a function of moving the moving plate 24 forward/backward, by said operating electronic equipment, or said user's signal, and the storage object, or the storage container 211, 221 is rotated and moved by the rotation of the rotary shelf 20, and when the rotation is stopped, the storage object, or the storage container 211, 221 is moved forward by the forward/backward moving plate 24 at a high/low position that is easy to take out before the storage object, or the storage container 211, 221 is carried in/out, and is moved backward by the forward/backward moving plate 24 after the storage object, or the storage container 211, 221 is carried in/out.

In addition, as a component for weight measurement of said storage object, or said storage container 211, 221, a weight scale 673 is provided, which is installed at the bottom of said storage container 211, 221, which is positioned at the bottom of said shelf. The weight measurement by the weight scale 673 at the bottom of the storage container is generated by the weight measurement algorithm 671 by the said operation of the electronic device or the signal of the said user set by the said user. The storage containers 211, 221 rotate as the rotary shelf 20 rotates, and are stopped at the location where the weight scale 673 is installed. The storage containers 211, 221 are suspended at the stopping location, and the weight scale 673 is installed at the bottom of the storage containers 211, 221 when the storage containers 211, 221 float by pulling the rope connected to the storage containers 211, 221. When the rope is released, the weight of each storage container 211, 221 is corrected by the image of the fluctuation of the scale or value of the weight scale 673 and the fluctuation of the storage containers 211, 221, and the weight is recorded in the central computer.

In addition, a slope device point 683 is provided in the said storage container 211, 221 as a component for adjusting the amount of liquid contained in the said storage object, or said storage container 211, 221, which contains liquid. A liquid measure adjustment algorithm 681 is generated by a signal from a said user set by operating the said operating electronic device or identifying the said user, and the liquid amount in the said storage container 211, 221, or said storage object is adjusted by pulling a rope on one side connected to the container 211, 221 suspended from the said slope device point 683, and liquid measure adjustment is performed from an image by giving the said storage container 211, 221, or said storage object a tilt in either the front or back relative to the front.

In addition, a horizontal rotation plate 693 is provided at the bottom of the said storage container 211, 221 as a component for horizontal rotation of the said storage object, or said storage container 211, 221. A horizontal rotation algorithm 691 is generated by the operation of the electronic device or a signal from the user, and a horizontal rotation is performed once to adjust the orientation of the storage container 211, 221 relative to the front side by rotating the horizontal rotation plate 693 to invert the front side to the rear side, or the storage container 211, 221 is rotated and stopped horizontally every 90 degrees by 360-degree viewing in order to capture images of all four sides or sections of the cube.

In addition, the storage containers 211, 221, at said the top of the shelf are provided with an addition port, a lighting device, and a temperature sensor as components for adding a substance at one place in the shelf and for reflecting the addition to all the storage containers 211, 221 in the shelf by uniformizing the environment. When addition is selected by the operation of said electronic device or a signal from said user, an addition algorithm is generated, and the substance is added to the storage object in all said storage containers 211, 221 on said the shelf linked to placement at said addition port and stopping at said addition port position, When environmental equalization is selected by operation of said operating electronics or a signal from said user, an environmental equalization algorithm 701 is generated, and the number of rotations of said rotary shelf 20 per hour is determined to be the number of rotations required by the application of the shelf. The storage containers are rotated by the rotation of the rotary shelf 20, and the environment (temperature) of all the storage containers 211, 221 of the shelf is made uniform within the shelf by arranging the lighting device and the temperature sensor at one location and stopping the rotary shelf 20 at the top of the rotary shelf.

In addition, a linear movement base plate and linear movement device are provided at the bottom of the shelf as a component for shortening the moving distance and moving time to the said storage containers 211 and 221. When multiple said shelves are installed, the entry/exit locations for carrying-in/out the said storage object in the said shelf are installed at every the three locations, the left end, the center, and the right end, while the recognition location for recognizing the information of the storage object is also installed at every the three locations, the left end, the center, and the right end. This means that the said entry/exit location and the said recognition location are located in different locations at the left end, the center, and the right end due to rotation, resulting in a plurality of movements from shelf to shelf as in the past. If the shelves are close to each other, it may not be possible to reach the removal position, In contrast, in the said shelf, even if a plurality of shelves are close to each other, the removal position can be reached in a single movement, and the said shelf is arranged with its back to the entrance at an inclined angle (for example, 45 degrees) with respect to the travel direction to the entry/exit location, or is moved to an arrangement where the travel base point of said the shelf moves linearly to the left and right with its back to the travel direction, so that when the said entry/exit locations for said user, or said transport vehicle are arranged in locations where they do not overlap with each other, the travel distance to said storage container 211, 221, or said storage object is the shortest, resulting in an installation method that reduces the space between shelves.

In addition, as components for identifying the said user and for high-low control of the said storage object, an image capture device (camera) outside the shelf that captures the user's image to identify the user's individual features (face, physique and signals), a video capture device (camera) inside the shelf at the storage object position, and an image capture device (camera) that captures images of any space other than the shelf are provided. A whole-body image is taken, and face, physique (height to shoulder and hand length) and signals are extracted from the image by instructions via the central computer. When a characterization is selected by the operation of the said electronic equipment or a user's sign, a characterization algorithm is generated to characterize the face, physique, and signs from the whole-body image, respectively. After matching the user, the identification of the user is completed by the three images of the user. When the said user searches for the type of said storage object by operating the said operating electronic device, or when it is selected by the said user's signal, a storage space is located, and a high-low control algorithm 661 is generated, including detection of the label's position, or whether it has been moved to another storage container, and the said rotary shelf 20 is rotated and moved so that the position at which the selected storage object is carried-in/out is within the field of view (for example, the object is within approximately 70 cm left/right/up/down and the object is within approximately 70 cm left/right/up/down for a distance of 1 m from the object) or within the removal range, without any up/down/left/right movement of the head/trunk in the user's physique and standing or sitting position, and carrying-in/out of the storage object is performed.

In addition, as components for transporting said storage object, or said storage container 211, 221, a transport instruction device, coding technology (label reader) for said transport instruction device, an image capture device (camera) for taking pictures of said route to determine the route of said transport vehicle, a transceiver for enabling network connection between said central computer and transport vehicle, front and rear moving plates 24 for storage container 211, 221 at the bottom of said storage container 211, 221, a bottom plate (pallet) for determining the position to insert the fork of said transport vehicle, and a pallet bottom plate for recognizing said pallet position are provided. The said transporter is driven by instructions via the said central computer, and a driving algorithm is generated by the operation of the said electronic device or a signal from the said user, and the said transporter is driven by calculating the distance and position between the said transporter and the said shelf through image analysis by triangulation using images captured by a camera installed on the said platform, For the work of inserting the fork into the pallet, a fork insertion position algorithm is generated to determine the height position to insert the fork into the pallet by operating the said electronic device or by a signal from the said user. The height position information of the said storage containers 211 and 221 calculated from the image captured by the camera in the said shelf is wirelessly transmitted to the said transport vehicle. Carrying-in/out of containers up to a height of 3m of pallet position, which is out of the field of view of the said transport vehicle operator, is performed on all shelves connected to the network by instructions via the said central computer.

In addition, an external camera is provided to capture the user's image as a component for identifying the operator in the operation of the said storage object or said storage container 211, 221 without using paper media. The above-mentioned storage object operations are identified by a standard (GXP) established by public institutions such as the government with the aim of ensuring the reliability of operations regarding who, when, and what was done. The position information analysis algorithm is generated from the captured images, and said the shelf operator who performed the said operation is identified. The identification of the person in charge is performed electronically over the Internet, as was previously done on paper.

Next, we will explain some examples of shelf robots that apply the basic shelf structure described above.

### (Example 1; book shelf robot)

The conventional book shelf has three problems in addition to the lack of high-low control to control the height of the storage object. The first problem is that although it is known that a book user will not necessarily return a book to the same position where it was taken out, the untidy nature of the said user's storage object is not detected when the said user returns it. The second problem is the high burden it places on the user, and the larger the scale of the system, the more time and effort it takes for the user to find the book and carry it in/out, and the more effort and burden it requires for inventory management, or relocation. The third problem is that artificial intelligence has not been utilized to solve the above problem for all shelves. In addition, shelves that can store various sizes of storage objects according to the size of the storage object have not been generalized.

The book shelf robot according to the embodiment of the invention is provided with the basic shelf structure, a take-out position positioned in front of the stand plate, a storage container (bookcase) suspended within the storage space from the suspension points of the rotary shelf positioned on the front and rear wheels, a component for identifying a user and for high-low control of the storage object, a component for transporting the storage object, or said storage container, a component for forward/backward movement of the storage object, or said storage container, a component for shortening the moving distance and moving time of the storage object, or said storage container, and a component for horizontal rotation of the storage object, or said storage container, The methods include identifying users (book users, or library visitors) using a characterization algorithm, identifying storage objects using a storage object characterization algorithm, transporting said storage objects by a vehicle using a said driving algorithm, carrying-in/out by users using a said high-low control algorithm, horizontal rotation using a said horizontal rotation algorithm for a 360-degree viewing angle, detecting dynamic objects using a said position information analysis algorithm, and detecting untidiness using a said position information analysis algorithm.

The book shelf robot makes the entire storage container area a space that makes it easy for users to take out storage and allows users to set the reader position of storage objects according to their needs. Assuming that one bookcase has two levels that are sufficient to store A4-sized books, and that the height, width, and depth of the storage containers are 70cm/70cm and 35cm, respectively, the ratio of easily accessible storage containers to floor space shows that five items can be stored in the space of one flat area. The minimum ground clearance for the first layer only shelves (shelf numbers 1 and 2), the second layer shelves (shelf numbers 3 and 4), and the third layer shelves is 0m, 70cm, and 1.4m, respectively, and the shelf height is approximately 1m to 5.08m, so that users, including children and wheelchair users, can use the shelf up to the third layer.

**[table 1]**

| (Example) Book shelf robot. The first layer. | | | | | | | | | | | |
|---|---|---|---|---|---|---|---|---|---|---|---|
| shelf number | R1 rotating plate | | | | C1 storage | | | | floor space (mm²) | C1 | |
| | diameter (m) | depth (m) | radius (m) | angle | number of storage spaces | radius of the storage space (m) | storage container width/ length (m) | storage container depth (m) | | total storage container area (mm²) | floor space to storage container area ratio |
| 1 | 1.4 | 0.7 | 0.7 | 90 | 4 | 0.49 | 0.70 | 0.35 | 1.0 | 2.0 | 200% |
| 2 | 1.98 | 0.7 | 0.99 | 60 | 6 | 0.50 | 0.70 | 0.35 | 1.4 | 2.9 | 212% |
| 3 | 2.6 | 0.7 | 1.3 | *45* | 8 | 0.50 | 0.70 | 0.35 | 1.8 | 3.9 | 216% |
| 4 | 3.2 | 0.7 | 1.6 | 36 | 10 | 0.49 | 0.70 | 0.35 | 2.2 | 4.9 | 218% |
| 5 | 3.84 | 0.7 | 1.92 | 30 | 12 | 0.50 | 0.70 | 0.35 | 2.7 | 5.9 | 220% |
| 6 | 5.08 | 0.7 | 2.54 | 22.5 | 16 | 0.50 | 0.70 | 0.35 | 3.6 | 7.8 | 221% |

R1 diameter-the radius of rotating plate×2, C1 the number of storage spaces= 360degrees÷angle, C1 the radius of the storage space=R1 the radius of rotating plate×sin(angle÷2), C1 storage container width/length= C1 the radius of the storage space ×0.707, floor space= width/length×depth, total storage container area= storage container width×storage container depth×2 (number of steps)

**[table 2]**

| (Example) Book shelf robot. The second layer. | | | | | | | | | | |
|---|---|---|---|---|---|---|---|---|---|---|
| shelf number | R2 rotating plate | | | C2 storage | | | | C 1 + C 2 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.2 | | | | | | | 4 | 2.0 | 200% |
| 2 | 0.5 | | | | | | | 6 | 2.9 | 212% |
| 3 | 0.8 | 0.71 | 90 | 4 | 0.50 | 0.70 | 0.35 | 12 | 5.9 | 325% |
| 4 | 1.1 | 0.99 | 60 | 6 | 0.50 | 0.70 | 0.35 | 16 | 7.8 | 350% |
| 5 | 1.4 | 1.3 | 45 | 8 | 0.50 | 0.70 | 0.35 | 20 | 9.8 | 366% |
| 6 | 2.0 | 1.92 | 30 | 12 | 0.50 | 0.70 | 0.35 | 28 | 13.7 | 387% |

R2 the excess radius = R1 the radius of rotating plate - C1 the radius of the space x 1.01, C2 the number of storage spaces = 360degrees÷angle, C2 the radius of the storage space = R1 the radius of rotating plate x sin (angle÷2), C2 storage container width/length= C2 the radius of the storage space×0.707, total storage container area= storage container width×storage container depth×2 (number of steps)

**[table 3]**

| (Example) Book shelf robot. The third layer. | | | | | | | | | | |
|---|---|---|---|---|---|---|---|---|---|---|
| shelf number | R3 rotating plate | | | C3 storage | | | | C1 + C2 + C3 | | |
| | the excess radius (m) | radius (m) | angle | number of storage spaces | radius of the storage space (m) | storage container width/ length (m) | number of storage spaces | number of storage spaces | total storage container area (mm²) | floor space to storage container area ratio |
| 1 | 0.2 | | | | | | | 4 | 2.0 | 200% |
| 2 | 0.5 | | | | | | | 6 | 2.9 | 212% |
| 3 | 0.3 | | | | | | | 13 | 5.9 | 325% |
| 4 | 0.6 | | | | | | | 17 | 7.8 | 350% |
| 5 | 0.9 | 0.7 | 90 | 4 | 0.50 | 0.70 | 0.35 | 25 | 11.8 | 440% |
| 6 | 1.5 | 1.3 | 45 | 8 | 0.50 | 0.70 | 0.35 | 37 | 17.7 | 497% |

R3 the excess radius = R2 the radius of rotating plate - C2 the radius of the space x 1.01, C3 the number of storage spaces = 360degrees÷angle, C3 the radius of the storage space = R1 the radius of rotating plate x sin (angle÷2), C3 storage container width/length= C3 the radius of the storage space×0.707, total storage container area= storage container width×storage container depth×2 (number of steps)

Untidiness detection involves the recognition and matching of storage objects to register and record specific (quantitative and qualitative) information. If there is no match, untidiness can be detected by image analysis (position information) to tell whether the placement of the storage object is in a way that would prevent the label reader from reading it. The high burden of use is due to the identification and verification of users, the confirmation of history and inventory management status during daily management, and the use of user-oriented receiving and transport vehicles through high-low control of storage containers. The burden of registration/update management and carrying-in/out by users can be reduced.

### (Example 2; Prescription pharmacy shelf robot)

Traditional prescription pharmacy shelves have three problems, in addition to the lack of a high-low control to control the height of storage objects. The first problem is that untidiness cannot be detected after personnel are carried in/out. The second problem is the high burden of use, which is caused by updating a large number of suppliers' inventory management and drug information. The third problem is that the above problem is solved for all shelves. The problem is that artificial intelligence is not being utilized. There are three waiting times between hospitals and prescription pharmacies. The first waiting time is the time it takes for the prescription issued by the doctor at the hospital to be mutually confirmed by the pharmacist at the prescription pharmacy, which can be important. The second waiting time is the time it takes for the pharmacist to dispense the medicine after the patient hands over the prescription. The third problem is the waiting time, which is caused by the task of searching for the prescribed drug among the many drugs stored at the prescription pharmacy. Artificial intelligence has not been used to reduce the waiting time mentioned above. In addition to the above, shelves that can store various storage objects according to the size of the storage object and storage conditions (room temperature, refrigerating-freezing) have not been generalized.

The prescription pharmacy shelf robot according to the embodiment of the invention includes the basic shelf structure, a component for a storage object label, a component for identifying a user and for high-low control of the storage object, a component for horizontal rotation of the storage object, or said storage container, a component for identifying an operator at the storage object, or said storage container without paper media, and a storage container (medicine box) that is suspended within the storage space from the suspension points of the rotary shelf that are positioned on the front and rear wheels. The methods include identification of user (pharmacist, or prescription pharmacy staff) by the said characterization algorithm, identification of said storage object (medicine) by the said storage object characterization algorithm, carrying-in/out of storage object by said user by the said high-low control algorithm, horizontal rotation of said storage container by the said horizontal rotation algorithm for 360-degree viewing, network connection between hospital and prescription pharmacy, detection of dynamic object by the said position information analysis algorithm, and detection of untidiness by the said position information analysis algorithm.

The prescription pharmacy shelf robot has an easy-to-remove space for all storage containers, and the user can set the reader position of the storage object according to their preference. Assuming that the total area of the storage containers that is easy to retrieve per floor area is as follows:
Assuming that the height/width and depth of the storage container are 40cm/40cm and 20cm respectively, the ratio of easily accessible storage containers to the floor area shows that two to six containers can be stored in the space of one flat area. The minimum ground clearances of the shelves of the first layer, second layer, third layer and fourth layer are 0m, 40cm, 0.8m and 1.2m respectively, and the height of the rotary shelves can range from 0.8m to 5.48m.

**[table 4]**

| (Example) Prescription pharmacy shelf robot. The first layer. | | | | | | | | | | | |
|---|---|---|---|---|---|---|---|---|---|---|---|
| shelf number | R1 rotating plate | | | | C1 storage | | | | floor space (mm²) | C1 | |
| | diameter (m) | depth (m) | radius (m) | angle | number of storage spaces | radius of the storage space (m) | storage container width/ length (m) | storage container depth (m) | | total storage container area (mm²) | floor space to storage container area ratio |
| 1 | 0.8 | 0.4 | 0.40 | 90 | 4 | 0.28 | 0.4 | 0.2 | 0.3 | 0.6 | 200% |
| 2 | 1.2 | 0.4 | 0.60 | 60 | 6 | 0.30 | 0.4 | 0.2 | 0.5 | 1.0 | 212% |
| 3 | 1.6 | 0.4 | 0.80 | 45 | 8 | 0.31 | 0.4 | 0.2 | 0.6 | 1.4 | 216% |
| 4 | 2 | 0.4 | 1.00 | 36 | 10 | 0.31 | 0.4 | 0.2 | 0.8 | 1.7 | 218% |
| 5 | 2.2 | 0.4 | 1.10 | 30 | 12 | 0.28 | 0.4 | 0.2 | 0.9 | 1.9 | 220% |
| 6 | 2.9 | 0.4 | 1.45 | 22.5 | 16 | 0.28 | 0.4 | 0.2 | 1.2 | 2.6 | 221% |
| 7 | 3.6 | 0.4 | 1.80 | 18 | 20 | 0.28 | 0.4 | 0.2 | 1.4 | 3.2 | 221% |
| 8 | 5.48 | 0.4 | 2.74 | 12 | 30 | 0.29 | 0.4 | 0.2 | 2.2 | 4.9 | 222% |

R1 diameter = the radius of rotating plate× 2, C1 number of storage spaces = 360 degrees÷angles, C1 radius of the storage space = R1 the radius of rotating plate×sin (angle÷ 2 ) , C1 storage container width/length = C1 radius of the storage space×0.707, floor space = width/length×depth, total storage container area = storage container width×storage container depth× 2 (number of steps)

**[table 5]**

| (Example) Prescription pharmacy shelf robot. The second layer. | | | | | | | | | | |
|---|---|---|---|---|---|---|---|---|---|---|
| shelf number | R2 rotating plate | | | C2 storage | | | | C 1 +C 2 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.1 | | | | | | | 4 | 0.6 | 200% |
| 2 | 0.3 | | | | | | | 6 | 1.0 | 212% |
| 3 | 0.5 | 0.40 | 90 | 4 | 0.28 | 0.4 | 0.2 | 12 | 2.0 | 316% |
| 4 | 0.7 | 0.60 | 60 | 6 | 0.30 | 0.4 | 0.2 | 16 | 2.8 | 346% |
| 5 | 0.8 | 0.80 | 45 | 8 | 0.31 | 0.4 | 0.2 | 20 | 3.3 | 377% |
| 6 | 1.2 | 1.00 | 36 | 10 | 0.31 | 0.4 | 0.2 | 26 | 4.3 | 371% |
| 7 | 1.5 | 1.45 | 22.5 | 16 | 0.28 | 0.4 | 0.2 | 36 | 5.7 | 399% |
| 8 | 2.4 | 1.80 | 18 | 20 | 0.28 | 0.4 | 0.2 | 50 | 8.0 | 367% |

R2 the excess radius = R1 the radius of rotating plate - C1 the radius of the space× 1.01, C2 number of storage spaces = 360 degrees÷angle, C2 radius of the storage space = R1the radius of rotating plate× sin (angle÷ 2) , C2 storage container width/length = C 2 radius of the storage space×0.707, total storage container area = storage container width×storage container depth× 2 (number of steps)

**[table 6]**

| (Example) Prescription pharmacy shelf robot. The third layer. | | | | | | | | | | |
|---|---|---|---|---|---|---|---|---|---|---|
| shelf number | R3 rotating plate | | | C3 storage | | | | C 1 +C 2 + C3 | | |
| | the excess radius (m) | radius (m) | angle | number of storage spaces | radius of the storage space (m) | storage container width/ length (m) | storage container width! length (m) | number of storage spaces | total storage container area (mm²) | floor space to storage container area ratio |
| 1 | 0.1 | | | | | | | 4 | 0.6 | 200% |
| 2 | 0.3 | | | | | | | 6 | 1.0 | 212% |
| 3 | 0.2 | | | | | | | 12 | 2.0 | 316% |
| 4 | 0.4 | | | | | | | 16 | 2.8 | 346% |
| 5 | 0.5 | 0.40 | 90 | 4 | 0.28 | 0.4 | 0.2 | 24 | 4.0 | 450% |
| 6 | 0.9 | 0.80 | 45 | 8 | 0.31 | 0.4 | 0.2 | 34 | 5.7 | 491% |
| 7 | 1.2 | 1.00 | 36 | 10 | 0.03 | 0.0 | 0.2 | 46 | 7.5 | 520% |
| 8 | 2.2 | 1.80 | 18 | 20 | 0.28 | 0.4 | 0.2 | 70 | 11.2 | 512% |

R3 the excess radius = R2 the radius of rotating plate - C2 the radius of the space× 1.01, R3 width/length = the radius of rotating plate× 2, C3 number of storage spaces = 360 degrees÷angle, C3 radius of the storage space = R1 the radius of rotating plate×sin (angle÷ 2 ) , C3 storage container width/length = C3 radius of the storage space×0.707, total storage container area = storage container width×storage container depth× 2 (number of steps)

**[table 7]**

| (Example) Prescription pharmacy shelf robot. The fourth layer. | | | | | | | | | | |
|---|---|---|---|---|---|---|---|---|---|---|
| shelf number | R4 rotating plate | | | C4 storage | | | | C 1+C 2 +C3+C4 | | |
| | the excess radius (m) | radius (m) | angle | number of storage spaces | radius of the storage space (m) | storage container width/ length (m) | number of storage spaces | number of storage spaces | total storage container area (mm²) | floor space to storage container area ratio |
| 1 | 0.1 | | | | | | | 4 | 0.6 | 200% |
| 2 | 0.3 | | | | | | | 6 | 1.0 | 212% |
| 3 | 0.2 | | | | | | | 12 | 2.0 | 316% |
| 4 | 0.4 | | | | | | | 16 | 2.8 | 346% |
| 5 | 0.2 | | | | | | | 24 | 4.0 | 450% |
| 6 | 0.6 | 0.40 | 90 | 4 | 0.28 | 0.4 | 0.2 | 38 | 6.3 | 546% |
| 7 | 1.2 | 0.80 | 45 | 8 | 0.31 | 0.4 | 0.2 | 54 | 8.9 | 617% |
| 8 | 1.9 | 1.80 | 18 | 20 | 0.28 | 0.4 | 0.2 | 90 | 14.4 | 658% |

R4the excess radius = R3 the radius of rotating plate - C3 radius of the storage space× 1.01, R4 width/length = the radius of rotating plate× 2, C4 number of storage spaces = 360 degrees÷angle, C4 radius of the storage space = R1the radius of rotating plate×sin (angle÷ 2 ) , C4 storage container width/length = C4 the radius of the storage space×0.707, total storage container area = storage container width×storage container depth× 2 (number of steps)

Detection of untidiness involves the registration and history of specific (quantitative and qualitative) information, and image analysis (position information) can reveal whether the placement of a storage object is in a way that would prevent a label reader from reading it. The high burden of use is due to the confirmation of history and inventory management status during daily management, and transportation during inventory. The burden can be reduced by mutual confirmation between prescriptions issued by doctors at the hospital and pharmacists at the prescription pharmacy via an internet connection, the task of searching for prescribed medicines among the many medicines stored at the prescription pharmacy, inventory management, accurate information on the supplier's medicines, and setting the medicines at a height that is easy for users to carry in/out and easy to take out.

### (Example 3: Hospital medical product management shelf robot)

In addition to the lack of high-low control to control the height of storage objects (medicines, medical equipment, medical supplies, medical consumables, etc.), conventional hospital medical product management shelves have three problems. The first problem is the detection of the untidiness of storage objects, and it is not possible to detect untidiness after a user carries them in/out. The second problem is the high burden of use. A user of storage objects of medical products (medicines, medical devices, medical equipment, medical consumables, etc.) in a hospital uses the products in an environment where a plurality of users carry in/out the storage objects while being careful to avoid medical errors in their busy daily work. Although a management shelf using electronic devices is useful for managing a plurality of medical products, the use or management of the storage objects imposes a high burden in the presence of information in which different labels are attached to the products by each manufacturer. The information is composed of various information such as the manufacturer, lot, drug price, barcode, specifications, expiration date, etc., and this information changes rapidly with the release of new products, and the burden of managing it is imposed. The third problem is that artificial intelligence is not being used to solve the above problems for all shelves between areas within the hospital (warehouses, patients, rooms, wards) and outside the hospital (pharmaceutical companies, medical supply suppliers, prescription pharmacies when conducting clinical trials). In addition, shelves that can store storage objects of various sizes according to the size of the storage object have not been generalized.

The in-hospital medical product management shelf robot according to an embodiment of the invention is provided with the basic shelf structure, a component for forward/backward movement of a storage object, or said storage container, a component for identifying a user and for high-low control of the storage object, a component for transporting the storage object, a component for forward/backward movement of the storage object, or said storage container, a component for horizontal rotation of the storage object, or said storage container, a component for identifying an operator at the storage object, or said storage container without a paper medium, a storage container (medical product box) suspended within a storage space from a suspension point of a rotary shelf positioned on the front and rear wheels, and a component for identifying an operator at the storage object, or said storage container without a paper medium. The methods include identifying users (users in the hospital) using a characterization algorithm, identifying said storage objects (medical products in the hospital) using a storage object characterization algorithm, transporting said storage objects in a transport vehicle using a said driving algorithm, carrying-in/out of storage objects by said users using a said high-low control algorithm, horizontal rotation using a said horizontal rotation algorithm for a 360-degree viewing angle, network connection inside and outside the hospital using a said position information analysis algorithm, detecting dynamic objects using a said position information analysis algorithm, and detecting untidiness using a said position information analysis algorithm.

The medical product management shelf robot in the hospital has a storage container area that is easy to take out, and the reader position of the storage object can be set according to the user's preference. The total area of the storage container that is easy to take out per floor area is as follows, assuming two levels of medical product boxes:
The ratio of easily accessible storage containers to floor space, with the width, height, and depth of the storage containers assumed to be 70cm and 35cm, respectively, indicates that two to five containers can be stored in the space of one flat area. The minimum ground clearances for the first layer only shelves (shelf numbers 1 and 2), the second layer shelves (shelf numbers 3 and 4) and the third layer are 0m, 70cm, and 1.4m, respectively, and rotary shelves with diameters ranging from approximately 1.4m to 5.04m can be used.

**[table 8]**

| (Example) Hospital medical product management shelf robot. The first layer. | | | | | | | | | | | |
|---|---|---|---|---|---|---|---|---|---|---|---|
| shelf number | R1 rotating plate | | | | C1 storage | | | | floor space (mm²) | C1 | |
| | diameter (m) | depth (m) | radius (m) | angle | number of storage spaces | radius of the storage space (m) | storage container width/ length (m) | storage container depth (m) | | total storage container area (mm²) | floor space to storage container area ratio |
| 1 | 1.4 | 0.7 | 0.70 | 90 | 4 | 0.49 | 0.7 | 0.35 | 1.0 | 2.0 | 200% |
| 2 | 1.98 | 0.7 | 0.99 | 60 | 6 | 0.50 | 0.7 | 0.35 | 1.4 | 2.9 | 212% |
| 3 | 2.6 | 0.7 | 1.30 | 45 | 8 | 0.50 | 0.7 | 0.35 | 1.8 | 3.9 | 216% |
| 4 | 3.2 | 0.7 | 1.60 | 36 | 10 | 0.49 | 0.7 | 0.35 | 2.2 | 4.9 | 218% |
| 5 | 3.8 | 0.7 | 1.90 | 30 | 12 | 0.49 | 0.7 | 0.35 | 2.7 | 5.8 | 220% |
| 6 | 5.04 | 0.7 | 2.52 | 22.5 | 16 | 0.49 | 0.7 | 0.35 | 3.5 | 7.8 | 221% |

R1 diameter = the radius of rotating plate×, C1 number of storage spaces = 360 degrees÷angle, C1 radius of the storage space = R1 the radius of rotating plate×sin(angle÷2), C1 storage container width/length = C1 radius of the storage space×0.707, floor space = width/length×depth, total storage container area = storage container width×storage container depth×2(number of steps)

**[table 9]**

| (Example) Hospital medical product management shelf robot. The second layer. | | | | | | | | | | |
|---|---|---|---|---|---|---|---|---|---|---|
| shelf number | R2 rotating plate | | | C2 storage | | | | C1+C2 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.2 | | | | | | | 4 | 2.0 | 200% |
| 2 | 0.5 | | | | | | | 6 | 2.9 | 212% |
| 3 | 0.8 | 0.7 | 90 | 4 | 0.49 | 0.70 | 0.35 | 12 | 5.9 | 324% |
| 4 | 1.1 | 0.99 | 60 | 6 | 0.50 | 0.70 | 0.35 | 16 | 7.8 | 350% |
| 5 | 1.4 | 1.30 | 45 | 8 | 0.50 | 0.70 | 0.35 | 20 | 9.8 | 368% |
| 6 | 2.0 | 1.90 | 30 | 12 | 0.49 | 0.70 | 0.35 | 28 | 13.6 | 386% |

R2 the excess radius = R1 the radius of rotating plate - C1 the radius of the space × 1.01, C2 number of storage spaces = 360 degrees÷angle, C2 radius of the storage space = R1 the radius of rotating plate×sin(angle÷2), C2 storage container width/length = C2 radius of the storage space×0.707, total storage container area = storage container width×storage container depth×2(munber of steps)

**[table 10]**

| (Example) Hospital medical product management shelf robot. The third layer. | | | | | | | | | | |
|---|---|---|---|---|---|---|---|---|---|---|
| shelf number | R3 rotating plate | | | C3 storage | | | | C1+C2 + C3 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.2 | | | | | | | 4 | 2.0 | 200% |
| 2 | 0.5 | | | | | | | 6 | 2.9 | 212% |
| 3 | 0.3 | | | | | | | 12 | 5.9 | 324% |
| 4 | 0.6 | | | | | | | 16 | 7.8 | 350% |
| 5 | 0.9 | 0.71 | 90 | 4 | 0.50 | 0.70 | 0.35 | 24 | 11.8 | 442% |
| 6 | 1.5 | 1.30 | 45 | 8 | 0.50 | 0.70 | 0.35 | 36 | 17.6 | 498% |

R3 the excess radius = R2 the radius of rotating plate - C2 the radius of the space×1.01, R3 width/length = the radius of rotating plate×2, C3 number of storage spaces = 360 degrees÷angle, C3 radius of the storage space = R1 the radius of rotating plate×sin(angle÷2), C3 storage container width/length = C3 radius of the storage space×0.707, total storage container area = storage container width×storage container depth×2(number of steps)

The detection of untidiness is a registration and history of specific (quantitative and qualitative) information and can clarify whether the placement of the storage object is preventing the label reader from reading it. A plurality of users in a hospital use the product in an environment where they carry in/out storage objects while being careful to avoid medical errors in their busy daily work. For example, the burden of managing information that is attached to products by different manufacturers, which consists of a lot of information such as the manufacturer, lot, drug price, barcode, specifications, expiration date, etc., is reduced, and the burden of use can be reduced by registering and updating, inventory management, user-oriented receipt, inventory management of consumables, and daily burdens between each department in the hospital and between outside the hospital (pharmaceutical companies when conducting clinical trials, medical supply suppliers, prescription pharmacies).

### (Example 4; diagnosis-treatment-surgery shelf robot)

In addition to the lack of high-low control to control the height of the storage object, conventional diagnosis-treatment-surgery shelves have three problems. The first problem is the detection of disorganization of the storage object, and the inability to detect untidiness after the person carrying it in/out. The second problem is the high burden it places on patients. Surgery and cell-based diagnosis and treatment require accurate work in a short time. To meet this need, the selection and removal of drugs and surgical instruments must be done accurately and quickly. Furthermore, although human anatomy is depicted in anatomical atlases in textbooks, there are variations in anatomy, physiology, and pathology between individual patients, and diagnosis, treatment, and surgery must be carried out while considering these variations. It is difficult to perform real-time diagnosis and treatment continuously at the cell level. For example, convection-enhanced delivery (CED) using nanoparticles has been proposed in recent years. This is a cell therapy that diagnoses and treats only tumor cells without affecting normal cells, as in brain tumor treatment, where the effect on normal cells directly leads to death. After brain bone resection, nanoparticle nuclear magnetic resonance agents (MRI contrast agents) are administered, and after the MRI contrast images confirm the convection to the brain tumor cells, nanoparticle-sized anticancer drugs are administered, making it possible to perform a cell-level surgical diagnosis and treatment. However, because the operation of this surgical diagnosis and treatment is on the scale of micrometers or nanometers, it is difficult to perform with the naked eye or human hands. Furthermore, while nuclear magnetic resonance imaging produces a non-specific image of the whole body due to water molecules, intravascular administration of gadolinium contrast agent results in intravascular convection, and when polymers convert into the cancer blood vessels around the cancer, they become trapped (EPR effect). However, no cell-level analysis has been performed after extracting dispersive images on the micrometer or nanometer scale using artificial intelligence. The third problem is that it is important to respond to time-series events that may change on a cell-level basis in diagnosis-treatment-surgery in emergency medical settings such as surgery, and artificial intelligence has not been used to solve the above problem for all shelves. In addition to the above, shelves that can store storage objects of various sizes depending on the size of the storage object and can be used for said surgical diagnosis and treatment have not been generalized.

The diagnosis-treatment-surgery shelf robot according to the embodiment of the invention comprises the basic shelf structure, a component for a storage object label, a component for identifying a user and controlling the high-low of the storage object, a component for moving the storage object or said storage container forward/backward, a component for identifying an operator at the storage object or said storage container without paper media, a storage container (diagnosis-treatment-surgery toolbox) suspended in the storage space from a suspension point of a rotary shelf positioned on the front and rear wheels, a three-dimensional image projector (e.g., a hologram) that projects a standard anatomical diagram, and a patient area magnifier that projects a magnified image of the patient's affected area, and an image capturer (camera) that captures an image of the patient's affected area as an accessory to the shelf. ) and a magnetic resonance imaging (MRI) device that images the affected area of the patient. The methods include identifying the user (doctor, or medical staff) using a characterization algorithm, identifying the storage object (diagnosis-treatment-surgery tools) using a storage object characterization algorithm, connecting the carrying-in/out by the user using the said high-low control algorithm to the enlarged images of the affected area of the patient using the said high-low control algorithm, detecting gadolinium metal in images taken by the said MRI device using the said dispersive material extraction algorithm, and detecting untidiness using the said position information analysis algorithm.

The diagnosis-treatment-surgery shelf robot's entire storage container area becomes an easy-to-remove space, and the reader position of the storage object can be set according to the user's preference. The total area of the easy-to-remove storage containers per floor area is approximately 40cm/40cm in width/length and depth, assuming one medical product box as one layer. The ratio of the easy-to-remove storage containers to the floor area, which is assumed to be 40cm, shows that two to five items can be stored in the space of one flat area. The minimum ground clearances for the first layer, the second layer, and the third layer are 0m, 0.4m, 0.8m, and 1.2m, respectively, and the shelf diameter that an adult can use is approximately 2.2m to 2.9m.

**[table 11]**

| (Example) Diagnosis-treatment-surgery shelf robot. The first layer. | | | | | | | | | | | |
|---|---|---|---|---|---|---|---|---|---|---|---|
| shelf number | R1 rotating plate | | | | C1 storage | | | | floor space (mm²) | C1 | |
| | diameter (m) | depth (m) | radius (m) | angle | number of storage spaces | radius of the storage space (m) | storage container width/ length (m) | storage container depth (m) | | total storage container area (mm²) | floor space to storage container area ratio |
| 1 | 0.8 | 0.4 | 0.4 | 90 | 4 | 0.28 | 0.4 | 0.4 | 0.3 | 0.6 | 200% |
| 2 | 1.2 | 0.4 | 0.6 | 60 | 6 | 0.30 | 0.4 | 0.4 | 0.5 | 1.0 | 212% |
| 3 | 1.4 | 0.4 | 0.7 | 45 | 8 | 0.27 | 0.4 | 0.4 | 0.6 | 1.2 | 216% |
| 4 | 1.8 | 0.4 | 0.9 | 36 | 10 | 0.28 | 0.4 | 0.4 | 0.7 | 1.6 | 218% |
| 5 | 2.2 | 0.4 | 1.1 | 30 | 12 | 0.28 | 0.4 | 0.4 | 0.9 | 1.9 | 2200% |
| 6 | 2.9 | 0.4 | 1.45 | 22.5 | 16 | 0.28 | 0.4 | 0.4 | 1.2 | 2.6 | 221% |

R1 diameter = the radius of rotating plate×2, C1 number of storage spaces = 360 degrees ÷ angle, C1 radius of the storage space = R1 the radius of rotating plate×sin(angle÷2), C1 storage container width/length = C1 radius of the storage space×0.707, floor space = width/length×depth, total storage container area = storage container width×storage container depth× 1(number of steps)

**[table 12]**

| (Example) Diagnosis-treatment-surgery shelf robot. The second layer. | | | | | | | | | | |
|---|---|---|---|---|---|---|---|---|---|---|
| shelf numbe r | R2 rotating plate | | | C2 storage | | | | C1+C2 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.1 | | | | | | | 4 | 0.6 | 200% |
| 2 | 0.3 | | | | | | | 6 | 1.0 | 212% |
| 3 | 0.4 | | | | | | | 8 | 1.2 | 216% |
| 4 | 0.6 | 0.4 | 90 | 4 | 0.28 | 0.4 | 0.4 | 14 | 2.2 | 307% |
| 5 | 0.8 | 0.6 | 60 | 6 | 0.30 | 0.4 | 0.4 | 18 | 3.0 | 335% |
| 6 | 1.2 | 1.1 | 30 | 12 | 0.28 | 0.4 | 0.4 | 28 | 4.5 | 387% |

R2 the excess radius = R1 the radius of rotating plate - C1 the radius of the space× 1.01, C2 number of storage spaces = 360 degrees÷angle, C2 radius of the storage space = R1 the radius of rotating plate×sin(angle÷2), C2 storage container width/length = C2 radius of the storage space×0.707, total storage container area = number of storage spaces×storage container width×storage container depth× 1(number of steps)

**[table 13]**

| (Example) Diagnosis-treatment-surgery shelf robot. The third layer. | | | | | | | | | | |
|---|---|---|---|---|---|---|---|---|---|---|
| shelf number | R3 rotating plate | | | C3 storage | | | | C1+C2 + C3 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.1 | | | | | | | 4 | 0.6 | 200% |
| 2 | 0.3 | | | | | | | 6 | 1.0 | 212% |
| 3 | 0.4 | | | | | | | 8 | 1.2 | 216% |
| 4 | 0.3 | | | | | | | 14 | 2.2 | 307% |
| 5 | 0.5 | 0.4 | 90 | 4 | 0.28 | 0.4 | 0.4 | 22 | 3.6 | 408% |
| 6 | 0.9 | 0.6 | 60 | 6 | 0.30 | 0.4 | 0.4 | 34 | 5.5 | 475% |

R3 the excess radius = R2 the radius of rotating plate - C2 the radius of the space×1.01, R3 width/length = the radius of rotating plate×2, C3 number of storage spaces = 360 degrees÷angle, C3 radius of the storage space = R1 the radius of rotating plate×sin(angle÷2), C3 storage container width/length = C3 radius of the storage space×0.707, total storage container area = storage container width×storage container depth× 1(number of steps)

**[table 14]**

| (Example) Diagnosis-treatment-surgery shelf robot. The fourth layer. | | | | | | | | | | |
|---|---|---|---|---|---|---|---|---|---|---|
| shelf number | R4 rotating plate | | | C4 storage | | | | C1+C2 + C3+C4 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.1 | | | | | | | 4 | 0.6 | 200% |
| 2 | 0.3 | | | | | | | 6 | 1.0 | 212% |
| 3 | 0.4 | | | | | | | 8 | 1.2 | 216% |
| 4 | 0.3 | | | | | | | 14 | 2.2 | 307% |
| 5 | 0.2 | | | | | | | 22 | 3.6 | 408% |
| 6 | 0.6 | 0.40 | 90 | 4 | 0.28 | 0.4 | 0.4 | 38 | 6.2 | 530% |

R4 the excess radius = R3 the radius of rotating plate - C3 the radius of the space×1.01, R4 width/length = the radius of rotating plate× 2 , C4 number of storage spaces = 360 degrees÷angle, C4 radius of the storage space = R1 the radius of rotating plate×sin(angle÷2), C4 storage container width/length = C4 radius of the storage space×0.707, total storage container area = storage container width×storage container depth×1(number of steps)

Detection of untidiness can be achieved by registering and tracking specific (quantitative and qualitative information), or by image analysis (position information) to determine whether the placement of a storage object is preventing a label reader from reading it. The high burden of use can be reduced by registering and updating, inventory management, user-oriented receipt, and stereoscopic confirmation of the patient's area in the field of view of the two surgeons. Furthermore, while there are general forms of human anatomy in textbooks, there are variations in anatomy, physiology, and pathology for each patient. Taking these variations into consideration, surgery by two surgeons with different viewing directions requires image support in different directions. By projecting a three-dimensional image that serves as a standard anatomical map of the surgical site and comparing the magnified surgical image of the affected area of the patient during surgery, 360-degree treatment is possible. Most of the products used on the diagnosis-treatment-surgery shelf are in a sterilized environment and are arranged in a storage container so that surgical tools can be quickly removed. Depending on the surgical situation, the surgeon can set the height of the removal door to a position that makes it easy to remove tools by rotating the rotary shelf whether standing or sitting. By having two removal doors on the left and right, it is possible to provide standard and patient-specific image support of the affected area that is suitable for each surgeon's field of view (image support suitable for the field of view) even in situations where two surgeons are working together. Images outside the shelf are extracted as gadolinium metal images. If the nanoparticles after administration of the diagnostic drug, which is a polymer gadolinium metal-bound nanoparticle, are bound bodies and decomposed polymer-bound bodies, their dispersibility should be on the nanometer or micrometer scale, and the dispersibility of the nanoparticles should be different from that after conventional low-molecular-weight gadolinium metal administration. It is expected that the dispersibility after intravascular administration will be different from that after conventional low-molecular-weight gadolinium metal administration. On the other hand, intravascular administration of nanoparticles is predicted to cause the accumulation of polymeric substances around the cancer cell mass. If the nuclear magnetic resonance image of nanoparticle gadolinium metal and its polymer conjugate is made using a dispersive extraction algorithm, it will identify abnormal areas around the cancer cell mass, and also prove the phenomenon of polymers converting and accumulating in the cancer blood vessels around the cancer (EPR effect), resulting in a fine image linked to the progression and severity of the cancer disease. On the other hand, convection-enhanced delivery (CED) using nanoparticles allows diagnosis, treatment, and surgery on abnormal cells only, without affecting normal cells, and the effectiveness of subsequent treatment can be assessed on a cell-by-cell basis. Furthermore, the above-mentioned diagnosis-treatment-surgery can be performed in emergency medical settings such as surgery to respond to time-series events that may change on a cell-by-cell basis.

### (Example 5; room temperature, indoor warehouse shelf robot, and refrigerating-freezing, indoor warehouse shelf robot)

Conventional room temperature, indoor warehouse shelves, and refrigerating-freezing, indoor warehouse shelves are mainly used in laboratories, factories, warehouses, and transportation, and involve both carrying/out tasks by humans and carrying/out tasks by carriers. In addition to the lack of high-low control to control the height of storage objects, there are three problems. The first problem is that the height of the storage object is not set to an appropriate level for the carrier to carry in and out. Forklifts are regulated to have a standard maximum lifting height of 3m or 3.3m, but the driver can only confirm that the fork is level with the pallet from the seat at a height of about 2m, and the driver performs this precise operation by repeatedly inserting the fork into the pallet through trial and error. Furthermore, there are no shelves for transporting goods between positions of different heights (between the transport truck and the warehouse loading/unloading shelves, or between the ground and the ship). The second problem is that untidiness cannot be detected after the person in charge carries in/out. This untidiness occurs because the position (height or width) of the fork at the bottom of the incoming goods is not memorized, so that position memory is not used at the time of the next shipment. The third problem is the high burden. In laboratories, factories, warehouses, and transportation, forklifts are mainly used for warehouse work, which involves repeatedly loading and unloading items from multi-tiered shelves. This work requires accurate visual work and attention to safety, and in many cases, a plurality of workers perform the loading and unloading work, which requires the concentration and skill of the workers. When a plurality of workers perform the loading and unloading work, it is a high burden to carry out the work efficiently while avoiding collisions between transport vehicles according to the planned loading and unloading schedule. Furthermore, the working environment is harsh in refrigerating-freezing indoor warehouses where storage objects that require strict temperature control (such as green and yellow vegetables) are kept in strict temperature environments, and the receiving and shipping work is a heavy burden even if the workers take measures against the cold. The third problem is that artificial intelligence has not been utilized to solve the above problem for all shelves. In addition, shelves that can store various sizes of storage objects according to the size of the storage object have not been generalized.

The room temperature indoor warehouse shelf robot and refrigerating-freezing indoor warehouse shelf robot according to the embodiment of the invention includes the basic shelf structure, a component for a storage object label, a component for identifying a user and controlling the high-low of the storage object, a component for transporting the storage object, or storage container, a component for forward/backward movement of the storage object, or said storage container, a component for shortening the moving distance and moving time to the storage object, or said storage container, and a storage container (cargo, or box of manufacturing raw materials) suspended within the storage space from the suspension points of the rotary shelf positioned on the front and rear wheels, The means include identifying the user (carrier, or person in charge) using a characterization algorithm, identifying the said storage object using a storage object characterization algorithm, transporting the said storage object by a transport vehicle using a said driving algorithm, rearranging the storage object, carrying-in/out by the said user using a said high-low control algorithm, horizontal rotation using a said horizontal rotation algorithm for a 360-degree viewing angle, equalizing the environment between storage containers on a shelf using a said environment equalization algorithm, shortening the said transport distance by said shelf arrangement, detecting dynamic objects using a said position information analysis algorithm, and detecting untidiness using a said position information analysis algorithm.

In addition, components for transporting storage objects or storage containers include a vehicle-mounted instruction device, a transceiver that enables a network connection between the vehicle-mounted instruction device and the operation electronics, a label reader and image capture device in the code technology installed in the vehicle-mounted instruction device, an image capture device (camera) that captures the route to determine the route of the transport vehicle, a transceiver that enables a network connection between the central computer and the operation electronics and the transport vehicle, and a front and rear moving plate and a bottom plate (pallet) for the storage container at the bottom of the storage container. The position where the fork of the transport vehicle is inserted into the pellet is determined by reading the code installed on the front and rear moving plate, or by image reading and recognition by the camera, and the transporter's movement is determined by operating the operating electronic device, or by a user's signal, and a moving algorithm is generated that calculates the distance and position between the manual or automatic transport vehicle and the shelf by image analysis using triangulation on the image captured by the camera installed on the stand. For the task of inserting the luggage into the pallet, a fork insertion position algorithm is generated, and the information on the height position of the storage container calculated from the image captured by the said camera in the said shelf is wirelessly transmitted to the said transport vehicle via the said central computer. A high-low control algorithm is then generated to determine the height position at which the luggage should be inserted into the pallet according to instructions from the said central computer at the height of the pallet position that is outside the field of view of the said transport vehicle operator. This allows the front-rear moving plate to move forward after the fork is inserted into the pallet, so that the inserted fork is at its deepest position, realizing a coordinated operation that completes the lifting task in a single step.

The room temperature indoor warehouse shelf robot, or refrigerating-freezing indoor warehouse shelf robot is assumed to store items on a single shelf in a storage container without a partition plate, and assuming the height/width and depth of the storage container to be the same as a JIS standard pallet (1.1m long and wide), and the width/height and depth of the storage container to be 1.1m/1.1m and 1.1m respectively, the ratio of easily accessible storage containers to floor area shows that two to five containers can be stored in the space of one flat area. The minimum ground clearance shelves for the first layer, second layer, and third layer in the carrying-in/out between ground levels are 0m, 1.1m, and 2.2m, respectively, and the position of the pallet bottom plate of the third layer is approximately 2.2m, so it is possible to carry out at the standard lifting height of up to 6-8m (shelf number 5-6).

**[table 15]**

| (Example) Room temperature, indoor warehouse shelf robot, and refrigerating-freezing, indoor warehouse shelf robot. The first layer. | | | | | | | | | | | |
|---|---|---|---|---|---|---|---|---|---|---|---|
| shelf number | R1 rotating plate | | | | C1 storage | | | | floor space (mm²) | C1 | |
| | diameter (m) | depth (m) | radius (m) | angle | number of storage spaces | radius of the storage space (m) | storage container width/ length (m) | storage container depth (m) | | total storage container area (mm²) | floor space to storage container area ratio |
| 1 | 2.2 | 1.1 | 1.10 | 90 | 4 | 0.78 | 1.1 | 1.1 | 2.4 | 4.8 | 200% |
| 2 | 3.1 | 1.1 | 1.56 | 60 | 6 | 0.78 | 1.1 | 1.1 | 3.4 | 7.3 | 212% |
| 3 | 4.1 | 1.1 | 2.04 | 45 | 8 | 0.78 | 1.1 | 1.1 | 4.5 | 9.7 | 217% |
| 4 | 5.0 | 1.1 | 2.52 | 36 | 10 | 0.78 | 1.1 | 1.1 | 5.5 | 12.1 | 219% |
| 5 | 6.0 | 1.1 | 3.00 | 30 | 12 | 0.78 | 1.1 | 1.1 | 6.6 | 14.5 | 219% |
| 6 | 8.0 | 1.1 | 3.99 | 22.5 | 16 | 0.78 | 1.1 | 1.1 | 8.8 | 19.4 | 221% |

R1 diameter = the radius of rotating plate×2, C1 number of storage spaces = 360 degrees÷angle, C1 radius of the storage space = R1 the radius of rotating plate×sin(angle÷2), C1 storage container width/length = C1 radius of the storage space×0.707, floor space=width/length×depth, total storage container area = storage container width×storage container depth× 1(number of steps)

**[table 16]**

| (Example) Room temperature, indoor warehouse shelf robot, and refrigerating-freezing, indoor warehouse shelf robot. The second layer. | | | | | | | | | | |
|---|---|---|---|---|---|---|---|---|---|---|
| shelf number | R2 rotating plate | | | C2 storage | | | | C1+C2 number of storage spaces | total storage container area (mm²) | floor space to storage container area ratio |
| | the excess radius (m) | radius (m) | angle | number of storage spaces | radius of the storage space (m) | storage container width/ length (m) | storage container depth (m) | | | |
| 1 | 0.3 | | | | | | | 4 | 4.8 | 200% |
| 2 | 0.8 | | | | | | | 6 | 7.3 | 212% |
| 3 | 1.2 | 1.10 | 90 | 4 | 0.78 | 1.10 | 1.10 | 12 | 14.5 | 325% |
| 4 | 1.7 | 1.56 | 60 | 6 | 0.78 | 1.10 | 1.10 | 16 | 19.4 | 350% |
| 5 | 2.2 | 2.04 | 45 | 8 | 0.78 | 1.10 | 1.10 | 20 | 24.2 | 366% |
| 6 | 3.2 | 3.00 | 30 | 12 | 0.78 | 1.10 | 1.10 | 28 | 33.9 | 386% |

R2 the excess radius = R1 the radius of rotating plate - C1 the radius of the space×1.01, C2 number of storage spaces = 360 degrees÷angle, C2 radius of the storage space = R1 the radius of rotating plate×sin(angle÷2), C2 storage container width/length = C2 radius of the storage space×0.707, total storage container area = number of storage spaces×storage container width×storage container depth

**[table 17]**

| (Example) Room temperature, indoor warehouse shelf robot, and refrigerating-freezing, indoor warehouse shelf robot. The third layer. | | | | | | | | | | |
|---|---|---|---|---|---|---|---|---|---|---|
| shelf number | R3 rotating plate | | | C3storage | | | | C1+C2+C3 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.3 | | | | | | | 4 | 4.8 | 200% |
| 2 | 0.8 | | | | | | | 6 | 7.3 | 212% |
| 3 | 0.5 | | | | | | | 12 | 14.5 | 325% |
| 4 | 0.9 | | | | | | | 16 | 19.4 | 350% |
| 5 | 1.4 | 1.10 | 90 | 4 | 0.78 | 1.10 | 1.10 | 24 | 29.0 | 440% |
| 6 | 2.4 | 2.04 | 45 | 8 | 0.78 | 1.10 | 1.10 | 36 | 43.6 | 497% |

R3 the excess radius = R2 the radius of rotating plate - C2 the radius of the space×1.01, R3 width/length = the radius of rotating plate×2, C3 number of storage spaces = 360 degrees÷angle, C3 radius of the storage space = R1 the radius of rotating plate×sin(angle÷2), C3 storage container width/length = C3 radius of the storage space×0.707, total storage container area = storage container width×storage container depth× 1(number of steps)

Detection of untidiness allows for the registration and history of specific (quantitative and qualitative) information, facilitating inventory management. The high burden of use can be reduced by utilizing artificial intelligence, which allows for registration and update of inventory management, user-oriented receipt, and the reduction of the burden of transportation work by only inserting the fork once, as well as the burden of inventory management of consumables on all shelves via network connection, and the risk of collisions between a plurality of transport vehicles.

### (Example 6; Step-moving shelf robot)

Conventional step-moving shelves are mainly used for scaffolding work at construction sites to move construction materials between heights, and in addition to not having the ability to control the height of the storage object, they have three problems. The first problem is that they cannot detect the untidiness of the storage object after the said user carries it in/out. The untidy nature of this system means that the materials placed on the shelves are not remembered, and so the position memory is not utilized for the next task. The second problem is the high workload. Work at high altitudes on a construction site begins with building scaffolding, and workers then carry materials to the scaffolding and work site, as well as work at the work site. There is a risk of falling on the scaffolding and work site, and the shape of the scaffolding is difficult to adjust to various heights and left and right positions to accommodate the shape of the building, so workers are forced to do difficult work. The third problem is that artificial intelligence has not been utilized to solve the above problem for all shelves. In addition, shelves that can store various sizes of storage objects according to the size of the storage object have not been generalized.

The step-moving shelf robot according to the embodiment of the invention is provided with the basic shelf structure, a component for a storage object label, a component for identifying a user and controlling the high-low of the storage object, a component for transporting the storage object, or storage container, a component for forward/backward movement of the storage object, or said storage container, a component for shortening the moving distance and moving time to the storage object, or said storage container, and a storage container (cargo, or box of manufacturing raw materials) suspended within the storage space from the suspension points of the rotary shelf positioned on the front and rear wheels. The methods include identifying the user (person in charge) using a characterization algorithm, identifying the said storage object using a storage object characterization algorithm, rearranging the storage object, carrying-in/out by the said user using a said high-low control algorithm, and detecting untidiness using a said position information analysis algorithm.

In addition, as a component for checking the safety of the user inside and outside the shelf, a camera for taking pictures of the user inside and outside the shelf and a sound listening device 38 for listening to sounds around the shelf may be provided. The standard voice of the said user that is emitted around the shelf is identified by listening to the user's voice in advance, a safety search algorithm is generated at the work site, emotion analysis is performed from the transcription of the voice that the user emits while working, risk analysis is performed from images of the environment around the shelf (weather such as rain and wind), and safety is searched for and reported from the said emotion analysis and said risk analysis.

The shelf robot that can move between different levels is assumed to store items in storage containers on a single level without a partition plate, and the height/width and depth of the storage container are not necessarily assumed to be brought in by a forklift. However, assuming that the height/width and depth of the storage container are the same as that of a JIS standard pallet (1.1m in length and width) and that the width/height and depth of the storage container are 1.1m/1.1m and 1.1m respectively, the ratio of easily accessible storage containers to floor area shows that it is possible to store two to five containers in the space of one flat area. The minimum ground clearance shelves for the first layer, second layer, and third layer in the ground-level carrying-in/out are 0m, 1.1m and 2.2m, respectively. As the position of the pallet bottom plate of the third layer is approximately 2.2m, it is possible to carry out up to 6-8m (shelf number 5-6).

**[table 18]**

| (Example) Step-moving shelf robot. The first layer. | | | | | | | | | | | |
|---|---|---|---|---|---|---|---|---|---|---|---|
| shelf number | R1 rotating plate | | | | C1storage | | | | floor space (mm²) | C1 | |
| | diameter (m) | depth (m) | radius (m) | angle | number of storage spaces | radius of the storage space (m) | storage container width/ length (m) | storage container depth (m) | | total storage container area (mm²) | floor space to storage container area ratio |
| 1 | 2.2 | 1.1 | 1.10 | 90 | 4 | 0.78 | 1.1 | 1.1 | 2.4 | 4.8 | 200% |
| 2 | 3.1 | 1.1 | 1.56 | 60 | 6 | 0.78 | 1.1 | 1.1 | 3.4 | 7.3 | 212% |
| 3 | 4.1 | 1.1 | 2.04 | 45 | 8 | 0.78 | 1.1 | 1.1 | 4.5 | 9.7 | 217% |
| 4 | 5.0 | 1.1 | 2.52 | 36 | 10 | 0.78 | 1.1 | 1.1 | 5.5 | 12.1 | 219% |
| 5 | 6.0 | 1.1 | 3.00 | 30 | 12 | 0.78 | 1.1 | 1.1 | 6.6 | 14.5 | 219% |
| 6 | 8.0 | 1.1 | 3.99 | 22.5 | 16 | 0.78 | 1.1 | 1.1 | 8.8 | 19.4 | 221% |

R1 diameter = the radius of rotating plate×2, C1 number of storage spaces = 360 degrees÷angle, C1 radius of the storage space = R1 the radius of rotating plate×sin(angle÷2), C1 storage container width/length = C1 radius of the storage space×0.707, floor space = width/length×depth, total storage container area = storage container width×storage container depth

**[table 19]**

| (Example) Step-moving shelf robot. The second layer. | | | | | | | | | | |
|---|---|---|---|---|---|---|---|---|---|---|
| shelf number | R2 rotating plate | | | C2 storage | | | | C1+C2 number of storage spaces | total storage container area (mm²) | floor space to storage container area ratio |
| | the excess radius (m) | radius (m) | angle | number of storage spaces | radius of the storage space (m) | storage container width/ length (m) | storage container depth (m) | | | |
| 1 | 0.3 | | | | | | | 4 | 4.8 | 200% |
| 2 | 0.8 | | | | | | | 6 | 7.3 | 212% |
| 3 | 1.2 | 1.10 | 90 | 4 | 0.78 | 1.10 | 1.10 | 12 | 14.5 | 325% |
| 4 | 1.7 | 1.56 | 60 | 6 | 0.78 | 1.10 | 1.10 | 16 | 19.4 | 350% |
| 5 | 2.2 | 2.04 | 45 | 8 | 0.78 | 1.10 | 1.10 | 20 | 24.2 | 366% |
| 6 | 3.2 | 3.00 | 30 | 12 | 0.78 | 1.10 | 1.10 | 28 | 33.9 | 386% |

R2 the excess radius = R1 the radius of rotating plate - C1 the radius of the space× 1.01, C2 number of storage spaces = 360 degrees÷angle, C2 radius of the storage space = R1 the radius of rotating plate×sin(angle÷2), C2 storage container width/length = C2 radius of the storage space×0.707, total storage container area = number of storage spaces ×storage container width×storage container depth

**[table 20]**

| (Example) Step-moving shelf robot. The third layer. | | | | | | | | | | |
|---|---|---|---|---|---|---|---|---|---|---|
| shelf number | R3 rotating plate | | | C3 storage | | | | C1+C2+C3 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.3 | | | | | | | 4 | 4.8 | 200% |
| 2 | 0.8 | | | | | | | 6 | 7.3 | 212% |
| 3 | 0.5 | | | | | | | 12 | 14.5 | 325% |
| 4 | 0.9 | | | | | | | 16 | 19.4 | 350% |
| 5 | 1.4 | 1.10 | 90 | 4 | 0.78 | 1.10 | 1.10 | 24 | 29.0 | 440% |
| 6 | 2.4 | 2.04 | 45 | 8 | 0.78 | 1.10 | 1.10 | 36 | 43.6 | 497% |

R3 the excess radius = R2 the radius of rotating plate - C2 the radius of the space× 1.01, R3 width/length = the radius of rotating plate×2, C3 number of storage spaces = 360 degrees÷angle, C3 radius of the storage space = R1 the radius of rotating plate×sin(angle÷2), C3 storage container width/length = C3 radius of the storage space×0.707, total storage container area = storage container width×storage container depth×1(number of steps)

Detection of untidiness is the registration and history of specific (quantitative and qualitative) information and can clarify whether the placement of a storage object or object is preventing a label reader from reading it. The high burden of use can clarify factors that affect the risk of falls on scaffolding and work site operations and can reduce the risk of falls.

### (Example 7; Flying Object Shelf Robot)

Traditional flying object shelves have not been widely adopted. In outdoor agricultural production, it may be advantageous to carry out the production on a large scale to maximize productivity, but the terrain of outdoor farmland may be sloping, so it is necessary to spray seeds or chemicals (fertilizers and pesticides) on the farmland in bulk, maintain the plant, and monitor the type, position, and number of harmful animals to thin out harmful animals to minimize damage to crops caused by harmful animals. It is not easy to carry out the above tasks on vast farmland, including sloping land, without a flying object. A platform is required to take off and land the flying object and facilitate maintenance of the flying object. The flying object platform has three problems in addition to the lack of high-low control to control the height of the storage object. The first problem is that it is not possible to detect the untidiness of the flying object and the equipment and materials for its maintenance after takeoff and landing. The second problem is the high burden on the operator, and the normal flying object take-off position means that the operator must lie face-down during daily maintenance tasks (such as changing oil and cleaning the bottom of the flying object), making it difficult to facilitate such tasks. The third problem is that artificial intelligence has not been utilized to solve the above problems for all shelves.

The flying object shelf robot according to the embodiment of the invention, as components for transporting a storage object (flying object), the basic shelf structure, a storage object label component, a component for identifying a user, and for high-low control of the storage object, a component for forward/backward movement of the storage object, or said storage container, a component for shortening the moving distance and moving time to the storage container, a storage container (flying object takeoff and landing equipment) suspended within a storage space from a suspension point of a rotary shelf positioned on the front and rear wheels, a flight instruction device, a label reader in code technology on the flight instruction device, a transport instruction device, a label reader in code technology on the transport instruction device, and a control device for determining the air route of the flying object. The vehicle is equipped with a camera to take pictures of the flight route, a transmitter and receiver to enable a network connection between the said central computer and the flying object, and a storage container that stores the said flying object, with a front and rear moving plate at the bottom of the storage container and a base plate (pallet) that serves as a guide to determine the fork insertion position at the bottom of the said flying object. The means include identification of the user (person in charge) by a characterization algorithm, identification of the said storage object by a storage object characterization algorithm, carrying-in/out by the said user by the said high-low control algorithm, horizontal rotation by the said horizontal rotation algorithm for 360-degree viewing, shortening the said carrying distance by the said shelf arrangement, detection of dynamic objects by the said position information analysis algorithm, and detection of untidiness by the said position information analysis algorithm. The flying of the said flying object is controlled by the said central computer through the operation of the said operation electronic device, or a fork insertion algorithm is generated by the said user's signal, which calculates the distance and position between the said flying object and the said shelf by triangulation image analysis of the image captured by the camera installed on the said stand, and the said flying object is transported by the said operation of the said operation electronic device. A high-low control algorithm is generated to determine the height position of the pallet according to instructions from a central computer, and the flying objects are carried in and out on all shelves connected to the network. The storage containers that store the flying objects may be equipped with a device for attaching and detaching each storage container to allow them to be replaced with other storage containers.

The flying object shelf robot is expected to store objects in a storage container on a single shelf without a partition plate. If the height, width and depth of the storage container are assumed to be the same as a JIS standard pallet (1.1m in length and width), the shelf will be approximately 2.2m to 8m in size. If the width, height and depth of the storage container are 1.1m and 1.1m respectively, the ratio of easily accessible storage containers to floor space indicates that two to five containers can be stored in the space of one flat area. The minimum ground height shelves for the first layer, second layer and third layer in the carrying-in/out between ground levels are 0m, 1.1m and 2.2m respectively, and since the position of the pallet base plate of the third layer is approximately 2.2m, it is possible to carry out containers at a standard lifting height of up to 6-8m (shelf number 5-6).

**[table 21]**

| (Example) Flying object shelf robot. The first layer. | | | | | | | | | | | |
|---|---|---|---|---|---|---|---|---|---|---|---|
| shelf number | R1 rotating plate | | | | C1 storage | | | | floor space (mm²) | C1 | |
| | diameter (m) | depth (m) | radius (m) | angle | number of storage spaces | radius of the storage space (m) | storage container width/ length (m) | storage container depth (m) | | total storage container area (mm²) | floor space to storage container area ratio |
| 1 | 2.2 | 1.1 | 1.10 | 90 | 4 | 0.78 | 1.1 | 1.1 | 2.4 | 4.8 | 200% |
| 2 | 3.1 | 1.1 | 1.56 | 60 | 6 | 0.78 | 1.1 | 1.1 | 3.4 | 7.3 | 212% |
| 3 | 4.1 | 1.1 | 2.04 | 45 | 8 | 0.78 | 1.1 | 1.1 | 4.5 | 9.7 | 217% |
| 4 | 5.0 | 1.1 | 2.52 | 36 | 10 | 0.78 | 1.1 | 1.1 | 5.5 | 12.1 | 219% |
| 5 | 6.0 | 1.1 | 3.00 | 30 | 12 | 0.78 | 1.1 | 1.1 | 6.6 | 14.5 | 219% |
| 6 | 8.0 | 1.1 | 3.99 | 22.5 | 16 | 0.78 | 1.1 | 1.1 | 8.8 | 19.4 | 221% |

R1 diameter = the radius of rotating plate×2, C1 number of storage spaces = 360 degrees÷angle, C1 radius of the storage space = R1 the radius of rotating plate×sin(angle÷2), C1 storage container width/length = C1 radius of the storage space×0.707, floor space = width/length×depth, total storage container area = storage container width×storage container depth

**[table 22]**

| (Example) Flying object shelf robot. The second layer. | | | | | | | | | | |
|---|---|---|---|---|---|---|---|---|---|---|
| shelf number | R2 rotating plate | | | C2 storage | | | | C1+C2 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.3 | | | | | | | 4 | 4.8 | 200% |
| 2 | 0.8 | | | | | | | 6 | 7.3 | 212% |
| 3 | 1.2 | 1.10 | 90 | 4 | 0.78 | 1.1 | 1.1 | 12 | 14.5 | 325% |
| 4 | 1.7 | 1.56 | 60 | 6 | 0.78 | 1.1 | 1.1 | 16 | 19.4 | 350% |
| 5 | 2.2 | 2.04 | 45 | 8 | 0.78 | 1.1 | 1.1 | 20 | 24.2 | 366% |
| 6 | 3.2 | 3.00 | 30 | 12 | 0.78 | 1.1 | 1.1 | 28 | 33.9 | 386% |

R2 the excess radius = R1 the radius of rotating plate - C1 the radius of the space×1.01, C2 number of storage spaces = 360 degrees÷angle, C2 radius of the storage space = R1 the radius of rotating plate×sin(angle÷2), C2 storage container width/length = C2 radius of the storage space×0.707, total storage container area = number of storage spaces×storage container width×storage container depth

**[table 23]**

| (Example) Flying object shelf robot. The third layer. | | | | | | | | | | |
|---|---|---|---|---|---|---|---|---|---|---|
| shelf number | R3 rotating plate | | | C3 storage | | | | C1+C2+C3 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.3 | | | | | | | 4 | 4.8 | 200% |
| 2 | 0.8 | | | | | | | 6 | 7.3 | 212% |
| 3 | 0.5 | | | | | | | 12 | 14.5 | 325% |
| 4 | 0.9 | | | | | | | 16 | 19.4 | 350% |
| 5 | 1.4 | 1.10 | 90 | 4 | 0.78 | 1.1 | 1.1 | 24 | 29.0 | 440% |
| 6 | 2.4 | 2.04 | 45 | 8 | 0.78 | 1.1 | 1.1 | 36 | 43.6 | 497% |

R3 the excess radius = R2 the radius of rotating plate - C2 the radius of the space× 1.01, R3 width/length = the radius of rotating plate×2, C3 number of storage spaces = 360 degrees÷angle, C3 radius of the storage space = R1 the radius of rotating plate×sin(angle÷2), C3 storage container width/length = C3 radius of the storage space×0.707, total storage container area = storage container width×storage container depth× 1(number of steps)

Detection of untidiness will result in the registration and history of the identification (quantitative information, qualitative information) of said storage object, and will clarify the inventory management of flying objects on all shelves. Furthermore, it will make it easier for flying objects to avoid collisions with natural obstacles, artificial obstacles, and birds after flight. The high burden of use can be reduced by user-oriented acceptance. The burden of maintenance can be reduced by making it possible to use it for daily maintenance work.

### (Example 8; Motorcycle parking area and four-wheeled vehicle parking area shelf robot)

In addition to the lack of high-low control to control the height of the storage object, conventional motorcycle parking areas and four-wheeled vehicle parking areas have three problems. The first problem is that it is difficult to use them for daily maintenance work (oil change, cleaning the bottom of the vehicle, etc.), and the normal ground parking position requires maintenance work to be done in a supine position, which makes it difficult to do said maintenance work. The second problem is that it is not possible to detect the untidiness of the storage object. This results in a high risk of theft, as there are insufficient measures to prevent theft by humans, which could result in the storage object being lost. The second problem is the high burden and the ease and speed of carrying-in/out. When parking forward when entering the parking lot and then reversing when leaving the parking lot, it is not common to rotate 180 degrees to facilitate quick exit. The third problem is that artificial intelligence is not used to solve the above problems for all shelves. In addition to the above, shelves that can store various sizes of storage objects according to the size of the storage object are not common.

The parking area shelf robot for two-wheeled and four-wheeled vehicles according to the embodiment of the invention includes the basic shelf structure, a component for a storage object label, a component for identifying a user and controlling the high-low of the storage object, a component for forward/backward movement of the storage object, or said storage container, a component for horizontal rotation of the storage object, or said storage container, a component for stopping rotation of the storage object, or said storage container without gravity, and a storage container (private parking area space) inside the hanging container that is hung in the storage space from the hanging points of the rotary shelf positioned at the front and rear wheels. The methods include identification of the user (driver) by the characterization algorithm, identification of said storage object (two-wheeled and four-wheeled vehicles) by the storage object characterization algorithm, carrying-in/out by said user by said high-low control algorithm, horizontal rotation by said horizontal rotation algorithm for 360-degree viewing, vehicle inspection by user by gravity-free rotation stop of said storage object or said storage container by said stop control algorithm, detection of dynamic objects by said position information analysis algorithm, and detection of untidiness by said position information analysis algorithm.

The parking area shelf robot for motorcycles has an easy-to-remove space for all storage containers, and the reader position for the storage object can be set according to the user's preference. Assuming that the height/width/depth of the storage container are 2.2m/2.2cm and 2.2m, respectively, the ratio of easily accessible storage containers to floor area shows that two to four vehicles can be loaded and unloaded in the space of one flat area. The heights above ground at the first layer, second layer, and third layer are 0m, 2.2m, and 4.4m, respectively, so when entering and exiting between ground levels, only the first layer can be used without steps, while the second and third layers must be designed with steps in mind. On the other hand, when entering and exiting between ground levels and positions with steps (ships and trucks), the second layer and beyond can be used. Layers that allow smooth entry and exit depending on the steps are used, and it is possible to enter and exit between ground levels and places with steps.

**[table 24]**

| (Example) Motorcycle parking area shelf robot. The first layer. | | | | | | | | | | | |
|---|---|---|---|---|---|---|---|---|---|---|---|
| shelf number | R1 rotating plate | | | | C1 storage | | | | floor space (mm²) | total storage container area (mm²) | floor space to storage container area ratio |
| | diameter (m) | depth (m) | radius (m) | angle | number of storage spaces | radius of the storage space (m) | storage container width/ length (m) | storage container depth (m) | | | |
| 1 | 4.4 | 2.2 | 2.20 | 90 | 4 | 1.56 | 2.2 | 2.2 | 9.7 | 19.4 | 200% |
| 2 | 6.22 | 2.2 | 3.11 | 60 | 6 | 1.56 | 2.2 | 2.2 | 13.7 | 29.0 | 212% |
| 3 | 8.12 | 2.2 | 4.06 | 45 | 8 | 1.55 | 2.2 | 2.2 | 17.9 | 38.7 | 216% |
| 4 | 10.08 | 2.2 | 5.04 | 36 | 10 | 1.56 | 2.2 | 2.2 | 22.2 | 48.4 | 218% |
| 5 | 12 | 2.2 | 6.00 | 30 | 12 | 1.55 | 2.2 | 2.2 | 26.4 | 58.0 | 220% |
| 6 | 15.98 | 2.2 | 7.99 | 22.5 | 16 | 1.56 | 2.2 | 2.2 | 35.2 | 77.6 | 221% |

R1 diameter = the radius of rotating plate×2, C1 number of storage spaces = 360 degrees÷angle, C1 radius of the storage space = R1 the radius of rotating plate×sin(angle÷2), C1 storage container width/length = C1 radius of the storage space×0.707, floor space = width/length×depth, total storage container area = number of storage containers×storage container width×storage container depth

**[table 25]**

| (Example) Motorcycle parking area shelf robot. The second layer. | | | | | | | | | | |
|---|---|---|---|---|---|---|---|---|---|---|
| shelf number | R2 rotating plate | | | C2 storage | | | | C1+C2 number of storage spaces | total storage container area (mm²) | floor space to storage container area ratio |
| | the excess radius (m) | radius (m) | angle | number of storage spaces | radius of the storage space (m) | storage container width/ length (m) | storage container depth (m) | | | |
| 1 | 0.6 | | | | | | | 4 | 19.4 | 200% |
| 2 | 1.5 | | | | | | | 6 | 29.0 | 212% |
| 3 | 2.5 | 2.20 | 90 | 4 | 1.56 | 2.2 | 2.2 | 12 | 58.0 | 325% |
| 4 | 3.5 | 3.11 | 60 | 6 | 1.56 | 2.2 | 2.2 | 16 | 77.5 | 349% |
| 5 | 4.4 | 4.06 | 45 | 8 | 1.55 | 2.2 | 2.2 | 20 | 96.6 | 366% |
| 6 | 6.4 | 6.00 | 30 | 12 | 1.55 | 2.2 | 2.2 | 28 | 135.6 | 386% |

R2 the excess radius = R1 the radius of rotating plate - C1 the radius of the space×1.01, C2 number of storage spaces = 360 degrees÷angle, C2 radius of the storage space = R1 the radius of rotating plate×sin(angle÷2), C2 storage container width/length = C2 radius of the storage space×0.707, total storage container area = number of storage spaces×storage container width×storage container depth

**[table 26]**

| (Example) Motorcycle parking area shelf robot. The third layer. | | | | | | | | | | |
|---|---|---|---|---|---|---|---|---|---|---|
| shelf number | R3 rotating plate | | | C3 storage | | | | C1+C2+C3 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.6 | | | | | | | 4 | 19.4 | 200% |
| 2 | 1.5 | | | | | | | 6 | 29.0 | 212% |
| 3 | 0.9 | | | | | | | 12 | 58.0 | 325% |
| 4 | 1.9 | | | | | | | 16 | 77.5 | 349% |
| 5 | 2.9 | 2.20 | 90 | 4 | 1.56 | 2.20 | 2.2 | 24 | 116.0 | 439% |
| 6 | 4.8 | 4.06 | 45 | 8 | 1.55 | 2.20 | 2.2 | 36 | 174.2 | 496% |

R3 the excess radius = R2 the radius of rotating plate - C2 the radius of the space× 1.01, R3 width/length = the radius of rotating plate×2, C3 numberof storage spaces = 360 degrees÷angle, C3 radius of the storage space = R1 the radius of rotating plate×sin(angle÷2), C3 storage container width/length = C3 radius of the storage space×0.707, total storage container area = storage container width×storage container depth×2(number of steps)

The artificial intelligence-controlled parking area shelf robot for four-wheeled vehicles has a storage container area that is easy to access, and the user can set the reader position of the storage object according to their preference. Assuming that the height/width/depth of the storage container are 4.5m/4.5cm and 4.5m respectively, the ratio of easily accessible storage containers to the floor area shows that two to four vehicles can be loaded and unloaded in the space of one flat area. The heights above ground at the first, second, and third layers are 0m, 4.5m, and 9m, respectively, so only the first layer can be accessed without steps when entering and exiting the warehouse from above ground, while the second and third layers require design that takes steps into account. On the other hand, when entering and exiting between the ground and a position with a height difference (such as a ship or truck), the second layer and subsequent layers can be used. A layer that allows smooth entry and exit according to the height difference is used, and it is possible to enter and exit between the ground and a position with a height difference.

**[table 27]**

| (Example) Car parking area shelf robot. The first layer. | | | | | | | | | | | |
|---|---|---|---|---|---|---|---|---|---|---|---|
| shelf number | R1 rotating plate | | | | C1storage | | | | floor space (mm²) | total storage container area (mm²) | floor space to storage container area ratio |
| | diameter (m) | depth (m) | radius (m) | angle | number of storage spaces | radius of the storage space (m) | storage container width/ length (m) | storage container depth (m) | | | |
| 1 | 9 | 4.5 | 4.5 | 90 | 4 | 3.18 | 4.5 | 4.5 | 40.5 | 81.0 | 200% |
| 2 | 12.8 | 4.5 | 6.4 | 60 | 6 | 3.20 | 4.5 | 4.5 | 57.6 | 122.2 | 212% |
| 3 | 16.8 | 4.5 | 8.4 | 45 | 8 | 3.21 | 4.5 | 4.5 | 75.6 | 163.6 | 216% |
| 4 | 20.8 | 4.5 | 10.4 | 36 | 10 | 3.21 | 4.5 | 4.5 | 93.6 | 204.5 | 218% |
| 5 | 24.8 | 4.5 | 12.4 | 30 | 12 | 3.21 | 4.5 | 4.5 | 111.6 | 245.1 | 220% |
| 6 | 32.8 | 4.5 | 16.4 | 22.5 | 16 | 3.20 | 4.5 | 4.5 | 147.6 | 325.7 | 221% |

R1 diameter = the radius of rotating plate×2, C1 number of storage spaces = 360 degrees÷angle, C1 radius of the storage space = R1 the radius of rotating plate×sin(angle÷2), C1 storage container width/length = C1 radius of the storage space×0.707, floor space = width/length×depth, total storage container area = storage container width×storage container depth

**[table 28]**

| (Example) Car parking area shelf robot. The first layer. | | | | | | | | | | |
|---|---|---|---|---|---|---|---|---|---|---|
| shelf number | R2 rotating plate | | | C2 storage | | | | C1+C2 number of storage spaces | total storage container area (mm²) | floor space to storage container area ratio |
| | the excess radius (m) | radius (m) | angle | number of storage spaces | radius of the storage space (m) | storage container width/ length (m) | storage container depth (m) | | | |
| 1 | 1.3 | | | | 0.00 | 0.00 | 4.5 | 4 | 81.0 | 200% |
| 2 | 3.2 | | | | 0.00 | 0.00 | 4.5 | 6 | 122.2 | 212% |
| 3 | 5.2 | 4.50 | 90 | 4 | 3.18 | 4.50 | 4.5 | 12 | 244.6 | 324% |
| 4 | 7.2 | 6.36 | 60 | 6 | 3.18 | 4.50 | 4.5 | 16 | 325.9 | 348% |
| 5 | 9.2 | 8.32 | 45 | 8 | 3.18 | 4.50 | 4.5 | 20 | 407.1 | 365% |
| 6 | 13.2 | 12.30 | 30 | 12 | 3.18 | 4.50 | 4.5 | 28 | 568.8 | 385% |

R2 the excess radius = R1 the radius of rotating plate - C1 the radius of the space× 1.01, C2 number of storage spaces = 360 degrees÷angle, C2 radius of the storage space = R1 the radius of rotating plate×sin(angle÷2), C2 storage container width/length = C2 radius of the storage space×0.707, total storage container area = number of storage spaces×storage container width×storage container depth

**[table 29]**

| (Example) Car parking area shelf robot. The third layer. | | | | | | | | | | |
|---|---|---|---|---|---|---|---|---|---|---|
| shelf number | R3 rotating plate | | | C3 storage | | | | C1+C2+C3 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 1.3 | | | | | | 4.5 | 4 | 81.0 | 200% |
| 2 | 3.2 | | | | | | 4.5 | 6 | 122.2 | 212% |
| 3 | 1.9 | | | | | | 4.5 | 12 | 244.6 | 324% |
| 4 | 3.9 | | | | | | 4.5 | 16 | 325.9 | 348% |
| 5 | 5.2 | 4.50 | 90 | 4 | 3.18 | 4.5 | 4.5 | 24 | 488.1 | 437% |
| 6 | 10.0 | 6.36 | 60 | 6 | 3.18 | 4.5 | 4.5 | 34 | 690.2 | 468% |

R3 the excess radius = R2 the radius of rotating plate - C2 the radius of the space×1.01, R3 width/length = the radius of rotating plate×2, C3 number of storage spaces = 360 degrees÷angle, C3 radius of the storage space = R1 the radius of rotating plate×sin(angle÷2), C3 storage container width/length = C3 radius of the storage space×0.707, total storage container area = storage container width×storage container depth×2(munber of steps)

Detection of untidiness results in registration and history of specific (quantitative and qualitative) information, and makes clear whether the placement of storage objects is preventing label readers from reading them. Vehicles are stored in a hidden state within the vehicle so that their value cannot be recognized visually, and carrying-in/out is automatically verified by personal authentication and identification, thereby reducing the risk of theft. The high burden of use can be reduced by simplifying registration/renewal, inventory management, carrying-in/out, and by supporting daily maintenance work.

### (Example 9; Plant Cultivation Shelf Robot)

In addition to the lack of high-low control to control the height of the storage object, conventional plant cultivation shelves have three problems. The first problem is that they cannot detect the untidiness of the storage object. This is due to the lack of an evaluation system to detect the growth of the plant in response to environmental factors (temperature, lighting, nutrition), and can be attributed to the lack of an evaluation system to find and implement a cultivation method that goes beyond natural cultivation. The second problem is the high burden on the operator. One of the reasons for this is the difficulty of maintaining a uniform environment within the shelves. Even if the local temperature is adjusted, it is not possible to prevent environmental fluctuations within the shelves due to differences in height and left and right positions. The third problem is that replacing and shipping plants requires manual labor. No system can detect the indices of plant growth (shape, color, or arrangement) and decide the shipping time accordingly. The third problem is that artificial intelligence is not used to solve the above problems for all shelves. In addition to the above, shelves that can store storage objects of various sizes according to the size of the storage object are not generalized.

The plant cultivation shelf robot according to the embodiment of the invention includes the basic shelf structure, a component for a storage object label, a component for identifying a user and controlling the high-low of the storage object, a component for transporting the storage object, a component for moving the storage object forward/backward, a component for adjusting the amount of liquid in the storage object, a component for reflecting the settings of the storage object in one place in the shelf to all storage objects in the shelf, a component for shortening the moving distance and moving time to the storage object, a component for stopping the rotation of the storage object without gravity, and a component for adjusting the horizontal position of the storage object. The storage space is equipped with a rotation component, a soil culture container on a pallet, or a hydroponic culture container suspended from the suspension points of the rotary shelf positioned on the front and rear wheels, an outer case, water and fertilizer addition ports, and LED lighting equipment. The methods are: identification of user (cultivator) by characterization algorithm, identification of storage object (plant) by storage object characterization algorithm, transportation of said storage object by a transport vehicle by said driving algorithm, carrying-in/out by said user by said high-low control algorithm, the addition of liquid fertilizer by said addition algorithm, adjustment of liquid fertilizer amount by liquid measure adjustment algorithm, horizontal rotation by said horizontal rotation algorithm for 360-degree viewing, uniformization of environment between storage containers in a shelf by said environment uniformization algorithm, shortening of transportation distance by arranging the shelf, optimization of cultivation beyond natural cultivation by said position information analysis algorithm, detection of dynamic objects by said position information analysis algorithm, and said position information analysis algorithm. The detection of untidiness by the said container for soil culture or the container for hydroponic culture may be provided with a detachment device for exchanging each storage container with another storage container.

The plant cultivation shelf robot has an easy-to-remove space for all storage containers, and the user can set the reader position of the storage object according to his/her preference. The total area of the storage containers that are easy to take out per floor area is as follows, assuming that the plant cultivation pot is one layer:
The ratio of the storage containers that can be easily removed to the floor area, assuming that the width/length and depth of the storage containers are 40cm/40cm and 40cm, respectively, indicates that two to five storage containers can be stored in the space of one shelf of plant cultivation on flat land. The minimum ground heights of the first layer, the second layer, the third layer, and the fourth layer are 0m, 0.4m, and 0.8m, respectively, and the shelf diameter that an adult can use is 0.8m to 2.9m.

**[table 30]**

| (Example) Plant cultivation shelf robot. The first layer. | | | | | | | | | | | |
|---|---|---|---|---|---|---|---|---|---|---|---|
| shelf number | R1 rotating plate | | | | C1 storage | | | | floor space (mm²) | C1 | |
| | diameter (m) | depth (m) | radius (m) | angle | number of storage spaces | radius of the storage space (m) | storage container width/ length (m) | storage container depth (m) | | total storage container area (mm²) | floor space to storage container area ratio |
| 1 | 0.80 | 0.4 | 0.4 | 90 | 4 | 0.28 | 0.4 | 0.4 | 0.3 | 0.6 | 200% |
| 2 | 1.132 | 0.4 | 0.57 | 60 | 6 | 0.28 | 0.4 | 0.4 | 0.5 | 1.0 | 212% |
| 3 | 1.48 | 0.4 | 0.74 | 45 | 8 | 0.28 | 0.4 | 0.4 | 0.6 | 1.3 | 216% |
| 4 | 1.832 | 0.4 | 0.92 | 36 | 10 | 0.28 | 0.4 | 0.4 | 0.7 | 1.6 | 218% |
| 5 | 2.188 | 0.4 | 1.09 | 30 | 12 | 0.28 | 0.4 | 0.4 | 0.9 | 1.9 | 220% |
| 6 | 2.9 | 0.4 | 1.45 | 22.5 | 16 | 0.28 | 0.4 | 0.6 | 1.2 | 2.6 | 221% |

R1 diameter = the radius of rotating plate×2, C1 number of storage spaces=360 degrees÷angle, C1 radius of the storage space = R1 the radius of rotating plate×sin{angle÷2), C1 storage container width/length = C1 radius of the storage space×0.707, floor space = width/length×depth, total storage container area=number of storage containers×storage container width×storage container depth

**[table 31]**

| (Example) Plant cultivation shelf robot. The second layer. | | | | | | | | | | |
|---|---|---|---|---|---|---|---|---|---|---|
| shelf number | R2 rotating plate | | | C2 storage | | | | C1+C2 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.1 | | | | | | | 4 | 0.6 | 200% |
| 2 | 0.3 | | | | | | | 6 | 1.0 | 212% |
| 3 | 0.5 | 0.40 | 90 | 4 | 0.28 | 0.4 | 0.4 | 12 | 1.9 | 325% |
| 4 | 0.6 | 0.57 | 60 | 6 | 0.29 | 0.4 | 0.4 | 16 | 2.6 | 350% |
| 5 | 0.8 | 0.74 | 45 | 8 | 0.28 | 0.4 | 0.4 | 20 | 3.2 | 366% |
| 6 | 1.2 | 1.09 | 30 | 12 | 0.28 | 0.4 | 0.4 | 28 | 4.5 | 386% |

R2 the excess radius = R1 the radius of rotating plate - C1 the radius of the space×1.01, C2 number of storage spaces = 360 degrees÷angle, C2 radius of the storage space = R1 the radius of rotating plate×sin(angle+2), C2 storage container width/length = C2 radius of the storage space×0.707, total storage container area = number of storage spaces×storage container width×storage container depth

**[table 32]**

| (Example) Plant cultivation shelf robot. The third layer. | | | | | | | | | | |
|---|---|---|---|---|---|---|---|---|---|---|
| shelf number | R3 rotating plate | | | C3 storage | | | | C1+C2+C3 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.1 | | | | | | | 4 | 0.6 | 200% |
| 2 | 0.3 | | | | | | | 6 | 1.0 | 212% |
| 3 | 0.2 | | | | | | | 12 | 1.9 | 325% |
| 4 | 0.3 | | | | | | | 16 | 2.6 | 350% |
| 5 | 0.5 | 0.40 | 90 | 4 | 0.28 | 0.4 | 0.4 | 24 | 3.8 | 439% |
| 6 | 0.9 | 0.74 | 45 | 8 | 0.28 | 0.4 | 0.4 | 36 | 5.8 | 496% |

R3 the excess radius = R2 the radius of rotating plate - C2 the radius of the space×1.01, R3 width/length = the radius of rotating plate×2, C3 number of storage spaces = 360 degrees÷angle, C3 radius of the storage space = R1 the radius of rotating plate×sin(angle÷2), C3 storage container width/length = C3 radius of the storage space×0.707, total storage container area = storage container width× storage container depth

Detection of untidiness results in the registration and history of specific (quantitative and qualitative) information. Factors that affect plant growth according to environmental factors (temperature, light, nutrients) can be detected, and cultivation methods that go beyond natural cultivation can be clarified. The cultivation work, maintaining a uniform shelf environment, registering and updating plants, and inventory management and shipping can reduce the high use burden. Furthermore, by attaching labels to the tracks leading to the plant factory, the burden of transportation work can be reduced by inserting the fork only once for harvesting, with the shelves and the transport vehicle working together. It is possible to realize a plant factory that covers all the processes mentioned above, including sowing, sprouting, greening, seedling selection, raising, seedling transplanting, harvesting and shipping.

### (Example 10; Experimental animal breeding shelf robot)

In addition to the lack of high-low control to control the height of the storage object, conventional experimental animal breeding shelves have three problems. The first problem is that the untidiness of the storage object cannot be detected, which is because it is difficult for the said user to record the observation of symptoms over time and that it is difficult for the experimenter to record the behavior of nocturnal animals, which they rarely have the opportunity to observe. For example, in the case of recording symptom observations after drug administration, due to the complexity of having to conduct symptom observations in parallel for each animal from the time of drug administration to the time of symptom observation, the order of administration decided conveniently by the said user tends to be on a group basis (control group → low-dose group → medium-dose group → high-dose group). In contrast, the dosing order for comparing dosing groups in the study plan takes into account pharmacokinetics and physiological diurnal variation for the evaluation of effects on animals and is on an animal-by-animal basis (1st animal in the control group → 1st animal in the low-dose group → 1st animal in the medium-dose group → 1st animal in the high-dose group → 2nd animal in the control group). However, the said dosing order cannot be adopted because observing symptoms over time is a confusing task. Analyzing the general condition of each animal over time is important in clarifying the pharmacokinetics after administration. For example, when there are multiple types of general conditions, investigating the relationship between them is important in clarifying the mechanism of action, but it is difficult to clarify this precisely. The second problem is the high burden of care, which can be divided into four categories. The first of these is rearranging the cages, providing food and water, changing the bedding, and measuring the weight of the animals, which is an indicator of their health. All of these tasks require manual labor, and there is no automation to reduce the labor required. The second high burden is maintaining a uniform environment (temperature, humidity), which is caused by the conventional fixed cage arrangement. Although it is known that the environment (lighting, temperature, humidity) caused by the arrangement of lighting and the breeding room has an impact on animals, the laborious task of changing cages to change the cage arrangement is not performed frequently. The third high burden is that it may be necessary to comply with GLP, which uses paper media, which is a cumbersome task. The third problem is that artificial intelligence has not been used to solve the above problem for all shelves. In addition, shelves that can store various sizes of storage objects according to the size of the storage object have not been generalized.

The experimental animal breeding shelf robot according to an embodiment of the invention comprises the basic shelf structure, a component for a storage object label, a component for identifying a user and for high-low control of the storage object, a component for transporting the storage object, or storage container, a component for forward/backward movement of the storage object, or said storage container, a component for weight measurement of the storage object, or said storage container, a component for reflecting the settings of the storage object, or said storage container in all the storage objects, or said storage containers in the shelf by setting the settings at one location in the shelf, a component for shortening the moving distance and moving time to the storage object, or said storage container, and an animal housing space and a cage suspended in the storage space from the suspension points of the rotary shelf positioned at the front and rear wheels. The system is equipped with a feed basket, a feed inlet that supplies feed to the top of the rotary shelf, which enables automated feed supply, a water inlet that supplies water, and storage objects (a manure tray that holds two manure trays, a transport pallet for transporting the manure trays, and a label (barcode, or QR code (registered trademark)) that is affixed to the transport pallet. The methods include identifying the user (person in charge) using the said characterization algorithm, identifying the storage object (animal) using the said storage object characterization algorithm, transporting the said attached storage object by a transport vehicle using the said driving algorithm, measuring weight using the said weight measurement algorithm, shortening the moving distance by arranging the shelf, carrying-in/out of the storage object by the said user using the said high-low control algorithm, adding feed using the said feeding algorithm, equalizing the environment between storage containers within the shelf using the said environmental equalization algorithm, shortening the transport distance by arranging the shelves, observing the said storage object using the said position information analysis algorithm, and detecting dynamic objects using the said position information analysis algorithm, and detecting of untidiness using said position information analysis algorithm.

The experimental animal breeding shelf robot assumes that the area of all storage containers is an easy-to-remove space, that the user can set the reader position of the storage object according to their preference, and that the total area of the storage containers that is easy to retrieve per floor area is stored in the storage containers on one shelf without a partition plate. The ratio of the storage containers that can be easily removed to the floor area, assuming that the width, height, and depth of the storage containers are approximately 36cm and 36cm respectively, indicates that two to four containers can be stored in the space of one flat area. The minimum ground heights of the first, second, and third layers of the artificial intelligence-controlled experimental animal breeding shelves are 0m, 36cm, and 72cm respectively, and the shelf diameter that can be used by adults is 1.64m to 3.3m. In rat cages with these shelves, each cage can be easily removed.

**[table 33]**

| (Example) Rat breeding shelf robot. The first layer. | | | | | | | | | | | |
|---|---|---|---|---|---|---|---|---|---|---|---|
| shelf number | R1 rotating plate | | | | C1 storage | | | | floor space (mm²) | C1 | |
| | diameter (m) | depth (m) | radius (m) | angle | number of storage spaces | radius of the storage space (m) | storage container width/ length (m) | storage container depth (m) | | total storage container area (mm²) | floor space to storage container area ratio |
| 1 | 1.64 | 0.36 | 0.82 | 36.0 | 10 | 0.25 | 0.36 | 0.36 | 0.6 | 1.3 | 218% |
| 2 | 1.96 | 0.36 | 0.98 | 30.0 | 12 | 0.25 | 0.36 | 0.36 | 0.7 | 1.5 | 220% |
| 3 | 2.6 | 0.36 | 1.30 | 22.5 | 16 | 0.25 | 0.36 | 0.36 | 0.9 | 2.1 | 221% |
| 4 | 3.3 | 0.36 | 1.65 | 18.0 | 20 | 0.25 | 0.36 | 0.36 | 1.2 | 2.6 | 221% |

R1 diameter = the radius of rotating plate×2, C1 number of storage spaces = 360 degrees-angle, C1 radius of the storage space = R1 the radius of rotating plate×sin(angle÷2), C1 storage container width/length = C1 radius of the storage space×0.707, floor space = width/length×depth, total storage container area=number of storage containers×storage container width×storage container depth

**[table 34]**

| (Example) Rat breeding shelf robot. The second layer. | | | | | | | | | | |
|---|---|---|---|---|---|---|---|---|---|---|
| shelf number | R2 rotating plate | | | C2 storage | | | | C1+C2 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.6 | 0.51 | 60 | 6 | 0.26 | 0.36 | 0.36 | 16 | 2.1 | 350% |
| 2 | 0.7 | 0.66 | 45 | 8 | 0.25 | 0.36 | 0.36 | 20 | 2.6 | 365% |
| 3 | 1.0 | 0.98 | 30 | 12 | 0.25 | 0.36 | 0.36 | 28 | 3.6 | 386% |
| 4 | 1.4 | 1.30 | 22.5 | 16 | 0.25 | 0.36 | 0.36 | 36 | 4.7 | 395% |

R2 diameter = the radius of rotating plate×2, C2 number of storage spaces = 360 degrees÷angle, C2 radius of the storage space = R1 the radius of rotating plate×sin(angle÷2), C2 storage container width/length = C2 radius of the storage space ×0.707, total storage container area = number of storage containers×storage container width×storage container depth

**[table 35]**

| (Example) Rat breeding shelf robot. The third layer. | | | | | | | | | | |
|---|---|---|---|---|---|---|---|---|---|---|
| shelf number | R3 rotating plate | | | C3 storage | | | | C1+C2+C3 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.3 | | | | | | | 16 | 2.1 | 350% |
| 2 | 0.5 | | | | | | | 20 | 2.6 | 365% |
| 3 | 0.8 | 0.66 | 45 | 8 | 0.25 | 0.36 | 0.36 | 36 | 4.6 | 496% |
| 4 | 1.1 | 0.82 | 36 | 10 | 0.25 | 0.36 | 0.36 | 46 | 6.0 | 504% |

R3 the excess radius = R2 the radius of rotating plate - C2 the radius of the space×1.01, R3 width/length = the radius of rotating plate×2, C3 number of storage spaces = 360 degrees÷angle, C3 radius of the storage space = R1 the radius of rotating plate×sin(angle÷2), C3 storage container width/length= C3 radius of the storage space×0 707, total storage container area = storage container width×storage container depth×2(number of steps)

Detection of untidiness is registration and history of specific (quantitative information, qualitative information), and high burden is reduction of the impact on animals due to lighting caused by changes in cage arrangement due to rotation and environment (lighting, temperature, humidity) caused by the arrangement of the breeding room, maintenance of a uniform environment in the shelves, registration and update of individual animals and inventory management, daily breeding work (changing cage arrangement, supplying water and food, changing bedding), time when workers cannot observe (lights off to lights on), or health status detection by time series (general condition observation by medication, mating observation, and weight measurement as an indicator of health status), recording of nocturnal animal behavior that experimenters rarely have the opportunity to observe, confirmation of animal mating by checking sperm in the female vagina, or fertility evaluation by confirming mating behavior that is not just dropped vaginal plugs, user-oriented position setting, and no paper media, which reduces the burden by the cumbersome work of GLP compliance, transportation, and animal observation including mating confirmation.

### (Example 11; Livestock breeding shelf robot)

Conventional livestock breeding racks have three problems in addition to the lack of high-low control for controlling the height of storage objects. The first problem is that it is not possible to detect the untidiness of the storage object, which means that it is not easy to balance the growth rate in rearing, which involves observing the condition of the animals, and the lineage management in breeding. This means that it is not easy to simultaneously advance two evaluation systems, which involve rearing healthy livestock until shipment while also taking into account the quality control of genetic relatedness in genetic breeding. Furthermore, harmful animals that affect livestock may be detected, making it necessary to eliminate them. The second problem is the high burden of use. The first of these is the need to rearrange the cages, provide food and water, change the bedding, and weigh the animals as an indicator of their health. These are all tasks that require manual labor, and may not be automated to reduce the labor required. Especially, although it is known that the fixed cage layout affects the animals due to the lighting and the layout of the breeding room, there is no laborious cage changing work to change the cage layout. The fact that it is not easy to maintain a uniform environment (temperature, humidity) is due to the lack of an automated evaluation system to suppress fluctuations within the shelves. The third problem is that artificial intelligence has not been used to solve the above problem for all shelves. In addition, shelves that can store various sizes of storage objects according to the size of the storage object have not been generalized.

The livestock breeding shelf robot according to an embodiment of the invention includes the basic shelf structure, a component for a storage object label, a component for identifying a user and for high-low control of the storage object, a component for transporting the storage object, or storage container, a component for forward/backward movement of the storage object, or said storage container, a component for weight measurement of the storage object, or said storage container, a component for reflecting settings of the storage object, or said storage container in all storage objects, or said storage containers in the shelf by setting the settings at one location in the shelf, and a component for shortening the moving distance and moving time to the storage object, or said storage container. The animal housing space and feed basket are provided in a cage suspended in the storage space from the suspension points of the rotary shelf positioned on the front and rear wheels, a feed supply port that supplies feed to the top of the rotary shelf that enables automated feed supply, a water supply port that supplies water, and attached storage objects (a manure tray that holds two manure trays, a transport pallet for transporting the manure trays, and a label (barcode, or QR code (registered trademark)) that is affixed to the transport pallet. The means include: identification of user (person in charge) by said characterization algorithm, identification of storage object (animal) by said storage object characterization algorithm, transportation of said attached storage object by a transport vehicle by said running algorithm, weight measurement by said weight measurement algorithm, shortening the moving distance by arranging the shelf, carrying-in/out of storage object by the said user by said high-low control algorithm, the addition of feed by said addition algorithm, uniformization of environment between storage containers in the shelf by said environment uniformization algorithm, shortening the transportation distance by arranging the shelves, observing the storage objects by using the position information analysis algorithm, detecting dynamic objects by using the position information analysis algorithm, and detecting untidiness by using the position information analysis algorithm.

The livestock breeding shelf robot is assumed to store livestock in a storage container on a single layer without a partition plate, and assuming the height, width, and depth of the storage container to be 2.5m, 2.5m, and 2.5m, respectively, only the first layer is easy to enter and exit on the ground, and the total area of the storage container that is easy to enter and exit shows that two animals can be stored in the space of one animal in aboveground breeding facilities.

**[table 36]**

| (Example) The livestock(cattle) breeding shelf robot. | | | | | | | | | | | |
|---|---|---|---|---|---|---|---|---|---|---|---|
| shelf number | R1 rotating plate | | | | C1 storage | | | | floor space (mm²) | total storage container area (mm²) | floor space to storage container area ratio |
| | diameter (m) | depth (m) | radius (m) | angle | number of storage spaces | radius of the storage space (m) | storage container width/ length (m) | storage container depth (m) | | | |
| 1 | 5 | 2.5 | 2.5 | 90 | 4 | 1.77 | 2.5 | 2.5 | 12.5 | 25.0 | 200% |
| 2 | 7 | 2.5 | 3.5 | 60 | 6 | 1.75 | 2.5 | 2.5 | 17.5 | 36.7 | 210% |
| 3 | 9.2 | 2.5 | 4.6 | 45 | 8 | 1.76 | 2.5 | 2.5 | 23.0 | 49.6 | 216% |

R1 diameter = the radius of rotating plate×2, C1 number of storage spaces = 360 degrees÷angle, C1 radius of the storage space = R1 the radius of rotating plate×sin(angle÷2), C1 storage container width/length = C1 radius of the storage space×0.707, floor space = width/length×depth, total storage container area = number of storage containers×storage container width×storage container depth ×2(number of steps)

Detection of untidiness allows the recognition and matching of storage objects to register and record specific (quantitative and qualitative) information. In addition, harmful animals that affect livestock can be detected, and the general condition of animals after lights-out, when owners have little opportunity to observe them, can also be recorded. The high burden of use can be reduced by maintaining a uniform environment on the shelves to balance growth in rearing and lineage management in breeding, registration/update and inventory management, daily rearing work (changing cage arrangements, providing water and feed, changing bedding), health status detection (general condition observation and weight measurement), user-oriented position setting, and automation of manure tray transportation and transportation.

### (Example 12: High oxygen, high pressure environment sleep capsule bed shelf robot)

Therapies that realize high oxygen and high pressure are being carried out to treat illnesses. The deterioration of the modern global environment has the potential to affect human health, and in the future, facilities that provide an environment for rest and sleep not only for sick people but also for healthy people with the goal of longevity may be necessary on a daily basis. Conventional high oxygen and high-pressure environment function equipment has three problems in addition to the lack of high-low control of the height of the storage object. The first problem is that it is not possible to detect the untidiness of the storage object, and it is not possible to take countermeasures through observation of the general condition of the user in the bed. There is no evaluation system that links the atmospheric environment to longevity. The second problem is the high burden of use. Since this is not a medical procedure aimed at achieving results in a traditional hospital, but rather is intended for individuals to use at home as a way to sleep without the involvement of medical professionals, it has not been generalized to be used in a way that is optimal for each individual's health condition. Furthermore, in order to detect the effects at a medical institution, it is necessary to have medical professionals on hand at all times. On the other hand, if the goal is longevity, it will be necessary to monitor physiological parameters important to health during each individual's long sleep time, and labor costs will be a burden if medical professionals are involved in the monitoring. The third problem is that artificial intelligence has not been used to solve the above problem for all shelves. In addition to the above, shelves that can store storage objects of various sizes according to the size of the storage object have not been generalized.

The high-oxygen, high-pressure environment sleep capsule bed shelf robot according to an embodiment of the invention is designed for a user (human) to enter inside, and is provided with a said basic structural body, a said storage object label component, a component for identifying the said user and controlling the high-low of the said storage object, a component for transporting the said storage object, or storage container, a component for said forward/backward movement of the said storage object or said storage container, a component for stopping the rotation of the said storage object, or said storage container without gravity, a capsule for accommodating a person inside a hanging container that is hung in storage space from the hanging points of a rotary shelf positioned on the front and rear wheels, and a removable seat consisting of a rotating plate for facilitating entry and exit of the said capsule by a user on a wheelchair and a plate for moving the rotating plate. The shelf is equipped with an oxygen supply port, an oxygen sensor, and an oxygen supply device including an oxygen cylinder that allows oxygen to be supplied to each capsule outside the shelf. The means include identifying the user (capsule operator, or person sleeping) using a characterization algorithm, identifying the storage object (person sleeping in the capsule) using a storage object characterization algorithm, transporting the storage object using a transport vehicle using a driving algorithm, allowing the user to enter and exit the storage object using a high-low control algorithm, equalizing the environment between storage containers on the shelf using an environmental equalization algorithm, shortening the transport distance by arranging the shelves, observing the storage object, detecting dynamic objects using a position information analysis algorithm, and detecting untidiness using a position information analysis algorithm.

The high oxygen and high-pressure environment capsule bed shelf robot is assumed to be stored in a storage container in a single layer without a partition plate, and assuming the height/width and depth of the storage container to be 0.7m/0.7m and 2.2m, respectively, only the first layer is easy to enter and exit from the ground, and the total area of the storage container that is easy to take out per floor area shows that two storage containers can be stored in the space of one Said capsule sleeping bed shelf on flat ground.

**[table 37]**

| (Example) High oxygen, high pressure environment sleep capsule bed shelf robot. | | | | | | | | | | | |
|---|---|---|---|---|---|---|---|---|---|---|---|
| shelf number | R1 rotating plate | | | | C1 storage | | | | floor space (mm²) | total storage container area (mm²) | floor space to storage container area ratio |
| | diameter (m) | depth (m) | radius (m) | angle | number of storage spaces | radius of the storage space (m) | storage container width/ length (m) | storage container depth (m) | | | |
| 1 | 1.4 | 2.2 | 0.7 | 90 | 4 | 0.49 | 0.7 | 2.2 | 3.1 | 6.1 | 200% |
| 2 | 2 | 2.2 | 1 | 60 | 6 | 0.50 | 0.7 | 2.2 | 4.4 | 9.3 | 212% |
| 3 | 2.6 | 2.2 | 1.3 | 45 | 8 | 0.50 | 0.7 | 2.2 | 5.7 | 12.4 | 216% |

R1 diameter = the radius of rotating plate×2, C1 number of storage spaces = 360 degrees-angle, C1 radius of the storage space = R1 the radius of rotating plate×sin(angle÷2), C1 storage container width/length = C1 radius of the storage space×0.707, floor space = width/length×depth, total storage container area=number of storage containers×storage container width×storage container depth

Detection of untidiness may lead to the registration and history of specific (quantitative and qualitative) information and monitoring of health-important physiological parameters during individual sleep periods over long periods, thus maintaining an environment for health and longevity. Furthermore, the user's general condition after the lights are turned off may also be recorded. The high burden of use may be reduced by utilizing artificial intelligence to maintain a uniform environment within the shelves, register and update storage objects and manage inventory, detect health conditions (general condition observation and oxygen concentration measurement), set user-oriented positions and transport.

### (Example 13; Bathing Rest Capsule Bed Shelf Robot)

In addition to the lack of high-low control for the height of the storage object, conventional bathing facilities for the general public, including the elderly, have three problems. The first problem is that the untidiness of the storage object cannot be detected, and countermeasures cannot be taken by observing the general state of the user in the bed while bathing. The second problem is the high burden. As the aging population increases, bathing for the elderly increases the risk of accidents while bathing, so when using existing bathing facilities, a lot of manpower is required. It may be difficult for elderly people and wheelchair users to use the facilities safely without a support person. If the goal is for wheelchair users to use the facilities at home as a way to bathe without the involvement of nurses, it is a burden for wheelchair users to bathe independently or in a way that is optimal for their health conditions with the support of their family. One of the purposes of bathing is to cleanse the body to remove dirt, but it also has a secondary purpose of relieving physical fatigue. In addition to this purpose, it can also be useful to provide an opportunity to rest. Bathing facilities that provide the three benefits mentioned above that cannot be obtained with conventional bathing facilities have not yet become common. The third problem is that artificial intelligence has not been utilized to solve the above problem for all shelves. In addition, shelves that can accommodate people of various sizes according to the size of their physique have not been generalized.

The bathing rest capsule bed shelf robot according to the embodiment of the invention is designed for a user (human) to enter inside, and is provided with a said basic structural body, a said storage object label component, a component for identifying the said user and controlling the high-low of the said storage object, a component for transporting the said storage object, or storage container, a component for said forward/backward movement of the said storage object, or said storage container, a component for stopping the rotation of the said storage object, or said storage container without gravity, a storage container (capsule bed) inside the storage space from the suspension point of the rotary shelf positioned on the front and rear wheels, and a removable sheet consisting of a rotating plate for facilitating the user in a wheelchair to enter and exit the said capsule bed and a plate for moving the rotating plate. The shelf is equipped with a camera that can take pictures of anything other than the shelf, and a device that can supply hot water and hot air to each storage container. The methods include identifying the user (bather, nurse, or bather-related person who will be the capsule bed operator) using a characterization algorithm, identifying the storage object (bather) using a storage object characterization algorithm, transporting the said storage object by a transport vehicle using the said driving algorithm, allowing the bather to enter and exit the capsule using the said high-low control algorithm when there is no caregiver, allowing the bather to enter and exit the capsule using the said high-low control algorithm when there is a caregiver, equalizing the environment between storage containers within the shelf using the said environment equalization algorithm, reducing the transport distance by arranging the shelves using the said shelf, detecting dynamic objects using the said position information analysis algorithm, observing the said storage object, and detecting untidiness using the said position information analysis algorithm.

The bathing rest capsule bed shelf robot is assumed to store a bed in a storage container on a single layer without a partition plate, and assuming the height, width, and depth of the storage container to be 0.7m, 0.7m, and 0.7m, respectively, only the first layer is easy to enter and exit on the ground, and the total area of the storage container that is easy to enter and exit shows that two beds can be stored in the space of one in aboveground facilities.

**[table 38]**

| (Example) Bathing rest capsule bed shelf robot. | | | | | | | | | | | |
|---|---|---|---|---|---|---|---|---|---|---|---|
| shelf number | R1 rotating plate | | | | C1 storage | | | | floor space (mm²) | total storage container area (mm²) | floor space to storage container area ratio |
| | diameter (m) | depth (m) | radius (m) | angle | number of storage spaces | radius of the storage space (m) | storage container width/ length (m) | storage container depth (111) | | | |
| 1 | 1.4 | 2.2 | 0.7 | 90 | 4 | 0.49 | 0.7 | 2.2 | 3.1 | 6.2 | 200% |
| 2 | 2 | 2.2 | 1 | 60 | 6 | 0.50 | 0.7 | 2.2 | 4.4 | 9.3 | 212% |
| 3 | 2.6 | 2.2 | 1.3 | 45 | 8 | *0.50* | 0.7 | 2.2 | 5.7 | 12.4 | 216% |

R1 diameter = the radius of rotating platex2, C1 number of storage spaces = 360 degrees÷angle, C1 radius of the storage space = R1 the radius of rotating plate×sin(angle÷2), C1 storage container width/length = C1 radius of the storage space×0.707, floor space = width/length×depth, total storage container area = number of storage containers×storage container width×storage container depth

Detection of untidiness may lead to registration and history of specific (quantitative and qualitative information) and image analysis (position information) may facilitate management of the health status of storage objects. The burden of use is reduced by utilizing artificial intelligence to maintain a uniform environment within the shelf, register and update storage objects, manage inventory, detect health conditions (general condition observation), set user-oriented positions, and allow transportation to and from the shelf. This shelf may reduce maintenance costs by having four or more people maintain the same environment compared to the cost spent by one person.

### (Example 14; tableware-kitchen tools shelf robot)

The conventional tableware-kitchen tools shelf has three problems in addition to the lack of high-low control to control the height of the storage object. The first problem is that it is not possible to detect the untidiness of storage objects, and it is not possible to grasp changes in the type, number, and convenient arrangement of tableware, which are rarely observed by those involved in cooking. The second problem is that it is a high burden, and most of the storage space may not always be the place where you want to take things out and may occupy a lot of space that is difficult to use. The third problem is that artificial intelligence has not been used to solve the above problem for all shelves. In addition, shelves that can store various sizes of storage objects according to the size of the storage object have not been generalized.

The tableware-kitchen tools shelf robot according to the embodiment of the invention is provided with the basic shelf structure, a component for a storage object label, a component for identifying a user and controlling the high-low of the storage object, and a storage container (tableware-kitchen tools) that is suspended in the storage space from the suspension points of the rotary shelf positioned on the front and rear wheels. The methods include identifying the user (the person carrying the dishpan in/out) using a characterization algorithm, identifying the said storage object using a storage object characterization algorithm, carrying-in/out by the said user using a said high-low control algorithm, detecting dynamic objects using a said position information analysis algorithm, and detecting untidiness using a said position information analysis algorithm.

The tableware-kitchen tools shelf robot is assumed to store a tableware-kitchen tool in a storage container on a single layer without a partition plate, and assuming the height, width, and depth of the storage container to be 36cm, 36cm, and 36cm, respectively, only the first layer is easy to enter and exit on the flat surface, and the total area of the storage container that is easy to enter and exit shows that two tableware-kitchen tools can be stored in the space of one tableware-kitchen tool in flat surface facilities.

**[table 39]**

| (Example) Tableware-kitchen tools shelf robot. The first layer. | | | | | | | | | | | |
|---|---|---|---|---|---|---|---|---|---|---|---|
| shelf number | R1 rotating plate | | | | C1 storage | | | | floor space (mm²) | C1 | |
| | diameter (m) | depth (m) | radius (m) | angle | number of storage spaces | radius of the storage space (m) | storage container width/ length (m) | storage container depth (m) | | total storage container area (mm²) | floor space to storage container area ratio |
| 1 | 2.6 | 0.36 | 1.3 | 22.5 | 16 | 0.25 | 0.36 | 0.36 | 0.9 | 2.1 | 221% |
| 2 | 3.3 | 0.36 | 1.65 | 18.0 | 20 | 0.26 | 0.36 | 0.36 | 1.2 | 2.6 | 221% |

R1 diameter = the radius of rotating plate×2, C1 number of storage spaces = 360 degrees÷angle, C1 radius of the storage space = R1 the radius of rotating plate×sin(angle÷2), C1 storage container width/length = C1 radius of the storage space×0.707, floor space = width/length×depth, total storage container area = number of storage containers×storage container width×storage container depth ×2(number of steps)

**[table 40]**

| (Example) Tableware-kitchen tools shelf robot. The second layer. | | | | | | | | | | |
|---|---|---|---|---|---|---|---|---|---|---|
| shelf number | R2 rotating plate | | | C2 storage | | | | C1+C2 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 1.0 | 1.0 | 30 | 12 | 0.26 | 0.36 | 0.36 | 28 | 3.6 | 388% |
| 2 | 1.4 | 1.3 | 22.5 | 16 | 0.25 | 0.36 | 0.36 | 36 | 4.7 | 395% |

R2 the excess radius = R1 the radius of rotating plate - C1 the radius of the space×1.01, C2 number of storage spaces = 360 degrees÷angle, C2 radius of the storage space = R2 the radius of rotating plate×sin(angle÷2), C2 storage container width/length = C2 radius of the storage space×0 707, total storage container area = number of storage spaces×storage container width×storage container depth

**[table 41]**

| (Example) Tableware-kitchen tools shelf robot. The third layer. | | | | | | | | | | |
|---|---|---|---|---|---|---|---|---|---|---|
| shelf number | R3 rotating plate | | | C3 storage | | | | C1+C2 + C3 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.8 | 0.7 | 45 | 8 | 0.25 | 0.36 | 0.36 | 36 | 4.7 | 498% |
| 2 | 1.1 | 1.0 | 30 | 12 | 0.26 | 0.36 | 0.36 | 48 | 6.3 | 527% |

R3 the excess radius = R1 the radius of rotating plate - C1 the radius of the space×1.01, C3 number of storage spaces = 360 degrees÷angle, C3 radius of the storage space = R3 the radius of rotating plate×sin(angle÷2), C3 storage container width/length = C3 radius of the storage space×0.707, total storage container area = number of storage spaces×storage container width × storage container depth

Detection of untidiness results in registration and history of specific (quantitative and qualitative) information, and can reveal information on tableware and kitchen tools. The high burden of use can be reduced by registration and updating, inventory management, and user-oriented receipt.

### (Example 15; Meal serving shelf robot)

In addition to the lack of high-low control to control the height of the storage object, conventional meal serving shelves have three problems. The first problem is that they cannot detect the untidiness of the storage object, and they cannot grasp the type, number, and arrangement of the food on the plate, which chefs rarely have the opportunity to observe. Chefs may not be able to grasp the changes in the arrangement of the food on the tray. The second problem is the high workload, and the chef and meal server may not be in a position where the meal serving shelf is easy to carry in/out. Meal serving consists of the tasks of placing food on trays and carrying it. The task of accurately placing bowls and plates containing cooked food on the appropriate tray requires a larger space as the number of dishes increases, and the chef's moving distance becomes longer, making it difficult to perform the task in a small space. The task of accurately carrying a plurality of trays to the appropriate position on the dining table requires many people. The third problem is that artificial intelligence is not being used to solve the above-mentioned problems in transportation, such as whether the number of items and the quantitative arrangement of the presentation and the qualitative arrangement of the food menu are arranged as planned by the chef on a single tray, and whether the dishes are delivered to the customer as planned.

The meal serving shelf robot according to the embodiment of the invention is provided with the basic shelf structure, a component for a storage object label, a component for identifying a user and for high-low control of the storage object, a component for transporting a storage object or storage container, and a storage container (meal) that is suspended within the storage space from the suspension points of a rotary shelf positioned on the front and rear wheels. The methods include identifying the user (the person who places food on the tray or dishes) using a characterization algorithm, identifying the said storage object using a storage object characterization algorithm, transporting the said storage object by a transport vehicle using a said driving algorithm, carrying-in/out by the said user using a said high-low control algorithm, horizontal rotation using a said horizontal rotation algorithm for a 360-degree viewing angle, detecting dynamic objects using a said position information analysis algorithm, and detecting untidiness using a said position information analysis algorithm.

Assuming that the meal serving shelf robot stores food in a storage container on a single shelf without a partition plate, and assuming that the height, width, and depth of the storage container are 45cm/45cm and 45cm, respectively, the total area of storage containers that are easy to access per floor area shows that two to five items can be stored in the space of one said meal serving shelf on flat ground.

**[table 42]**

| (Example) Meal serving shelf robot. The first layer. | | | | | | | | | | | |
|---|---|---|---|---|---|---|---|---|---|---|---|
| shelf number | R1 rotating plate | | | | C1 storage | | | | floor space (mm²) | C1 | |
| | diameter (m) | depth (m) | radius (m) | angle | number of storage spaces | radius of the storage space (m) | storage container width/ length (m) | storage container depth (m) | | total storage container area (mm²) | floor space to storage container area ratio |
| 1 | 2.48 | 0.45 | 1.24 | 30 | 12 | 0.32 | 0.45 | 0.45 | 1.1 | 2.5 | 220% |
| 2 | 3.26 | 0.45 | 1.63 | 22.5 | 16 | 0.32 | 0.45 | 0.45 | 1.5 | 3.2 | 221% |

R1 diameter = the radius of rotating plate×2, C1 number of storage spaces = 360 degrees÷angle, C1 radius of the storage space = R1 the radius of rotating plate×sin(angle÷2), C1 storage container width/length = C1 radius of the storage space×0.707, floor space = width/length×depth, total storage container area = number of storage containers×storage container width×storage container depth

**[table 43]**

| (Example) Meal serving shelf robot. The second layer. | | | | | | | | | | |
|---|---|---|---|---|---|---|---|---|---|---|
| shelf number | R2 rotating plate | | | C2 storage | | | | C1+C2 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.9 | 0.83 | 45 | 8 | 0.32 | 0.45 | 0.45 | 20 | 4.1 | 364% |
| 2 | 1.3 | 1.24 | 30 | 12 | 0.32 | 0.45 | 0.45 | 28 | 5.7 | 388% |

R2 the excess radius =R1 the radius of rotating plate - C1 the radius of the space×1.01, C2 number of storage spaces = 360 degrees÷angle, C2 radius of the storage space = R1 the radius of rotating plate×sin(angle÷2), C2 storage container width/length= C2 radius of the storage space×0.707, total storage container area = number of storage spaces×storage container width × storage container depth

**[table 44]**

| (Example) Meal serving shelf robot. The third layer. | | | | | | | | | | |
|---|---|---|---|---|---|---|---|---|---|---|
| shelf number | R3 rotating plate | | | C3 storage | | | | C1+C2 + C3 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.6 | 0.45 | 90 | 4 | 0.32 | 0.45 | 0.45 | 24 | 4.9 | 437% |
| 2 | 1.0 | 0.83 | 45 | 8 | 0.32 | 0.45 | 0.45 | 36 | 7.3 | 498% |

R3 diameter = the radius of rotating plate×2, C3 number of storage spaces = 360 degrees-angle, C3 radius of the storage space = R3 the radius of rotating plate×sin(angle÷2), C3 storage container width/length= C3 radius of the storage space×0.707, total storage container area = number of storage spaces×storage container width×storage container depth

Detection of untidiness results in the registration and history of specific (quantitative and qualitative information), and if the arrangement of plates on a tray does not match, image analysis (position information) can reveal the arrangement, number, and type of storage objects in each bowl or plate. The high burden of use can be reduced by the use of registration/update inventory management, and user-oriented receiving and transportation.

### (Example 16; manufacturing-experimental device shelf robot)

In addition to the lack of high-low control to control the height of the storage objects, conventional manufacturing-experimental device shelves have three problems. The first problem is that they cannot detect the untidiness of the storage objects, and the experimenter cannot grasp the changes in the type, number, and arrangement of the manufacturing-experimental devices on the shelf. The second problem is the high burden on manufacturers or experimenters. It is difficult to grasp the change in the arrangement of the experimental devices in the experimental apparatus storage container. The number and arrangement of experimental devices required for one manufacturing-experimental device should be determined while a plurality of manufacturers or experimenters are using it, but it is a cumbersome task to allocate time for this. The third problem is that artificial intelligence is not being used to solve the above problems for all shelves.

The manufacturing-experimental device shelf robot according to an embodiment of the invention includes the basic shelf structure, a component for a storage object label, a component for identifying a user and controlling the high-low of the storage object, a component for transporting the storage object, or storage container, a component for moving the storage object, or said storage container forward/backward, a component for stopping the rotation of the storage object, or said storage container without gravity, a component for identifying a worker at the storage object, or said storage container without using paper media, and a storage container (manufacturing-experimental device box) that is suspended within a storage space from a suspension point of a rotary shelf positioned on the front and rear wheels. The methods include identifying the user (manufacturing-experimental person) using a characterization algorithm, identifying the said storage object using a storage object characterization algorithm, transporting the said storage object by a carrier using a said driving algorithm, carrying-in/out by the said user using a said high-low control algorithm, horizontal rotation using a said horizontal rotation algorithm for a 360-degree viewing angle, detecting dynamic objects using a said position information analysis algorithm, and detecting untidiness using a said position information analysis algorithm.

The manufacturing-experimental device shelf robot is assumed to store items in a storage container on a single shelf without a partition plate, and assuming that the height, width, and depth of the storage container (experimental apparatus) are 40cm/40cm and 40cm, respectively, the total area of the storage container that is easy to access per floor area shows that two to five items can be stored in the space of one flat area.

**[table 45]**

| (Example) Manufacturing-experimental device shelf robot. The first layer. | | | | | | | | | | | |
|---|---|---|---|---|---|---|---|---|---|---|---|
| shelf number | R1 rotating plate | | | | C1 storage | | | | floor space (mm²) | C1 | |
| | diameter (m) | depth (m) | radius (m) | angle | number of storage spaces | radius of the storage space (m) | storage container width/ length (m) | storage container depth (m) | | total storage container area (mm²) | floor space to storage container area ratio |
| 1 | 2.2 | 0.40 | 1.1 | 30 | 12 | 0.28 | 0.40 | 0.40 | 0.9 | 1.9 | 220% |
| 2 | 2.92 | 0.40 | 1.46 | 22.5 | 16 | 0.28 | 0.40 | 0.40 | 1.2 | 2.6 | 221% |
| 3 | 3.6 | 0.40 | 1.8 | 18 | 20 | 0.28 | 0.40 | 0.40 | 1.4 | 3.2 | 221% |

R1 diameter = the radius of rotating plate×2, C1 number of storage spaces = 360 degrees÷angle, C1 radius of the storage space = R1 the radius of rotating plate×sin(angle÷2), C1 storage container width/length = C1 radius of the storage space×0.707, floor space = width/length×depth, total storage container area = number of storage containers×storage container width×storage container depth×2(number of steps)

**[table 46]**

| (Example) Manufacturing-experimental device shelf robot. The second layer. | | | | | | | | | | |
|---|---|---|---|---|---|---|---|---|---|---|
| shelf number | R2 rotating plate | | | C2 storage | | | | C1+C2 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.8 | 0.73 | 45 | 8 | 0.28 | 0.40 | 0.40 | 13 | 4.0 | 454% |
| 2 | 1.2 | 1.10 | 30 | 12 | 0.28 | 0.40 | 0.40 | 17 | 5.3 | 458% |
| 3 | 1.5 | 1.46 | 22.5 | 16 | 0.28 | 0.40 | 0.40 | 22 | 6.6 | 459% |

R2 the excess radius = R1 the radius of rotating plate - C1 the radius of the space×1.01, C2 number of storage spaces = 360 degrees-angle, C2 radius of the storage space = R1 the radius of rotating plate×sin(angle÷2), C2 storage container width/length= C2 radius of the storage space×0 707, total storage container area = number of storage spaces×storage container width × storage container depth×2(number of steps)

**[table 47]**

| (Example) Manufacturing-experimental device shelf robot. The third layer. | | | | | | | | | | |
|---|---|---|---|---|---|---|---|---|---|---|
| shelf number | R3 rotating plate | | | C3 storage | | | | C1+C2 + C3 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.5 | 0.40 | 90 | 4 | 0.28 | 0.40 | 0.40 | 29 | 4.6 | 526% |
| 2 | 0.9 | 0.73 | 45 | 8 | 0.28 | 0.40 | 0.40 | 41 | 6.6 | 566% |
| 3 | 1.2 | 0.92 | 36 | 10 | 0.28 | 0.40 | 0.40 | 52 | 8.2 | 571% |

R3 diameter = the radius of rotating platex2, C3 number of storage spaces = 360 degrees÷angle, C3 radius of the storage space = R3 the radius of rotating plate×sin(angle÷2), C3 storage container width/length = C3 radius of the storage space×0.707, total storage container area=number of storage spaces×storage container width×storage container depth×2(number of steps)

Detection of untidiness results in registration and history of specific (quantitative and qualitative) information, and can reveal information on the placement of storage objects. The high burden of use can be reduced by utilizing artificial intelligence for registration and updating, inventory management, and user-oriented receipt.

### (Example 17; manufacturing-experimental apparatus shelf robot)

In addition to the lack of high-low control to control the height of the storage object, the conventional manufacturing-experimental apparatus table (apparatus table) has three problems. The first problem is that it is not possible to detect the untidiness of the storage object, and the experimenter cannot grasp the changes in the type, number, and arrangement of said equipment on the shelf. In other words, the apparatus table is not used effectively as space. The second problem is the high burden of use. Under GXP regulations, it is a cumbersome task to record who performed which equipment and when. There are two possible cases for the relationship between the number of performers and the number of equipment: number of performers > number of equipment, and number of performers < number of equipment. In the former case, a plurality of performers will take turns using one equipment, and it may not be possible to effectively use the number of equipment corresponding to the number of performers. In the latter case, one performer can use a plurality of equipment at the same time, but a large area will be dedicated to a plurality of equipment. The third problem is that artificial intelligence is not being used to solve the above problems for all shelves.

The manufacturing-experimental apparatus shelf robot according to the embodiment of the invention includes a said basic component, a said storage object label component, a component for identifying a said user and for high-low control of the said storage object, a component for transporting the said storage object, or storage container, a component for said forward/backward movement of the said storage object or said storage container, a component for stopping the rotation of the said storage object, or said storage container without gravity, a component for identifying a worker at the said storage object, or said storage container without a paper medium, and a storage container (experimental apparatus box) that is suspended within a storage space from a suspension point of a rotary shelf positioned on the front and rear wheels. The methods include identifying the user (manufacturing-experimental person) using a characterization algorithm, identifying the said storage object using a storage object characterization algorithm, transporting the said storage object by a carrier using a said driving algorithm, carrying-in/out by the said user using a said high-low control algorithm, horizontal rotation using a said horizontal rotation algorithm for a 360-degree viewing angle, detecting dynamic objects using a said position information analysis algorithm, and detecting untidiness using a said position information analysis algorithm.

The manufacturing-experimental apparatus shelf robot is assumed to store items in a storage container on a single shelf without a partition plate, and assuming that the height, width, and depth of the storage container (experimental apparatus) are 70cm/70cm and 70cm, respectively, the total area of the storage container that is easy to access per floor area shows that two items can be stored in the space of one flat area.

**[table 48]**

| (Example) Manufacturing-experimental apparatus shelf robot. The first layer. | | | | | | | | | | | |
|---|---|---|---|---|---|---|---|---|---|---|---|
| shelf number | R1 rotating plate | | | | C1 storage | | | | floor space (mm²) | total storage container area (mm²) | floor space to storage container area ratio |
| | diameter (m) | depth (m) | radius (m) | angle | number of storage spaces | radius of the storage space (m) | storage container width/ length (m) | storage container depth (m) | | | |
| 1 | 2 | 0.7 | 1 | 60 | 6 | 0.50 | 0.7 | 0.7 | 1.4 | 3.0 | 212% |
| 2 | 2.6 | 0.7 | 1.3 | 45 | 8 | 0.50 | 0.7 | 0.7 | 1.8 | 3.9 | 216% |

R1 diameter = the radius of rotating plate×2, C1 number of storage spaces = 360 degrees÷angle, C1 radius of the storage space =R1 the radius of rotating plate×sin(angle÷2), C1 storage container width/length = C1 radius of the storage space×0.707, floor space = width/length×depth, total storage container area = number of storage containers×storage container width×storage container depth

**[table 49]**

| (Example) Manufacturing-experimental apparatus shelf robot. The second layer. | | | | | | | | | | |
|---|---|---|---|---|---|---|---|---|---|---|
| shelf number | R2 rotating plate | | | C2 storage | | | | C1 +C2 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.5 | | | | | | | 6 | 3.0 | 212% |
| 2 | 0.8 | 0.7 | 90 | 4 | 0.49 | 0.70 | 0.70 | 9 | 4.3 | 238% |

R2 the excess radius = R1 the radius of rotating plate - C1 the radius of the space× 1.01, C2 number of storage spaces = 360 degrees÷angle, C2 radius of the storage space = R1 the radius of rotating plate×sin(angle÷2), C2 storage container width/length= C2 radius of the storage space×0.707, total storage container area = number of storage spaces×storage container width × storage container depth

Detection of untidiness may result in registration and history of specific (quantitative and qualitative information), and the placement of storage objects may become clear. The high burden of use may be reduced by registration and update and inventory management, user-oriented receipt, compliance with GXP regulations without paper media, and effective use of a plurality of experimental tables, a plurality of experimental operations, and the number of experimenters and experimental equipment.

### (Example 18; manufacturing table, or experimental table (conducting table) shelf robot)

In addition to the lack of high-low control to control the height of the storage object, conventional manufacturing tables, or experimental tables (conducting tables) have three problems. The effective conducting table performed by the person in charge is the space within the person's field of vision and the area within which the person can move their hands, and the space outside of this range is invalid. For this reason, even if the area of the currently widely used conducting table is set large, the proportion of dead space will only increase, and it is not possible for one person to carry out multiple manufacturing or experiments simultaneously in the available space with the current conducting table. For example, it is not easy for a plurality of people to work in a relay format or simultaneously. Originally, manufacturing equipment or experimental equipment (conducting equipment) needs to be placed near the conducting table, but if all conducting equipment is placed next to the conducting table, a conducting table is required for each unused conducting equipment, and the number of unused conducting tables increases. This is because the said conducting table stores a single conducting table, but is not a conducting shelf that stores a plurality of conducting tables. The first problem is that it is not possible to detect the untidiness of the storage object, and it is not possible to detect and record the identity of the implementer or the implementer's purpose, such as the number and arrangement of the tools required for a given production or experiment. The second problem is the high burden. Under GXP regulations, recording who conducted which manufacturing or experiment and when (identifying the individual person conducting the experiment) is a cumbersome task that requires paper. There are two possible cases in the relationship between the number of people conducting and the number of conducting tables: the number of people > the number of conducting tables, and the number of people < the number of conducting tables. In the former case, a plurality of people will take turns using one conducting table, and the number of conducting tables corresponding to the number of people conducting may not be used effectively. In the latter case, one person can use a plurality of conducting tables at the same time, but a large area will be dedicated to a plurality of devices. The problem is that one practitioner cannot simultaneously conduct two conducting tables in a seated position. The third problem is that artificial intelligence is not being used in all the rooms to solve the above problems.

The manufacturing-experimental platform shelf robot according to the embodiment of the invention includes the basic shelf structure, a component for a storage object label, a component for identifying a user and controlling the high-low of the storage object, a component for moving the storage object forward/backward, a component for stopping rotation of the storage object without gravity, a component for identifying a worker at the storage object without paper media, a storage container (manufacturing-experimental platform) suspended in the storage space from a suspension point of the rotary shelf positioned on the front and rear wheels, a sign indicating the person in charge, a device transport pallet that is installed on the rotary shelf and stops rotation at regular intervals and is stable without gravity, and an experimental table and a draft for discharging the air. The methods include identifying the user (manufacturing-experimental person) using a characterization algorithm, identifying the said storage object using a storage object characterization algorithm, transporting the said storage object by a carrier using a said driving algorithm, carrying-in/out by the said user using a said high-low control algorithm, horizontal rotation using a said horizontal rotation algorithm for a 360-degree viewing angle, detecting dynamic objects using a said position information analysis algorithm, and detecting untidiness using a said position information analysis algorithm.

The manufacturing-experimental shelf robot is assumed to store items in a storage container on a single shelf without a partition plate, and assuming that the height, width, and depth of the storage container (experimental apparatus) are 80cm/80cm and 80cm, respectively, the total area of the storage container that is easy to access per floor area shows that two items can be stored in the space of one flat area.

**[table 50]**

| (Example) Manufact uring table, or experiment al table (con ducting table) shelf robot. | | | | | | | | | | | |
|---|---|---|---|---|---|---|---|---|---|---|---|
| shelf number | R1 rotating plate | | | | C1 storage | | | | floor space (mm²) | total storage container area (mm²) | floor space to storage container area ratio |
| | diameter (m) | depth (m) | radius (m) | angle | number of storage spaces | radius of the storage space (m) | storage container width/ length (m) | storage container depth (m) | | | |
| 1 | 2.3 | 0.8 | 1.13 | 60 | 6 | 0.57 | 0.80 | 0.80 | 1.8 | 3.8 | 212% |
| 2 | 3 | 0.8 | 1.48 | 45 | 8 | 0.57 | 0.80 | 0.80 | 2.4 | 5.1 | 216% |

R1 diameter = the radius of rotating plate×2, C1 number of storage spaces = 360 degrees÷angle, C1 radius of the storage space = R1 the radius of rotating plate×sin(angle÷2), C1 storage container width/length = C1 radius of the storage space×0.707, floor space = width/length×depth, total storage container area=number of storage containers×storage container width×storage container depth

Detection of untidiness results in the registration and history of specific (quantitative and qualitative) information, and can clarify the placement of storage objects. The high burden of use can be reduced by registration and update and inventory management, user-oriented receipt, compliance with GXP regulations without paper media, and effective use of a plurality of experimental tables, a plurality of experimental operations, and the number of experimenters and experimental equipment.

### (Example 19; cell culture tank shelf robot)

Conventional cell culture tank shelfs in the manufacturing stage have three problems in addition to the lack of high-low control to control the height of the storage object. This is because the cell culture shelf stores a single cell culture tank, but is not a shelf that stores a plurality of cell culture tanks. The first problem is that the undiminished ness of the storage object cannot be detected, and this is due to the lack of a system to manage the culture status of all the culture tanks, even if there is an evaluation system for each culture tank. The second problem is the high usage burden, requiring manpower to replace and ship heavy culture tanks. Furthermore, maintaining a uniform environment within the shelves is difficult, and even if the temperature is adjusted, it is not possible to prevent environmental fluctuations within the shelves due to differences in height or left/right position. The third problem is that artificial intelligence is not being used to solve the above problems for all shelves. In addition to the above, shelves that can store storage objects of various sizes according to the size of the storage object are not yet in general use.

The cell culture tank shelf robot according to an embodiment of the invention includes the basic shelf structure, a component for a storage object label, a component for identifying a user and for high-low control of the storage object, a component for transporting the storage object, or storage container, a component for forward/backward movement of the storage object, or said storage container, a component for identifying an operator at the storage object, or said storage container without paper media, a component for horizontal rotation of the storage object, or said storage container, and a storage container (culture tank) that is suspended within a storage space from the suspension points of the rotary shelf that are positioned on the front and rear wheels,
the methods include identification of the user (cultivator) by the characterization algorithm, identification of the storage object (plant) by the storage object characterization algorithm, transportation of the storage object by the transport vehicle by the driving algorithm, carrying-in/out by the user by the high-low control algorithm, horizontal rotation by the horizontal rotation algorithm for 360-degree viewing, uniformization of the environment between storage containers in the shelf by the environment uniformization algorithm, shortening of the transportation distance by arranging the shelves, optimization of the culture by the position information analysis algorithm, detection of dynamic objects by the position information analysis algorithm, and detection of untidiness by the position information analysis algorithm.

The cell culture tank shelf robot is designed to store four culture tanks on one shelf without a partition plate, and assuming that the height, width, and depth of the storage container (experimental apparatus) are 1.6m/1.6m and 1.6m, respectively, the total area of the storage containers that can be easily removed per floor area shows that eight containers can be stored in the space of one flat area.

**[table 51]**

| (Example) Cell culture tank (Vertical placement tank) shelf robot. | | | | | | | | | | | |
|---|---|---|---|---|---|---|---|---|---|---|---|
| shelf number | R1 rotating plate | | | | C1 storage | | | | floor space (mm²) | total storage container area (mm²) | floor space to storage container area ratio |
| | diameter (m) | depth (m) | radius (m) | angle | number of storage spaces | radius of the storage space (m) | storage container width/ length (m) | storage container depth (m) | | | |
| 1 | 1.2 | 2.8 | 0.6 | 90 | 4 | 0.42 | 0.6 | 2.8 | 3.4 | 26.9 | 800% |
| 2 | 1.8 | 2.8 | 0.9 | 60 | 6 | 0.45 | 0.6 | 2.8 | 5.0 | 42.8 | 848% |
| 3 | 2.4 | 2.8 | 1.2 | 45 | 8 | 0.46 | 0.6 | 2.8 | 6.7 | 58.2 | 866% |

R1 diameter = the radius of rotating plate×2, C1 number of storage spaces = 360 degrees÷angle, C1 radius of the storage space = R1 the radius of rotating plate×sin(angle÷2), C1 storage container width/length= C1 radius of the storage space×0.707, floor space = width/length×depth, total storage container area = number of storage containers×storage container width×storage container depth×4(number of tanks)

Detection of untidiness results in the registration and history of specific (quantitative and qualitative) information, and can clarify the information of how storage objects are placed. The high burden of use can be reduced by maintaining a uniform environment on the shelves, registration and update, inventory management, user-oriented receiving, reading the culture status, identifying individual manufacturers, and complying with GXP regulations and transportation without paper media.

### (Example 20; Baby Chick Breeding Shelf Robot)

In addition to the lack of high-low control to control the height of the storage object, conventional baby chick breeding shelves have three problems. The first problem is that it is not possible to detect the untidiness of the storage object, and it is not possible to set the environment through indoor environmental changes according to the behavior of the chickens during the 7 days after incubation and the 15-28 days after incubation, which cannot necessarily be obtained by a thermometer. The second problem is that the burden is high, and the rearing environment (temperature), feeding, water supply, sexing of day-old chicks by feather identification, and careful observation of day-old chicks for 24 hours are important compared to the rearing of chickens 30 days after incubation. However, there is a limit to how much a breeder can observe 24 hours a day, and there may not be a system that can replace the monitoring. Furthermore, even if the temperature of the entire breeding room is adjusted, it may not be possible to prevent environmental fluctuations within the breeding room due to differences in height and left/right position. The third problem is that artificial intelligence is not being used to solve the above problem for all shelves.

The baby chick breeding shelf robot according to the embodiment of the invention comprises the basic shelf structure, a component for a storage object label, a component for identifying a user and for high-low control of the storage object, a component for transporting the storage object, a component for reflecting the settings of the storage object in all storage objects in the shelf by setting the storage object at one location in the shelf, a component for stopping rotation of the storage object without gravity, a component for identifying an operator at the storage object without using paper media, an animal housing container suspended in the storage space from a suspension point of the rotary shelf positioned on the front and rear wheels, an environment (temperature and humidity) detection sensor at the top of the cage, a light intake window, and a rotary The top of the shelf is equipped with a feed inlet that allows for automated feed supply, a water inlet that supplies water, a manure tray that receives manure at the bottom of the cage, and a support that holds the manure tray. The methods include identification of the user (caregiver) by the characterization algorithm, identification of the storage object (baby chick) by the storage object characterization algorithm, transportation of the storage object by the carrier by the driving algorithm, carrying-in/out by the user by the high-low control algorithm, addition of feed by the feeding algorithm, horizontal rotation by the horizontal rotation algorithm for 360-degree viewing, uniformization of the environment between storage containers in the shelf by the environment uniformization algorithm, shortening of the transportation distance by arranging the shelves, optimization of growth beyond natural growth by the position information analysis algorithm, detection of dynamic objects by the position information analysis algorithm, and detection of untidiness by the position information analysis algorithm.

It is assumed that the baby chick breeding shelf robot will be stored in a storage container divided into two levels by a partition plate, and assuming that the height, width, and depth of the storage container (breeding room) are 1m/1m and 1m respectively, the total area of the storage containers that are easy to access per floor area shows that two to four containers can be stored in the space of one flat area.

**[table 52]**

| (Example) Baby chick breeding shelf robot. | | | | | | | | | | | | |
|---|---|---|---|---|---|---|---|---|---|---|---|---|
| shelf number | R1 rotating plate | | | | C1 storage | | | | floor space (mm²) | total storage containe r area (mm²) | floor space to storage container area ratio | number of chicks that can be accommodated |
| | diameter (m) | depth (m) | radius (m) | angle | number of storage spaces | radius of the storage space (m) | storage container width/ length (m) | stora ge conta iner depth (m) | | | | |
| 1 | 2 | 1.0 | 1 | 90 | 4 | 0.71 | 1.0 | 1.0 | 2.0 | 8.0 | 400% | 200 |
| 2 | 2.8 | 1.0 | 1.4 | 60 | 6 | 0.70 | 1.0 | 1.0 | 2.8 | 11.9 | 424% | 300 |
| 3 | 3.8 | 1.0 | 1.9 | 45 | 8 | 0.73 | 1.0 | 1.0 | 3.8 | 16.4 | 433% | 400 |

R1 diameter = the radius of rotating plate×2, C1 number of storage spaces = 360 degrees÷angle, C1 radius of the storage space = R1 the radius of rotating plate×sin(angle÷2), C1 storage container width/length = C1 radius of the storage space×0.707, floor space = width/length×depth, total storage container area = number of storage containers×storage container width×storage container depth×2(number of steps), the number of chicks that can be accommodated= number of storage spaces×50

Detection of untidiness results in the registration and history of specific (quantitative and qualitative) information, and image analysis (position information) can clarify the location of storage objects. The general condition of animals is recorded during times when caretakers have little opportunity to observe them, and it is also possible to detect the behavior of baby chicks that cannot always be obtained by a thermometer. The high burden of use can be reduced by registering and updating individual animals and inventory management, setting user-oriented positions, setting the environment according to the animal's behavior, maintaining a uniform environment within the shelves, daily rearing work (changing cage arrangements, providing water and food, changing bedding), times when workers cannot observe (lights off to lights on), or by detecting health status over time (general condition observation and weight measurement as an indicator of health status), and detecting genetic breeding traits (gender identification by feathers, pecking habits).

### (Example 21; chicken eggs shelf robot)

In addition to the lack of high-low control to control the height of the storage object, conventional chicken eggs shelves have three problems. The first problem is that they cannot detect the untidiness of the storage object, and they may not be able to adjust the environment to accommodate changes in the indoor environment in response to chicken behavior, which cannot always be obtained with a thermometer. The second problem is the high burden of use. Although careful 24-hour observation is important for observing the feeding habits, observing the egg-laying habits after maturity (out-of-nest egg-laying habits), calculating the egg-laying rate for each individual, identifying the date and time of egg-laying, and obtaining information on the parent hens, there is a limit to the amount of observation a breeder can make 24-hours a day, and an alternative system to monitoring is needed. The third problem is that artificial intelligence is not being used to solve the above problems for all shelves.

The chicken eggs box shelf robot according to the embodiment of the invention is provided with the basic shelf structure, a component for a storage object label, a component for identifying a user and for high-low control of the storage object, a component for transporting the storage object or storage container, a component for stopping rotation of the storage object or said storage container without gravity, a component for identifying the operator at the storage object or said storage container without using paper media, an egg-laying box container (egg-laying space, egg storage space, and space for attaching an information label showing the egg-laying date and time and tracking) suspended within the storage space from the suspension points of the rotary shelf positioned on the front and rear wheels, a sign indicating the person in charge, an environment (temperature and humidity) detection sensor at the top of the cage, and a light-inlet window. The methods include identification of users (animal caretakers) by a characterization algorithm, identification of storage objects (chickens) by a storage object characterization algorithm, transportation of said storage objects by a carrier by a driving algorithm, carrying-in/out by said users by a high-low control algorithm, horizontal rotation by a horizontal rotation algorithm for 360-degree viewing, uniformization of the environment between storage containers in a shelf by an environmental uniformization algorithm, shortening of transportation distance by arranging the shelves, optimization of breeding by a position information analysis algorithm, detection of dynamic objects by a position information analysis algorithm, and detection of untidiness by a position information analysis algorithm.

The chicken eggs box shelf robot assumes that the entire storage container area is an easy-to-remove space and that the total area of the easy-to-remove storage containers per floor area is stored in storage containers divided into two levels by a partition plate. The ratio of the easy-to-remove storage containers to the floor area, which is assumed to be 72cm/72cm and 36cm in width/length and depth, respectively, shows that two to ten containers can be stored in one area of flat land. The minimum ground clearances of the first layer, second layer and third layer of the artificial intelligence controlled experimental animal breeding shelf are 0m, 72cm and 144cm, respectively, and the diameter of the shelf that can be used by adults is 1.44m to 6.5m.

**[table 53]**

| (Example) Chicken eggs shelf robot. The first layer. | | | | | | | | | | | |
|---|---|---|---|---|---|---|---|---|---|---|---|
| shelf number | R1 rotating plate | | | | C1 storage | | | | floor space (mm²) | C1 | |
| | diameter (m) | depth (m) | radius (m) | angle | number of storage spaces | radius of the storage space (m) | storage container width/ length (m) | storage container depth (m) | | total storage container area (mm²) | floor space to storage container area ratio |
| 1 | 1.44 | 0.36 | 0.72 | 90.0 | 4 | 0.51 | 0.72 | 0.36 | 0.5 | 2.1 | 400% |
| 2 | 2.04 | 0.36 | 1.02 | 60.0 | 6 | 0.51 | 0.72 | 0.36 | 0.7 | 3.1 | 424% |
| 3 | 2.66 | 0.36 | 1.33 | 45.0 | 8 | 0.51 | 0.72 | 0.36 | 1.0 | 4.1 | 433% |
| 4 | 3.28 | 0.36 | 1.64 | 36.0 | 10 | 0.51 | 0.72 | 0.36 | 1.2 | 5.2 | 437% |
| 5 | 5.2 | 0.36 | 2.60 | 22.5 | 16 | 0.51 | 0.72 | 0.36 | 1.9 | 8.3 | 441% |
| 6 | 6.5 | 0.36 | 3.25 | 18.0 | 20 | 0.51 | 0.72 | 0.36 | 2.3 | 10.4 | 442% |

R1 diameter = the radius of rotating plate×2, C1 number of storage spaces = 360 degrees-angle, C1 radius of the storage space = R1 the radius of rotating plate×sin(angle÷2), C1 storage container width/length = C1 radius of the storage space×0.707, floor space = width/length×depth, total storage container area = number of storage containers×storage container width×storage container depth ×2(number of steps)

**[table 54]**

| (Example) Chicken eggs shelf robot. The second layer. | | | | | | | | | | |
|---|---|---|---|---|---|---|---|---|---|---|
| shelf number | R2 rotating plate | | | C2 storage | | | | C1+C2 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.2 | | | | 0.00 | 0.00 | 0.36 | 4 | 2.1 | 400% |
| 2 | 0.5 | | | | 0.00 | 0.00 | 0.36 | 6 | 3.1 | 424% |
| 3 | 0.8 | 0.72 | 90 | 4 | 0.51 | 0.72 | 0.36 | 12 | 6.2 | 649% |
| 4 | 1.1 | 1.02 | 60 | 6 | 0.51 | 0.72 | 0.36 | 16 | 8.3 | 701% |
| 5 | 2.1 | 1.96 | 30 | 12 | 0.51 | 0.72 | 0.36 | 28 | 14.5 | 772% |
| 6 | 2.7 | 2.60 | 22.5 | 16 | 0.51 | 0.72 | 0.36 | 36 | 18.6 | 795% |

R2 the excess radius = R1 the radius of rotating plate - C1 the radius of the space × 1.01, C2 number of storage spaces = 360 degrees÷angle, C2 radius of the storage space = R1 the radius of rotating plate×sin(angle÷2), C2 storage container width/length = C2 radius of the storage space×0.707, total storage container area = number of storage spaces×storage container width × storage container depth×2(number of steps)

**[table 55]**

| (Example) Chicken eggs shelf robot. The third layer. | | | | | | | | | | |
|---|---|---|---|---|---|---|---|---|---|---|
| shelf number | R3 rotating plate | | | C3 storage | | | | C1 +C 2 + C3 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.2 | | | | | | | 4 | 2.1 | 400% |
| 2 | 0.5 | | | | | | | 6 | 3.1 | 424% |
| 3 | 0.3 | | | | | | | 12 | 6.2 | 649% |
| 4 | 0.6 | | | | | | | 16 | 8.3 | 701% |
| 5 | 1.6 | 1.0 | 60 | 6 | 0.51 | 0.72 | 0.36 | 34 | 17.6 | 939% |
| 6 | 2.2 | 2.0 | 30 | 12 | 0.51 | 0.72 | 0.36 | 48 | 24.8 | 1060% |

R3 diameter = the radius of rotating plate×2, C3 number of storage spaces = 360 degrees÷angle, C3 radius of the storage space = R3 the radius of rotating plate×sin(angle÷2), C3 storage container width/length= C3 radius of the storage space×0.707, total storage container area = number of storage spaces×storage container width×storage container depth

Detection of untidiness results in the registration and history of specific (quantitative and qualitative) information, and image analysis (position information) can reveal the position information of the storage object. The behavior of animals during times when breeders have little opportunity to observe them can be recorded, and it can also detect hens that lay eggs outside the nest without using egg boxes in cage-free breeding. The burden of use can be reduced by registering and updating individual animals and inventory management, setting user-oriented positions, setting the environment according to the animal's behavior, maintaining a uniform environment within the shelves, detecting health conditions (general condition observation and weight measurement as an indicator of health condition) during times when workers cannot observe (lights off to lights on), and detecting genetic breeding traits (sticking habits).

### (Example 22; mixture-making shelf robot)

In addition to the lack of high-low control to control the height of the storage object, conventional mixture-making shelves have three problems. The first problem is that the untidiness (mixed state) of the storage object cannot be detected, and it is not easy for manufacturers to record time-series monitoring, and there is no system for users to record over a long period of time. The second problem is the high burden, and there are four types of high burden as follows. The first high burden is that even if it is easy to measure and transport on a laboratory scale, the same process is required at the manufacturing stage, and products with heavy mixture weight per batch and products with large volumes even if they are not heavy require manual labor, and it is difficult to reduce labor through automation.
The second high burden is maintaining a uniform environment (temperature, humidity) between batches, and there is no algorithm to suppress fluctuations within the shelves. The third high burden is that when GXP compliance is necessary, the cumbersome work using paper becomes a burden. The third problem is that artificial intelligence has not been used to solve the above problem for all shelves. In addition, shelves that can store various sizes of storage objects according to the size of the storage object have not been generalized.

The mixture-making shelf robot according to the embodiment of the invention includes the basic shelf structure, a component for a storage object label, a component for identifying a user and controlling the high-low of the storage object, a component for transporting the storage object, a component for moving the storage object forward/backward, a component for measuring the weight of the storage object, a component for reflecting the settings of the storage object in one place in the shelf to all the storage objects in the shelf, a component for stopping the rotation of the storage object without gravity, a component for identifying the worker in the storage object without paper media, and a rotary positioning device for positioning the front and rear wheels. A storage container (mixture box, or mixer) is provided that is suspended within the storage space from the shelf's suspension point,
the methods include identifying the user (mixture person) by the characterization algorithm, identifying the storage object (mixture) by the storage object characterization algorithm, transporting the storage object by the transport vehicle by the driving algorithm, carrying-in/out by the user by the high-low control algorithm, horizontal rotation by the horizontal rotation algorithm for 360-degree viewing, adding materials by the addition algorithm, homogenizing the environment between storage containers on the shelf by the environment homogenization algorithm, shortening the transport distance by arranging the shelves, detecting dynamic objects by the position information analysis algorithm, and detecting untidiness by the position information analysis algorithm.

The mixture-making shelf robot assumes that storage containers will be stored on a single layer without a partition plate, and assumes that the height, width, and depth of the storage container are 1.1m/1.1m and 1.1m, respectively. It shows that the total area of storage containers that can be easily removed per floor area is such that two to five containers can be stored in the space of one flat area. In this shelf, the ground heights of the first layer, second layer, and third layer are 0m, 1.1m, and 2.2m, respectively, making the minimum ground heights of all storage containers easy to transport.

**[table 56]**

| (Example) Mixture making shelf robot. The first layer. | | | | | | | | | | | |
|---|---|---|---|---|---|---|---|---|---|---|---|
| shelf number | R1 rotating plate | | | | C1 storage | | | | floor space (mm²) | C1 | |
| | diameter (m) | depth (m) | radius (m) | angle | number of storage spaces | radius of the storage space (m) | storage container width/ length (m) | storage container depth (m) | | total storage container area mm²) | floor space to storage container area ratio |
| 1 | 2.2 | 1.1 | 1.10 | 90 | 4 | 0.78 | 1.1 | 1.1 | 2.4 | 4.8 | 200% |
| 2 | 3.1 | 1.1 | 1.56 | 60 | 6 | 0.78 | 1.1 | 1.1 | 3.4 | 7.3 | 212% |
| 3 | 4.1 | 1.1 | 2.04 | 45 | 8 | 0.78 | 1.1 | 1.1 | 4.5 | 9.7 | 217% |
| 4 | 5.0 | 1.1 | 2.52 | 36 | 10 | 0.78 | 1.1 | 1.1 | 5.5 | 12.1 | 219% |
| 5 | 6.0 | 1.1 | 3.00 | 30 | 12 | 0.78 | 1.1 | 1.1 | 6.6 | 14.5 | 219% |
| 6 | 8.0 | 1.1 | 3.99 | 22.5 | 16 | 0.78 | 1.1 | 1.1 | 8.8 | 19.4 | 221% |

R1 diameter = the radius of rotating plate×2, C1 number of storage spaces = 360 degrees÷angle, C1 radius of the storage space = R1 the radius of rotating plate×sin(angle÷2), C1 storage container width/length = C1 radius of the storage space×0.707, floor space = width/length×depth, total storage container area = number of storage containers×storage container width×storage container depth

**[table 57]**

| (Example) Mixture making shelf robot. The second layer. | | | | | | | | | | |
|---|---|---|---|---|---|---|---|---|---|---|
| shelf number | R2 rotating plate | | | C2 storage | | | | C1+C2 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.3 | | | | | | | 4 | 4.8 | 200% |
| 2 | 0.8 | | | | | | | 6 | 7.3 | 212% |
| 3 | 1.2 | 1.10 | 90 | 4 | 0.78 | 1.1 | 1.1 | 12 | 14.5 | 325% |
| 4 | 1.7 | 1.56 | 60 | 6 | 0.78 | 1.1 | 1.1 | 16 | 19.4 | 350% |
| 5 | 2.2 | 2.04 | 45 | 8 | 0.78 | 1.1 | 1.1 | 20 | 24.2 | 366% |
| 6 | 3.2 | 3.00 | 30 | 12 | 0.78 | 1.1 | 1.1 | 28 | 33.9 | 386% |

R2 the excess radius = R1 the radius of rotating plate - C1 the radius of the space×1.01, C2 number of storage spaces = 360 degrees÷angle, C2 radius of the storage space = R1 the radius of rotating plate×sin(angle÷2), C2 storage container width/length = C2 radius of the storage space×0.707, total storage container area = number of storage spaces×storage container width × storage container depth

**[table 58]**

| (Example) Mixture making shelf robot. The third layer. | | | | | | | | | | |
|---|---|---|---|---|---|---|---|---|---|---|
| shelf number | R3 rotating plate | | | C3 storage | | | | C1+C2+C3 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.3 | | | | | | | 4 | 4.8 | 200% |
| 2 | 0.8 | | | | | | | 6 | 7.3 | 212% |
| 3 | 0.5 | | | | | | | 12 | 14.5 | 325% |
| 4 | 0.9 | | | | | | | 16 | 19.4 | 350% |
| 5 | 1.4 | 1.1 | 90 | 4 | 0.78 | 1.1 | 1.1 | 24 | 29.0 | 440% |
| 6 | 2.4 | 2.0 | 45 | 8 | 0.78 | 1.1 | 1.1 | 36 | 43.6 | 497% |

R3 diameter = the radius of rotating plate×2, C3 number of storage spaces = 360 degrees÷angle, C3 radius of the storage space = R3 the radius of rotating plate×sin(angle÷2), C3 storage container width/length = C3 radius of the storage space×0.707, total storage container area = number of storage spaces×storage container width×storage container depth

Detection of untidiness results in the registration and history of specific (quantitative and qualitative) information, and can clarify the placement of storage objects. The high burden of use can be reduced by maintaining a uniform environment within the shelves, registering and updating storage objects and inventory management, setting user-oriented positions, complying with GXP without paper media, and transporting by the use of transporters.

### (Example 23; Mushroom culturing shelf robot)

The conventional mushroom culturing shelf using multi-tiered shelves has three problems in addition to the lack of high-low control to control the height of the storage object. The first problem is that it is not possible to detect the untidiness of the storage object, which may be due to the lack of a system to detect factors that affect the growth of the mushroom. The second problem is the high burden of use. One of the reasons is the difficulty of maintaining a uniform environment within the shelves. Even if the temperature is adjusted, it is not possible to prevent environmental fluctuations within the shelves due to differences in height or left/right position. The other problem is that manpower is required to replace and ship the mushrooms. The third problem is that artificial intelligence is not used to solve the above problems for all shelves. In addition to the above, shelves that can store storage objects of various sizes according to the size of the storage object are not common.

The mushroom culturing shelf robot according to the embodiment of the invention includes the basic shelf structure, a component for a storage object label, a component for identifying a user and controlling the high-low of the storage object, a component for transporting the storage object, a component for moving the storage object forward/backward, a component for adjusting the amount of liquid in the storage object, a component for reflecting the settings of the storage object at one location in the shelf to all storage objects in the shelf, a component for shortening the moving distance and moving time to the storage object, a component for stopping the rotation of the storage object without gravity, and a component for adjusting the amount of liquid in the storage object. The storage space is equipped with components for horizontal rotation, a mushroom culturing container on a pallet suspended from the rotary shelf that is positioned on the front and rear wheels, and water and fertilizer addition ports. The methods include identifying the user (cultivator) using a characterization algorithm, identifying the storage object (plant) using a storage object characterization algorithm, transporting the storage object using a vehicle using a driving algorithm, carrying-in/out by the user using a high-low control algorithm, horizontal rotation using a horizontal rotation algorithm for a 360-degree viewing angle, uniforming the environment between storage containers on the shelf using an environmental uniformization algorithm, shortening the transport distance by arranging the shelves, optimizing cultivation using a position information analysis algorithm, detecting dynamic objects using a position information analysis algorithm, and detecting untidiness using a position information analysis algorithm.

The mushroom culturing shelf robot assumes that one storage container (cargo) is a tier without partitions, and the height/width/depth of the storage container is the same as that of a JIS standard pallet (1.1m length/width), and assuming the third layer, the shelf will be 2.2m to 29.7m long. If the width/height/depth of the storage container is 1.1m/1.1m and 1.1m respectively, the ratio of easily accessible storage containers to floor area shows that two to five containers can be stored in one space of flat ground. In this shelf, the ground clearances of the first layer, second layer, and third layer are 0m, 1.1m, and 2.2m, respectively, and the minimum ground clearance of all storage containers makes them easy to transport.

**[table 59]**

| (Example) Mushroom culturing shelf robot. The first layer. | | | | | | | | | | | |
|---|---|---|---|---|---|---|---|---|---|---|---|
| shelf number | R1 rotating plate | | | | C1 storage | | | | floor space (mm²) | C1 | |
| | diameter (m) | depth (m) | radius (m) | angle | number of storage spaces | radius of the storage space (m) | storage container width/ length (m) | storage container depth (m) | | total storage container area (mm²) | floor space to storage container area ratio |
| 1 | 2.2 | 1.1 | 1.10 | 90 | 4 | 0.78 | 1.1 | 1.1 | 2.4 | 4.8 | 200% |
| 2 | 3.1 | 1.1 | 1.56 | 60 | 6 | 0.78 | 1.1 | 1.1 | 3.4 | 7.3 | 212% |
| 3 | 4.1 | 1.1 | 2.04 | 45 | 8 | 0.78 | 1.1 | 1.1 | 4.5 | 9.7 | 217% |
| 4 | 5.0 | 1.1 | 2.52 | 36 | 10 | 0.78 | 1.1 | 1.1 | 5.5 | 12.1 | 219% |
| 5 | 6.0 | 1.1 | 3.00 | 30 | 12 | 0.78 | 1.1 | 1.1 | 6.6 | 14.5 | 219% |
| 6 | 8.0 | 1.1 | 3.99 | 22.5 | 16 | 0.78 | 1.1 | 1.1 | 8.8 | 19.4 | 221% |

R1 diameter = the radius of rotating plate×2, C1 number of storage spaces = 360 degrees÷angle, C1 radius of the storage space = R1 the radius of rotating plate×sin(angle÷2), C1 storage container width/length= C1 radius of the storage space×0.707, floor space = width/length×depth, total storage container area = number of storage containers×storage container width storage container depth

**[table 60]**

| (Example) Mushroom culturing shelf robot. The second layer. | | | | | | | | | | |
|---|---|---|---|---|---|---|---|---|---|---|
| shelf number | R2 rotating plate | | | C2 storage | | | | C1+C2 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.3 | | | | | | | 4 | 4.8 | 200% |
| 2 | 0.8 | | | | | | | 6 | 7.3 | 212% |
| 3 | 1.2 | 1.10 | 90 | 4 | 0.78 | 1.1 | 1.1 | 12 | 14.5 | 325% |
| 4 | 1.7 | 1.56 | 60 | 6 | 0.78 | 1.1 | 1.1 | 16 | 19.4 | 350% |
| 5 | 2.2 | 2.04 | 45 | 8 | 0.78 | 1.1 | 1.1 | 20 | 24.2 | 366% |
| 6 | 3.2 | 3.00 | 30 | 12 | 0.78 | 1.1 | 1.1 | 28 | 33.9 | 386% |

R2 the excess radius = R1 the radius of rotating plate - C1 the radius of the space×1.01, C2 number of storage spaces = 360 degrees÷angle, C2 radius of the storage space = R1 the radius of rotating plate×sin(angle÷2), C2 storage container width/length = C2 radius of the storage space×0.707, total storage container area = number of storage spaces×storage container width × storage container depth

**[table 61]**

| (Example) Mushroom culturing shelf robot. The third layer. | | | | | | | | | | |
|---|---|---|---|---|---|---|---|---|---|---|
| shelf number | R3 rotating plate | | | C3 storage | | | | C1+C2+C3 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.3 | | | | | | | 4 | 4.8 | 200% |
| 2 | 0.8 | | | | | | | 6 | 7.3 | 212% |
| 3 | 0.5 | | | | | | | 12 | 14.5 | 325% |
| 4 | 0.9 | | | | | | | 16 | 19.4 | 350% |
| 5 | 1.4 | 1.1 | 90 | 4 | 0.78 | 1.1 | 1.1 | 24 | 29.0 | 440% |
| 6 | 2.4 | 2.0 | 45 | 8 | 0.78 | 1.1 | 1.1 | 36 | 43.6 | 497% |

R3 diameter = the radius of rotating plate×2, C3 number of storage spaces = 360 degrees-angle, C3 radius of the storage space=R3 the radius of rotating plate×sin(angle÷2), C3 storage container width/length= C3 radius of the storage space×0.707, total storage container area=number of storage spaces×storage container width×storage container depth

Detection of untidiness results in registration and history of specific (quantitative and qualitative information), and image analysis (position information) can clarify the placement of storage objects. The high burden of use can be reduced by maintaining a uniform environment within the shelves, registering and updating mushroom individuals and inventory management, and setting user-oriented positions and transportation.

### (Example 24: Aquatic Life Breeding Shelf Robot)

The conventional aquatic life breeding shelf using multi-tiered shelves has three problems in addition to the lack of high-low control to control the height of the storage object. The first problem is that it is not possible to detect the untidiness of the storage object, which may be due to the lack of a system to detect factors that affect the growth of aquatic life. The second problem is the high burden of use. One of the reasons for this is the difficulty of maintaining a uniform environment within the shelves. Even if the indoor temperature is adjusted, it is impossible to prevent environmental fluctuations within the shelves due to differences in height or left/right position. The other problem is the need for manpower to replace and ship the aquatic organisms. The third problem is that artificial intelligence has not been used to solve the above problem for all shelves. In addition, shelves that can store various sizes of storage objects according to the size of the storage object have not been generalized. For example, the catch of glass eels in eel farming is now 1/20 of what it was 50 years ago. Although experimental complete farming has been achieved through recent research, the survival rate is still low at 0.01% to 1.6% compared to the 90% survival rate in seedling production of other fishes. Furthermore, the time it takes for the eels to transform from pre-leptocephalus or leptocephalus to glass eels after hatching is longer, and the use of shark eggs as feed is limited. There are many problems in clarifying the optimal breeding environment for mass production of eel seedlings, and in practical terms, artificial intelligence has not been utilized to develop inexpensive effective feed, improve survival rate, and shorten metamorphosis period.

The aquatic life breeding shelf robot according to an embodiment of the invention includes the basic shelf structure, a component for a storage object label, a component for identifying a user and for high-low control of the storage object, a component for transporting the storage object, or storage container, a component for forward/backward movement of the storage object, or said storage container, a component for reflecting the settings of the storage object, or said storage container in all storage objects, or said storage containers in the shelf by setting the storage object, or said storage container at one location in the shelf, a component for shortening the moving distance and moving time to the storage object, or said storage container, a component for stopping rotation of the storage object, or said storage container without being affected by gravity, a component for horizontal rotation of the storage object, or said storage container, and positioning devices for front and rear wheels. The storage space is equipped with containers for rearing aquatic organisms on pallets that are suspended from the suspension points of the rotary shelves, and with ports for adding water and fertilizer. The methods include identification of users (keepers) by a characterization algorithm, identification of storage objects (aquatic organisms) by a storage object characterization algorithm, transportation of said storage objects by a transport vehicle by a said driving algorithm, carrying-in/out by said users by said high-low control algorithm, horizontal rotation by said horizontal rotation algorithm for 360-degree viewing, uniformization of the environment between storage containers in a shelf by said environment uniformization algorithm, reduction of transportation distance by arranging the shelves, optimization of aquatic organism breeding by said position information analysis algorithm, detection of dynamic objects by said position information analysis algorithm, and detection of untidiness by said position information analysis algorithm.

The Aquatic Life Breeding Shelf Robot assumes that one storage container (cargo) is a layer without partitions, and the height/width and depth of the storage container are assumed to be the same as a JIS standard pallet (1.1m long and wide), and the width/height and depth of the storage container are 0.7m/0.7m and 0.7m, respectively, resulting in a shelf height of 1.4m to 4.9m. The ratio of easily accessible storage containers to floor area shows that three containers can be stored in the space of one flat area. In this shelf, the ground heights of the first layer, second layer, and third layer are 0m, 0.7m, and 1.4m, respectively, making the minimum ground heights of all storage containers easy to transport.

**[table 62]**

| (Example) Aquatic life breeding shelf robot. The first layer. | | | | | | | | | | | |
|---|---|---|---|---|---|---|---|---|---|---|---|
| shelf number | R1 rotating plate | | | | C1 storage | | | | floor space (mm²) | C1 | |
| | diameter (m) | depth (m) | radius (m) | angle | number of storage spaces | radius of the storage space (m) | storage container width/ length (m) | storage container depth (m) | | total storage container area (mm²) | floor space to storage container area ratio |
| 1 | 1.4 | 1.1 | 0.68 | 90 | 4 | 0.48 | 0.7 | 0.7 | 1.5 | 1.8 | 123% |
| 2 | 1.9 | 1.1 | 0.95 | 60 | 6 | 0.48 | 0.7 | 0.7 | 2.1 | 2.7 | 130% |
| 3 | 2.5 | 1.1 | 1.25 | 45 | 8 | 0.48 | 0.7 | 0.7 | 2.7 | 3.6 | 133% |
| 4 | 3.1 | 1.1 | 1.54 | 36 | 10 | 0.48 | 0.7 | 0.7 | 3.4 | 4.6 | 134% |
| 5 | 3.7 | 1.1 | 1.84 | 30 | 12 | 0.48 | 0.7 | 0.7 | 4.1 | 5.5 | 135% |
| 6 | 4.9 | 1.1 | 2.45 | 22.5 | 16 | 0.48 | 0.7 | 0.7 | 5.4 | 7.3 | 135% |

R1 diameter = the radius of rotating plate×2, C1 number of storage spaces = 360 degrees÷angle, C1 radius of the storage space = R1 the radius of rotating plate×sin(angle÷2), C1 storage container width/length = C1 radius of the storage space×0.707, floor space = width/length×depth, total storage container area = number of storage containers×storage container width×storage container depth

**[table 63]**

| (Example) Aquatic life breeding shelf robot. The second layer. | | | | | | | | | | |
|---|---|---|---|---|---|---|---|---|---|---|
| Shelf number | R2 rotating plate | | | C2 storage | | | | C1+C2 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.2 | | | | | | | 4 | 1.8 | 123% |
| 2 | 0.5 | | | | | | | 6 | 2.7 | 130% |
| 3 | 0.8 | 0.68 | 90 | 4 | 0.48 | 0.7 | 0.7 | 12 | 5.5 | 199% |
| 4 | 1.1 | 0.95 | 60 | 6 | 0.48 | 0.7 | 0.7 | 16 | 7.3 | 214% |
| 5 | 1.4 | 1.25 | 45 | 8 | 0.48 | 0.7 | 0.7 | 20 | 9.1 | 225% |
| 6 | 2.0 | 1.84 | 30 | 12 | 0.48 | 0.7 | 0.7 | 28 | 12.7 | 237% |

R2 the excess radius = R1 the radius of rotating plate - C1 the radius of the space×1.01, C2 number of storage spaces = 360 degrees-angle, C2 radius of the storage space = R1 the radius of rotating plate×sin(angle÷2), C2 storage container width/length = C2 radius of the storage space×0.707, total storage container area = number of storage spaces×storage container width x storage container depth

**[table 64]**

| (Example) Aquatic life breeding shelf robot. The third layer. | | | | | | | | | | |
|---|---|---|---|---|---|---|---|---|---|---|
| shelf number | R3 rotating plate | | | C3 storage | | | | C1+C2+C3 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.2 | | | | | | | 4 | 1.8 | 124% |
| 2 | 0.5 | | | | | | | 6 | 2.7 | 130% |
| 3 | 0.3 | | | | | | | 12 | 5.5 | 199% |
| 4 | 0.6 | | | | | | | 16 | 7.3 | 214% |
| 5 | 0.9 | 0.68 | 90 | 4 | 0.48 | 0.7 | 0.7 | 24 | 10.9 | 269% |
| 6 | 1.5 | 1.25 | 45 | 8 | 0.48 | 0.7 | 0.7 | 36 | 16.4 | 305% |

R3 diameter = the radius of rotating plate×2, C3 number of storage spaces = 360 degrees÷angle, C3 radius of the storage space = R3 the radius of rotating plate×sin(angle÷2), C3 storage container width/length= C3 radius of the storage space×0.707, total storage container area = number of storage spaces×storage container width×storage container depth

Detection of untidiness identifies factors that affect growth and can clarify factors that can be used to develop inexpensive effective feed, and survival rate, and shorten the time required for metamorphosis from hatching pre-leptocephalus or leptocephalus to glass eels. The high burden of use can be reduced by maintaining a uniform environment within the shelves, registering and updating individual aquatic organisms, and inventory management, as well as setting user-oriented positions and transportation.

### (Example 25; freezing shelf, or refrigerating shelf robot)

The conventional freezing shelf, or refrigerating shelf, which uses multiple shelves, has three problems in addition to the lack of high-low control to control the height of the storage object. The first problem is that it is not possible to detect the untidiness of the storage object, and it is not possible to detect untidiness after the user carries it in/out. This untidiness is caused by the storage object's position memory not being utilized. The second problem is that the load is high, and even if the temperature is adjusted, it is not possible to prevent environmental fluctuations within the shelf due to differences in height and left/right position. The third problem is that artificial intelligence is not used to solve the above problems for all shelves. In addition to the above, shelves that can store storage objects of various sizes according to the size of the storage object are not yet generalized. For example, a typical freezing shelf or refrigerating shelf requires a large door to open and close, as the user relies only on visual information for the storage object, and the entire space is visible in front of the user when opening and closing the contents, and is greatly affected by the outside temperature when opening and closing. In order to open and close only the space the user needs, information is only required for the places the user needs.

The freezing shelf robot, or refrigerating shelf robot, according to an embodiment of the invention, is provided with the basic shelf structure, a component for a storage object label, a component for identifying a user and controlling the high-low of a storage object, a component for refrigerating-freezing the inside of the shelf, a small opening and closing door and a conventional door for opening and closing the whole shelf, a component for forward/backward movement of the storage object, or storage container, and a storage container that is suspended within a storage space from a suspension point of a rotary shelf that is positioned on front and rear wheels. The methods include identifying users using a characterization algorithm, identifying said storage objects using a storage object characterization algorithm, rearranging storage objects, carrying-in/out by said users using a said high-low control algorithm, equalizing the environment between storage containers on a shelf using a said environment equalization algorithm, and detecting untidiness using a said position information analysis algorithm.

The artificial intelligence-controlled freezing shelf robot, or refrigerating shelf robot, is assumed to store items in a storage container on a single shelf without a partition plate, with the height/width and depth of the storage container being 0.4m/0.4m and 0.2m, respectively. It was shown that the ratio of easily accessible storage containers to floor area is such that two to five containers can be stored in one space. The minimum ground clearance shelves for the first layer, second layer, and third layer in the carrying-in/out between the ground are 0m, 0.4m, and 0.8m, respectively. When combining the upper and lower shelves, the combination of two shelves on the lower shelf (shelf number 3-4) and two shelves on the upper shelf (shelf number 1-2) allows for removal, and when there is only one shelf, five shelves (shelf number 1-5) allow for removal.

**[table 65]**

| (Example) Freezing shelf , or refrigerating shelf robot. The first layer. | | | | | | | | | | | |
|---|---|---|---|---|---|---|---|---|---|---|---|
| shelf number | R1 rotating plate | | | | C1 storage | | | | floor space (mm²) | C1 | |
| | diameter (m) | depth (m) | radius (m) | angle | number of storage spaces | radius of the storage space (m) | storage container width/ length (m) | storage container depth (m) | | total storage container area (mm²) | floor space to storage container area ratio |
| 1 | 0.84 | 0.8 | 0.42 | 90 | 4 | 0.30 | 0.4 | 0.2 | 0.3 | 0.7 | 200% |
| 2 | 1.2 | 0.8 | 0.60 | 60 | 6 | 0.30 | 0.4 | 0.2 | 0.5 | 1.0 | 212% |
| 3 | 1.58 | 0.8 | 0.79 | 45 | 8 | 0.30 | 0.4 | 0.2 | 0.6 | 1.4 | 216% |
| 4 | 1.96 | 0.8 | 0.98 | 36 | 10 | 0.30 | 0.4 | 0.2 | 0.8 | 1.7 | 218% |
| 5 | 2.3 | 0.8 | 1.15 | 30 | 12 | 0.30 | 0.4 | 0.2 | 0.9 | 2.0 | 220% |

R1 diameter = the radius of rotating plate×2, C1 number of storage spaces = 360 degrees÷angle, C1 radius of the storage space = R1 the radius of rotating plate×sin(angle÷2), C1 storage container width/length = C1 radius of the storage space×0.707, floor space = width/length×depth, total storage container area = number of storage containers×storage container width×storage container depth

**[table 66]**

| (Example) Freezing shelf , or refrigerating shelf robot. The second layer. | | | | | | | | | | |
|---|---|---|---|---|---|---|---|---|---|---|
| shelf number | R2 rotating plate | | | C2 storage | | | | C1+C2 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.1 | | | | | | | 4 | 0.7 | 200% |
| 2 | 0.3 | | | | | | | 6 | 1.0 | 212% |
| 3 | 0.5 | 0.42 | 90 | 4 | 0.30 | 0.4 | 0.2 | 12 | 2.0 | 323% |
| 4 | 0.7 | 0.60 | 60 | 6 | 0.30 | 0.4 | 0.2 | 16 | 2.7 | 348% |
| 5 | 0.8 | 0.79 | 45 | 8 | 0.30 | 0.4 | 0.2 | 20 | 3.4 | 368% |

R2 the excess radius = R1 the radius of rotating plate - C1 the radius of the space×1.01, C2 number of storage spaces = 360 degrees÷angle, C2 radius of the storage space = R1 the radius of rotating plate×sin(angle÷2), C2 storage container width/length = C2 radius of the storage space×0.707, total storage container area = number of storage spaces×storage container width × storage container depth

**[table 67]**

| (Example) Freezing shelf , or refrigerating shelf robot. The third layer. | | | | | | | | | | |
|---|---|---|---|---|---|---|---|---|---|---|
| shelf number | R3 rotating plate | | | C3 storage | | | | C1 +C2 + C3 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.1 | | | | | | | 4 | 0.7 | 200% |
| 2 | 0.3 | | | | | | | 6 | 1.0 | 212% |
| 3 | 0.2 | | | | | | | 12 | 2.0 | 323% |
| 4 | 0.4 | | | | | | | 16 | 2.7 | 348% |
| 5 | 0.5 | 0.42 | 90 | 4 | 0.30 | 0.4 | 0.2 | 24 | 4.1 | 441% |

R3 the excess radius = R2 the radius of rotating plate - C2 the radius of the space×1.01, R3 width/length= the radius of rotating plate×2, C3 the number of storage spaces=360 degrees ÷angle, C3 radius of the storage space = R1 the radius of rotating plate×sin(angle÷2), C3 storage container width/length = C3 radius of the storage space×0.707, total storage container area = storage container width × storage container depth×1(number of steps)

Detection of untidiness allows users to register and record specific (quantitative and qualitative) information, and users do not need to rely solely on visual information to access storage objects. When opening and closing the contents, the entire space is visible in front of the user, so the opening and closing doors do not need to be wide, and the outside temperature does not have a major impact on the opening and closing of the contents. The high burden of use can be reduced through user-oriented receipt, registration and updating, and inventory management.

### (Example 26; Electronic Documents Shelf Robot)

In addition to the lack of high-low control to control the height of the storage object, conventional electronic document shelves using multi-tiered shelves have three problems. The first problem is that although it is known that the electronic documents user will not necessarily return the storage object to the same position in which it was taken out, untidiness is not detected when the user returns the storage object (the accompanying material that guides the electronic documents, including the original material if there is an original material corresponding to the electronic documents or the specimen that accompanies the document). The second problem is the burden it places on users. As the scale of the system increases, it takes time and effort for users to find storage objects and carry them in and out. Inventory management or relocation requires a lot of effort and burden. The third problem is that artificial intelligence has not been used to solve the above problem for all shelves. In addition, shelves that can store various sizes of storage objects according to the size of the storage object have not been generalized. The electronic documents shelf may only create and store electronic documents as an operational problem in the process of review and adoption for government loan and subsidy systems, or it may be used for the application, approval, storage, and auditing of documents for GXP. As a structural problem, it may or may not include raw data, and there is no shelf that operates these with artificial intelligence.

The electronic document shelf robot according to an embodiment of the invention is provided with the basic shelf structure, a storage container suspended within a storage space from suspension points of a rotary shelf positioned on the front and rear wheels, a component for identifying a user and for high-low control of the storage object, a component for transporting the storage object, or storage container, a component for forward/backward movement of the storage object, or storage container, a component for shortening the moving distance and moving time of the storage object, or storage container, and a component for horizontal rotation of the storage object, or storage container;
the methods include identifying the user (electronic dose user) using a characterization algorithm, identifying the storage object using a storage object characterization algorithm, transporting the storage object by a vehicle using a driving algorithm, taking out and returning the object by the user using a high-low control algorithm, horizontal rotation by a horizontal rotation algorithm for a 360-degree viewing angle, detecting dynamic objects using a position information analysis algorithm, and detecting untidiness using a position information analysis algorithm.

The electronic documents shelf robot shows that the surface area of all storage containers is easy to access, and the reader position of the storage object can be set according to the user's preference. If one bookcase has two shelves, which is enough to store A4-sized books, and the height/width/depth of the storage containers are 70cm/70cm and 35cm, respectively, the ratio of easily accessible storage containers to floor area shows that two to five items can be stored in the space of one flat area. The minimum ground clearance for the first layer only shelves (shelf numbers 1, 2), the second layer shelves (shelf number 3, 4), and the third layer shelves is 0m, 70cm, and 1.4m respectively. Children and wheelchair users are limited to the third-layer shelves. The shelf height for artificial intelligence-controlled electronic documents for all users is approximately 1m to 5.08m, but children and wheelchair users can use the shelf up to the third layer.

**[table 68]**

| (Example) Electronic documents shelf robot. The first layer. | | | | | | | | | | | |
|---|---|---|---|---|---|---|---|---|---|---|---|
| shelf number | R1 rotating plate | | | | C1 storage | | | | floor space (mm²) | C1 | |
| | diameter (m) | depth (m) | radius (m) | angle | number of storage spaces | radius of the storage space (m) | storage container width/ length (m) | storage container depth (m) | | total storage container area (mm²) | floor space to storage container area ratio |
| 1 | 1.40 | 0.7 | 0.70 | 90 | 4 | 0.49 | 0.7 | 0.35 | 1.0 | 2.0 | 200% |
| 2 | 1.98 | 0.7 | 0.99 | 60 | 6 | 0.50 | 0.7 | 0.35 | 1.4 | 2.9 | 212% |
| 3 | 2.60 | 0.7 | 1.30 | 45 | 8 | 0.50 | 0.7 | 0.35 | 1.8 | 3.9 | 216% |
| 4 | 3.20 | 0.7 | 1.60 | 36 | 10 | 0.49 | 0.7 | 0.35 | 2.2 | 4.9 | 218% |
| 5 | 3.84 | 0.7 | 1.92 | 30 | 12 | 0.50 | 0.7 | 0.35 | 2.7 | 5.9 | 220% |
| 6 | 5.08 | 0.7 | 2.54 | 22.5 | 16 | 0.50 | 0.7 | 0.35 | 3.6 | 7.8 | 221% |

R1 diameter= the radius of rotating platex2, C1 number of storage spaces = 360 degrees÷angle, C1 radius of the storage space = R1 the radius of rotating plate×sin(angle÷2), C1 storage container width/length = C1 radius of the storage space×0.707, floor space = width/length×depth, total storage container area = storage container width×storage container depth×2(munber of steps)

**[table 69]**

| (Example) Electronic documents shelf robot. The second layer. | | | | | | | | | | |
|---|---|---|---|---|---|---|---|---|---|---|
| shelf number | R2 rotating plate | | | C2 storage | | | | C1+C2 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.2 | | | | | | | 4 | 2.0 | 200% |
| 2 | 0.5 | | | | | | | 6 | 2.9 | 212% |
| 3 | 0.8 | 0.71 | 90 | 4 | 0.50 | 0.70 | 0.35 | 12 | 5.9 | 325% |
| 4 | 1.1 | 0.99 | 60 | 6 | 0.50 | 0.70 | 0.35 | 16 | 7.8 | 3 50% |
| 5 | 1.4 | 1.30 | 45 | 8 | 0.50 | 0.70 | 0.35 | 20 | 9.8 | 366% |
| 6 | 2.0 | 1.92 | 30 | 12 | 0.50 | 0.70 | 0.35 | 28 | 13.7 | 387% |

R2 the excess radius = R1 the radius of rotating plate - C1 the radius of the space×1.01, C2 number of storage spaces = 360 degrees÷angle, C2 radius of the storage space = R1 the radius of rotating plate×SIN (angle÷2), C2 storage container width/length = C2 radius of the storage space×0.707, total storage container area = storage container width × storage container depth×2(number of steps)

**[table 70]**

| (Example) Electronic documents shelf robot. The third layer. | | | | | | | | | | |
|---|---|---|---|---|---|---|---|---|---|---|
| shelf number | R3 rotating plate | | | C3 storage | | | | C1+C2+C3 | | |
| | the excess radius (m) | radius (m) | angle | number of storage spaces | radius of the storage space (m) | storage container width/ length (m) | storage container depth (m) | number of storage spaces | total storage container area (mm²) | floor space to storage container area ratio |
| 1 | 0.2 | | | | | | | 4 | 2.0 | 200% |
| 2 | 0.5 | | | | | | | 6 | 2.9 | 212% |
| 3 | 0.3 | | | | | | | 13 | 5.9 | 325% |
| 4 | 0.6 | | | | | | | 17 | 7.8 | 350% |
| 5 | 0.9 | 0.7 | 90 | 4 | 0.50 | 0.70 | 0.35 | 25 | 11.8 | 440% |
| 6 | 1.5 | 1.3 | 45 | 8 | 0.50 | 0.70 | 0.35 | 37 | 17.7 | 497% |

R3 the excess radius = R2 the radius of rotating plate - C2 the radius of the space×1.01, C3 number of storage spaces = 360 degrees÷angle, C3 radius of the storage space = R1 the radius of rotating plate×sin(angle÷2), C3 storage container width/length = C2 radius of the storage space×0.707, total storage container area = storage container width × storage container depth ×2(number of steps)

Detection of untidiness results in registration and history of specific (quantitative and qualitative information), and image analysis (position information) can clarify the placement of storage objects. The burden of use is due to the history during daily management, confirmation of inventory management status, and transportation during inventory. By utilizing artificial intelligence, this burden can be reduced by registration and updates, user-oriented receipt, return by users, daily management, and transportation by carriers.

### [Reference signs list]

1 shelf robot
10 rotation axis
20 rotary shelf
21 storage space
22 storage space
23 shelf rotation drive unit
24 front and rear moving plate
30 front plate
31 carry-in/out port
33 front plate rotation drive unit
34 label reading device
35 image photographing device(camera)
36 image photographing device(camera)
37 short distance wireless communication device (NFC reader)
38 sound listening device
40 rear plate
50 computer system
51 arithmetic processing device
52 memory device (database)
61 user judging means
62 storage object identifying means
63 target storage space identifying means
64 carry-in/out position determining means
71 storage space moving means
72 carry-in/out port moving means
211, 221 storage container
351 storage container image data
651 stop control algorithm
661 high-low control algorithm
662 high-low control
671 weight measurement algorithm
672 weight measurement
673 weight scale
681 liquid measure adjustment algorithm
682 slope control
683 slope device
691 horizontal rotation algorithm
692 horizontal rotation control
693 horizontal rotation board
701 environment equalization algorithm
702 environmental equalization control

## Claims

1. A shelf robot comprising:
a rotation axis;
a rotary shelf that can rotate around a rotation axis;
a shelf rotation drive unit that causes said rotary shelf to rotate around said rotation axis; and
a control unit;
wherein a plurality of storage space is set along a virtual circle centered around said rotation axis, and
said control unit has a target storage space identifying means for identifying a storage space (referred to as a target storage space) among the plurality of storage spaces in which an item that a user wishes to remove is currently stored, a loading/unloading position determining means for determining a position for removing the item in accordance with an attribute of the user, and a storage space moving means for moving the target storage space to the loading position by controlling the shelf rotation drive unit to rotate the rotating shelf around the rotation axis.

2. The shelf robot according to claim 1, said plurality of storage spaces are arranged in a virtual circular pattern along a single virtual circle to form a single layer, and said layers are multiplexed concentrically around said rotation axis.

3. The shelf robot according to claim 1 or claim 2, further includes a front plate having a carry-in/out port formed on said carrying-in/out side of the said rotary shelf, said carry-in/out port corresponding to the said carry-out position.

4. The shelf robot according to claim 3, wherein said control unit further has a storage object identifying means for identifying a storage object stored in said storage space, and
said target storage space identifying means selects said target storage object that said user wishes to take out from among said storage objects identified by the said storage object identifying means, and identifies said storage space in which said selected target storage object is stored as the said target storage space.

5. The shelf robot according to claim 3 or claim 4, wherein said control unit further has said user judging means for judging at least one of said physical characteristics, posture, or personal identification information of said user as an attribute of said user, and the carry-in/out position determining means determines a carry-out position based on the said attribute judged by the user judging means.

6. The shelf robot according to claim 4, wherein said storage object identifying means identifies said storage object stored in said storage space using code reading technology.

7. The shelf robot according to claim 5, said user judging means uses image recognition technology to judge said attributes of said user.

8. The shelf robot described in claim 1 or claim 2, further includes an image photographing device that photographs a user who handles a storage object, and a user judging means that judges said user from an image photographed by said image photographing device, and
said control unit generates a position information algorithm based on the result of the judgment by said user judging means, thereby executing the operation record required by GXP, which is a public standard aimed at ensuring the reliability of operations related to information such as who, when, and what was done.

9. A shelf robot comprising:
a rotation axis;
a rotary shelf rotatable around said rotation axis;
a shelf rotation drive unit for rotating said rotary shelf around said rotation axis; and
a control unit;
wherein a plurality of storage space is set along a virtual circle centered around said rotation axis in a rotary shelf,
a storage container is installed in each of said storage spaces,
a front-rear moving plate and a bottom plate (pallet) are provided at the bottom of said storage container, and
said control unit can cooperate with a transport vehicle that transports a storage object stored in said storage container by transmitting the information calculated by an image, including said front-rear moving plate and/or said bottom plate (pallet), captured by an image photographing device to said transport vehicle.

10. The shelf robot according to any one of claim 1 to 9, wherein said control unit works using artificial intelligence technology.
